# EUROPÄISCHE PATENTSCHRIFT

(11) **EP 0 929 610 B1**
(45) Veröffentlichungstag und Bekanntmachung des Hinweises auf die Patenterteilung: **28.08.2002**
(21) Anmeldenummer: 97942930.5
(22) Anmeldetag: 15.09.1997
(51) Int. Cl.: C09B 62/503, C09B 62/04

(54) **REAKTIVFARBSTOFFE MIT EINEM HETEROCYCLISCHEN ANKER**
REACTIVE DYES WITH A HETEROCYCLIC ANCHOR
COLORANTS REACTIFS AYANT UN ANCRAGE HETEROCYCLIQUE

(30) Priorität: 30.09.1996 DE 19640189
(43) Veröffentlichungstag der Anmeldung: 21.07.1999
(73) Patentinhaber: DyStar Textilfarben GmbH & Co. Deutschland KG, 65926 Frankfurt am Main (DE)
(72) Erfinder: ZAMPONI, Andrea, Manchester M20 2GY (GB); PATSCH, Manfred, D-67157 Wachenheim (DE); HAGEN, Helmut, D-67227 Frankenthal (DE); WALTHER, Bernd-Peter, D-67433 Neustadt (DE)
(86) Internationale Anmeldenummer: EP9705041
(87) Internationale Veröffentlichungsnummer: WO98014522

(56) Entgegenhaltungen:
- EP-A- 0 037 465
- WO-A-96/03463
- WO-A-97/05124
- WO-A-97/27248

## Beschreibung

Die vorliegende Erfindung betrifft neue Reaktivfarbstoffe der Formel I 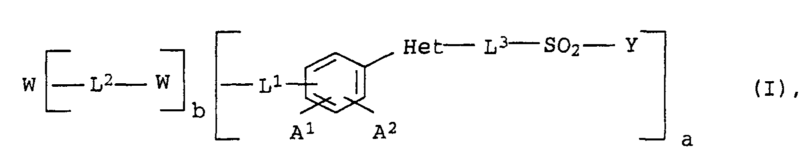 in der
- a: 1 oder 2,
- b: 0 oder 1,
- Y: Vinyl oder einen Rest der Formel C₂H₄Q, worin Q für eine unter alkalischen Reaktionsbedingungen abspaltbare Gruppe steht,
- Het: den Rest eines 5- oder 6-gliedrigen aromatischen heterocyclischen Ringes, der 1 bis 3 Heteroatome, ausgewählt aus der Gruppe, bestehend aus Sauerstoff, Schwefel und Stickstoff, aufweist,
- W
im Fall 1) den Rest einer Kupplungskomponente, eines Monoazofarbstoffs oder zusätzlich, wenn b = 0, eines Disazofarbstoffs, die weitere faserreaktive Gruppen tragen können, oder
im Fall 2) den Rest eines Chromophors, der gegebenenfalls weitere faserreaktive Gruppen aufweist und der sich von einem gegebenenfalls metallisierten Mono- oder Disazofarbstoff, einem Triphendioxazin, einem Anthrachinon, einem metallisierten Formazan oder einem metallisierten Phthalocyanin ableitet,
- L¹: im Fall 1) eine Azobrücke oder
im Fall 2) ein Brückenglied der Formel O₂S-NZ¹, OC-NZ¹, Z¹N-SO₂, Z¹N-CO, Z¹N-CO-NZ², NZ¹ oder 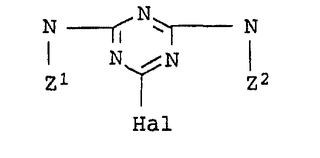 worin Z¹ und Z² unabhängig voneinander jeweils für Wasserstoff, C₁-C₆-Alkyl oder Phenyl und Hal für Fluor, Chlor oder Brom oder NZ¹ oder NZ² auch für Piperazin-1,4-diyl stehen,
- L²: einen Rest der Formel 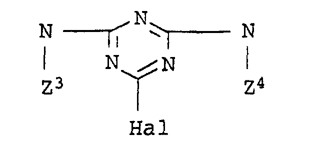 oder 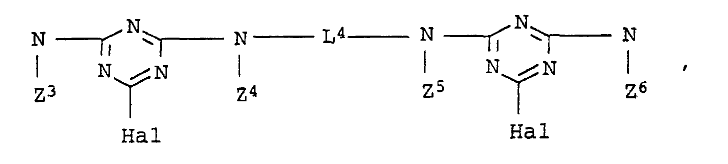 worin Z³, Z⁴, Z⁵ und Z⁶ unabhängig voneinander jeweils für Wasserstoff, C₁-C₆-Alkyl oder Phenyl und L⁴ für C₂-C₈-Alkylen oder gegebenenfalls durch C₁-C₄-Alkyl, C₁-C₄-Alkoxy oder Hydroxysulfonyl substituiertes Phenylen stehen und Hal jeweils die obengenannte Bedeutung besitzt,
- L³: eine direkt Bindung oder C₁-C₆-Alkylen, das durch 1 oder 2 Sauerstoff- oder Schwefelatome in Etherfunktion oder 1 oder 2 nicht benachbarte Imino-, C₁-C₄-Alkylimino- oder C₁-C₄-Alkanoyliminogruppen unterbrochen sein kann, und
- A¹ und A²: unabhängig voneinander jeweils Wasserstoff, C₁-C₄-Alkyl, C₁-C₄-Alkoxy, Halogen, Nitro, Amino, Hydroxysulfonyl oder einen Rest der Formel L³-SO₂-Y, worin L³ und Y jeweils die obengenannte Bedeutung besitzen, bedeuten
sowie ein Verfahren zum Färben oder Bedrucken von Hydroxygruppen oder Stickstoffatome aufweisenden Substraten mittels der neuen Farbstoffe.

Aufgabe der vorliegenden Erfindung war es, neue Reaktivfarbstoffe mit vorteilhaften anwendungstechnischen Eigenschaften bereitzustellen. Die neuen Farbstoffe sollten sich insbesondere für das Auszieh- und Kaltverweilverfahren eignen und sollten sich vor allem durch hohe Ausgiebigkeit, hohe Naßechtheiten und brillante Färbungen auszeichnen. Außerdem sollten die nicht auf der Faser fixierten Anteile leicht auswaschbar sein.

Demgemäß wurden die eingangs näher bezeichneten Reaktivfarbstoffe der Formel I gefunden sowie ihre Verwendung zum Färben oder Bedrucken von Hydroxygruppen oder Stickstoffatome aufweisenden organischen Substraten.

In der WO-A-96/03463 werden Nitrofarbstoffe mit den charakteristischen anmeldungsgemäßen Heterozyklen beschrieben. Sie dienen zum Färben oder Bedrucken textiler Materialien. Die EP-A-037 465 beschreibt Monoazoverbindungen mit anmeldungsgemäßen heterozyklischen Ringen.

Die neuen Reaktivfarbstoffe der Formel I sind jeweils in Form der freien Säure angegeben. Selbstverständlich werden auch deren Salze von den Patentansprüchen umfaßt.

Hierbei geeignete Kationen leiten sich von Metall- oder Ammoniumionen ab. Metallionen sind insbesondere die Lithium-, Natriumoder Kaliumionen. Unter Ammoniumionen im erfindungsgemäßen Sinne sind unsubstituierte oder substituierte Ammoniumkationen zu verstehen. Substituierte Ammoniumkationen sind z.B. Monoalkyl-Dialkyl-, Trialkyl-, Tetraalkyl- oder Benzyltrialkylammoniumkationen oder solche Kationen, die sich von stickstoffhaltigen fünf- oder sechsgliedrigen gesättigten Heterocyclen ableiten, wie Pyrrolidinium-, Piperidinium-, Morpholinium-, Piperazinium- oder N-Alkylpiperaziniumkationen oder deren N-monoalkyl- oder N,N-dialkylsubstituierte Produkte. Unter Alkyl ist dabei im allgemeinen geradkettiges oder verzweigtes C₁-C₂₀-Alkyl zu verstehen, das durch 1 oder 2 Hydroxygruppen substituiert und/oder durch 1 bis 4 Sauerstoffatomen in Etherfunktion unterbrochen sein kann.

Generell können alle, sowohl die obengenannten wie auch in den nachfolgenden Formeln auftretenden Alkyl- und Alkylengruppen sowohl geradkettig als auch verzweigt sein.

Substituierte Alkylreste weisen sofern nicht anders angegeben vorzugsweise 1, 2 oder 3 Substituenten, insbesondere 1 oder 2 Substituenten in beliebiger Position auf.

Reste Z¹, Z², Z³, Z⁴, Z⁵ und Z⁶ sind z.B. Methyl, Ethyl, Propyl, Isopropyl, Butyl, Isobutyl, sec-Butyl, tert-Butyl, Pentyl, Isopentyl, Neopentyl, tert-Pentyl, Hexyl oder 2-Methylpentyl.

Reste A¹ und A² sind z.B. Methyl, Ethyl, Propyl, Isopropyl, Butyl, Isobutyl, sec-Butyl, tert-Butyl, Methoxy, Ethoxy, Propoxy, Isopropoxy, Butoxy, Isobutoxy, sec-Butoxy, tert-Butoxy, Fluor, Chlor oder Brom.

Reste L³ und L⁴ sind z.B. (CH₂)₂, (CH₂)₃, (CH₂)₄, CH(CH₃)CH₂, CH(CH₃)CH(CH₃), (CH₂)₅, (CH₂)₆.

Reste L³ sind weiterhin Methylen sowie (CH₂)₂O(CH₂)₂, (CH₂)₃O(CH₂)₂, (CH₂)₂O(CH₂)₂O(CH₂)₂, (CH₂)₂S(CH₂)₂, (CH₂)₃S(CH₂)₂, (CH₂)₂S(CH₂)₂S(CH₂)₂, (CH₂)₂NH(CH₂)₂, (CH₂)₃NH(CH₂)₂, (CH₂)₂NH(CH₂)₂NH(CH₂)₂, 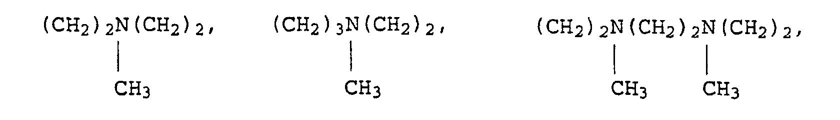 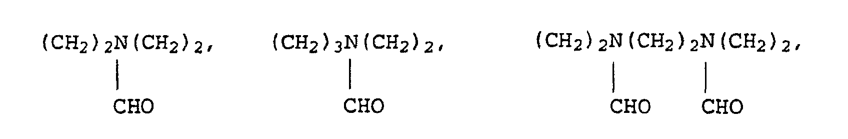 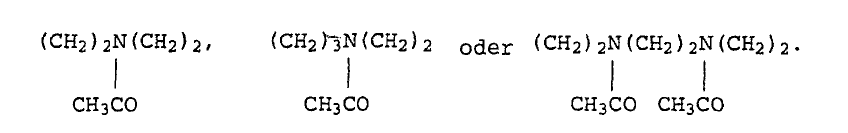 Reste L⁴ sind weiterhin z.B. (CH₂)₇, (CH₂)₈, 1,2-, 1,3- oder 1,4-Phenylen, das jeweils ein- oder zweifach durch Methyl, Methoxy oder Hydroxysulfonyl substituiert sein kann.

Het bedeutet den Rest eines 5- oder 6-gliedrigen aromatischen heterocyclischen Ringes, der 1 bis 3 Heteroatome, ausgewählt aus der Gruppe, bestehend aus Sauerstoff, Schwefel und Stickstoff, aufweist.

Geeignete heterocyclische Grundkörper, die Substituenten tragen können, von denen sich die Reste Het ableiten, sind z.B. Pyrrol, Furan, Thiophen, Pyrazol, Imidazol, Oxazol, Thiazol, Isothiazol, 1,2,4-Triazol, 2,2,4-Oxadiazol, 1,3,4-Oxadiazol, 1,2,4-Thiadiazol, 1,3,4-Thiadiazol, Pyridin, Pyridazin, Pyrimidin oder Pyrazin. Geeignete Substituenten sind beispielsweise C₁-C₄-Alkyl, Phenyl, Halogen, Cyano, Carboxyl oder C₁-C₄-Alkoxycarbonyl.

Der Rest Q steht für eine unter alkalischen Reaktionsbedingungen abspaltbare Gruppe. Solche Gruppen sind z.B. Chlor, Brom, C₁-C₄-Alkylsulfonyl, Phenylsulfonyl, OSO₃H, SSO₃H, OP(O)(OH)₂, C₁-C₄-Alkylsulfonyloxy, Phenylsulfonyloxy, C₁-C₄-Alkanoyloxy, C₁-C₄-Dialkylamino oder ein Rest der Formel 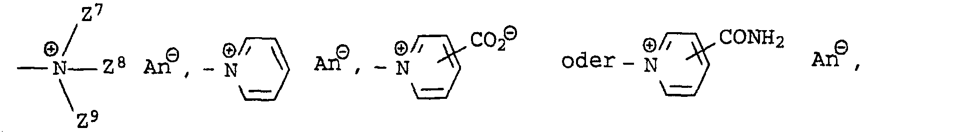 wobei Z⁷, Z⁸ und Z⁹ gleich oder verschieden sind und unabhängig voneinander jeweils die Bedeutung von C₁-C₄-Alkyl oder Benzyl und An^{⊖} jeweils die Bedeutung eines Äquivalents eines Anions besitzen. Als Anionen können dabei z.B. Fluorid, Chlorid, Bromid, Iodid, Mono-, Di- oder Trichloracetat, Methansulfonat, Benzolsulfonat oder 2- oder 4-Methylbenzolsulfonat in Betracht kommen.

Wenn a 2 bedeutet, können die Reste 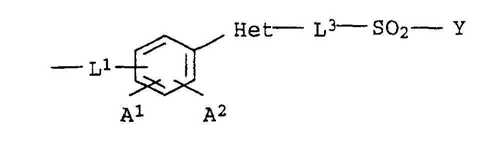 gleich oder verschieden sein.

Wenn b 1 bedeutet, können die Reste W ebenfalls gleich oder verschieden sein.

Der faserreaktive Ankerrest der Formel II 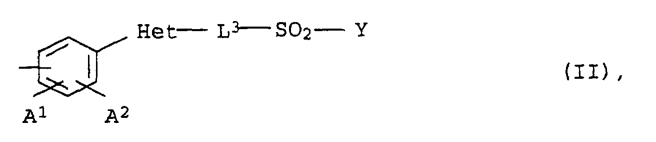 in der A¹, A², Het, L³ und Y jeweils die obengenannte Bedeutung besitzen, wird im folgenden als "E" bezeichnet.

Bevorzugt sind Reaktivfarbstoffe der Formel I, in der L³ C₁-C₄-Alkylen, das durch ein Sauerstoffatom in Etherfunktion unterbrochen sein kann, bedeutet.

Weiterhin bevorzugt sind Reaktivfarbstoffe der Formel I, in der A¹ und A² unabhängig voneinander Wasserstoff, Nitro, Amino, Hydroxysulfonyl oder ein Rest der Formel SO₂C₂H₄OSO₃H bedeuten. Insbesondere werden als Substituenten A¹ und/oder A² Wasserstoff und Hydroxysulfonyl bevorzugt.

Weiterhin bevorzugt sind Reaktivfarbstoffe der Formel I, in der Het den Rest eines 5-gliedrigen Heterocyclus bedeutet. Hervorzuheben sind dabei solche Reste, die 3 Heteroatome aufweisen, insbesondere solche, die sich von 1,3,4-Oxadiazol, 1,2,4-Thiadiazol oder 1,3,4-Thiadiazol ableiten, vor allem 1,2,4-Oxadiazol-3,5-diyl.

Weiterhin bevorzugt sind Reaktivfarbstoffe der Formel I, in der Y für einen Rest der Formel -C₂H₄SSO₃H, -C₂H₄Cl, -C₂H₄OCOCH₃ sowie besonders -C₂H₄OSO₃H oder Vinyl steht.

Von besonderem technischen Interesse sind die faserreaktiven Ankerreste der Formel IIa oder IIb 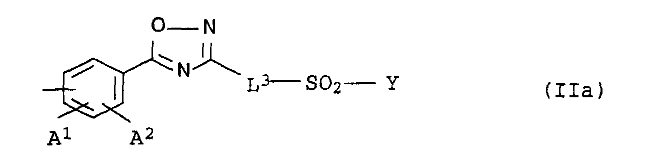 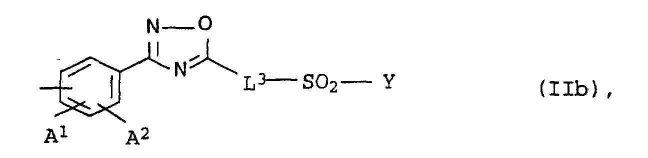 worin
- A¹ und A²: unabhängig voneinander Wasserstoff, Nitro, Amino, Hydroxysulfonyl oder einen Rest der Formel SO₂C₂H₄OSO₃H und
- L³: C₁-C₄-Alkylen bedeuten und
- Y: die obengenannte Bedeutung besitzt.

Weiterhin werden Reaktivfarbstoffe der Formel I bevorzugt, in der L¹ in Fall 2) ein Brückenglied der Formel 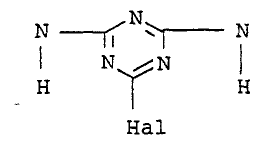 bedeutet.

Weiterhin werden Reaktivfarbstoffe der Formel I bevorzugt, in der L¹ in Fall 1) in ortho-Position zum Heterocyclus steht.

Daneben werden Farbstoffe der Formel I bevorzugt, in denen die Substituenten aus einer Kombination der oben aufgeführten bevorzugten Substituenten ausgewählt sind.

Die Reste SO₂Y sind aliphatische Ankerreste, die man von heterocyclischen Ankerresten unterscheidet. Dabei versteht man allgemein unter Ankerresten solche Reste, die mit den Hydroxygruppen oder Stickstoffatome enthaltenden Gruppen der zu behandelnden Substrate substitutiv oder additiv reagieren.

Daß der Ankerrest mit den betreffenden Gruppen in den Substraten, z.B. mit den Hydroxygruppen der Cellulose, substitutiv reagiert, bedeutet, daß die Austrittsgruppen oder -atome (z.B. Fluor oder Chlor) im Ankerrest durch die Hydroxygruppen der Cellulose gemäß folgendem Schema substituiert werden:

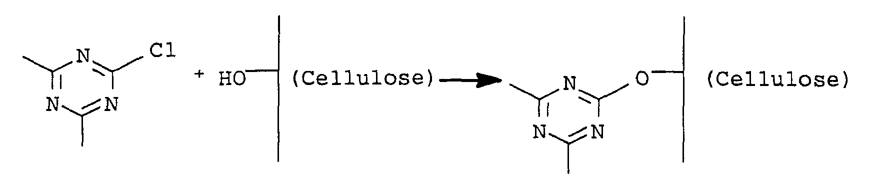

Daß der Ankerrest mit den betreffenden Gruppen in den Substraten, z.B. mit Hydroxygruppen der Cellulose, additiv reagiert, bedeutet, daß die Hydroxygruppen der Cellulose gemäß folgendem Schema an den Ankerrest addiert werden:

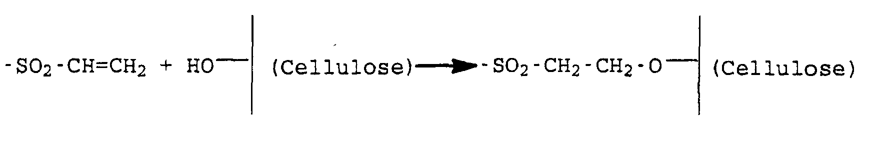

Heterocyclische Ankerreste sind z.B. halogensubstituierte Reste, die sich vom 1,3,5-Triazin, Chinoxalin, Phthalazin, Pyrimidin, Pyridazin oder dem 2-Alkylsulfonylbenzthiazol als heterocyclischen Grundkörper ableiten.

Besonders seien folgende heterocyclische Reste genannt: 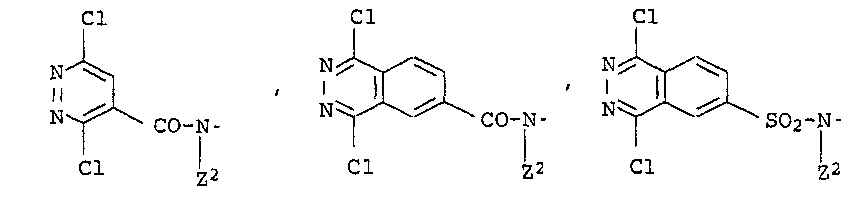 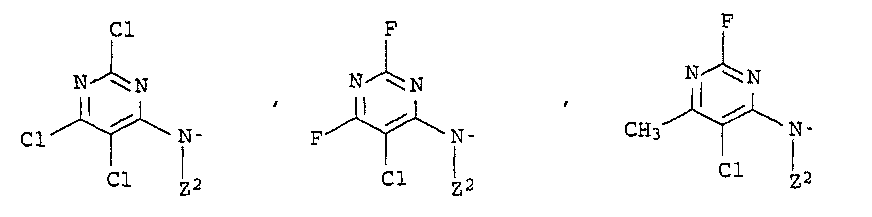 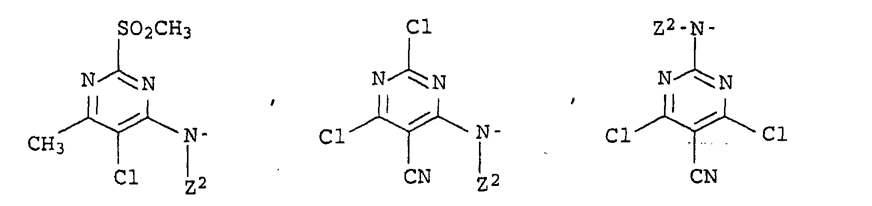 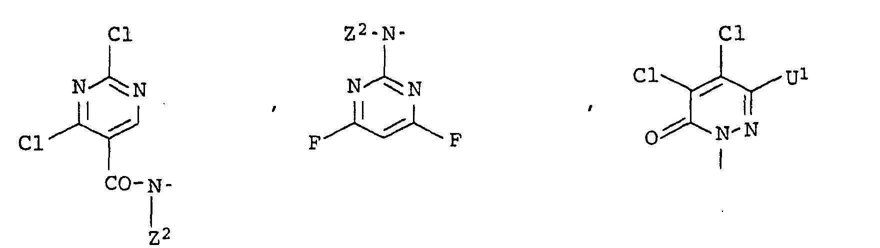 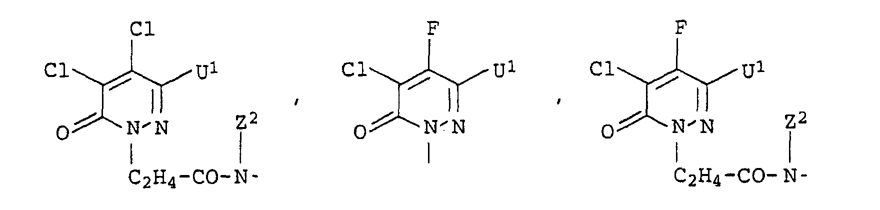 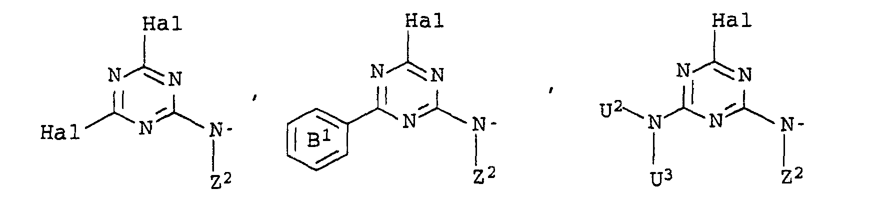 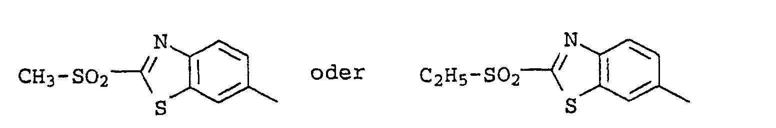 worin Z² und Hal jeweils die obengenannte Bedeutung besitzen und
- U¹: Wasserstoff oder Nitro und
- U²: und U³ unabhängig voneinander jeweils Wasserstoff, C₁-C₆-Alkyl, das gegebenenfalls durch Hydroxy, Halogen, Cyano, Hydroxysulfonyl oder einen Rest der Formel -SO₂-Y, worin Y die obengenannte Bedeutung besitzt, substituiert ist und jeweils durch 1 oder 2 Sauerstoffatome in Etherfunktion, Imino- oder C₁-C₄-Alkyliminogruppen unterbrochen sein kann, oder U² und U³ zusammen mit dem sie verbindenden Stickstoffatom, Pyrrolidinyl, Piperidinyl, Morpholinyl, Piperazinyl oder N-(C₁-C₄-Alkyl)piperazinyl
oder U² auch einen Rest der Formel 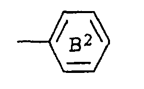 bedeuten, wobei die Ringe B¹ und B² jeweils ein- oder zweifach durch Hydroxysulfonyl substituiert und/oder benzoanelliert sein können und der Ring B² davon unabhängig ein- oder zweifach durch Chlor, Nitro, C₁-C₄-Alkyl, C₁-C₄-Alkoxy, Cyano, Carboxyl, Acetylamino, Hydroxysulfonylmethyl oder einen Rest der Formel CH₂-SO₂-Y, SO₂-Y, NH-CO-Y oder NU²-CO-NU²-L⁵-SO₂-Y, worin Y und U² jeweils die obengenannte Bedeutung besitzen und L⁵ für C₂-C₆-Alkylen, das gegebenenfalls durch Hydroxy, Chlor, Cyano, Carboxyl, C₁-C₄-Alkoxycarbonyl, C₁-C₄-Alkanoyloxy oder Sulfato substituiert ist und durch jeweils 1 oder 2 Sauerstoffatome in Etherfunktion oder Imino- oder C₁-C₄-Alkyliminogruppen unterbrochen sein kann, steht, substituiert sein kann.

Ankerreste aus der aliphatischen Reihe sind beispielsweise Acryloyl-, Mono-, Di- oder Trichloracryloyl, Mono-, Di- oder Tribromacryloyl, -CO-CCl=CH-COOH, -CO-CH=CCl-COOH, 2-Chlorpropionyl, 1,2-Dichlorpropionyl, 1,2-Dibrompropionyl, 3-Phenylsulfonylpropionyl, 3-Methylsulfonylpropionyl, 2-Sulfatoethylaminosulfonyl, 2-Chlor-2,3,3-trifluorcyclobutylcarbonyl, 2,2,3,3-Tetrafluorcyclobutylcarbonyl, 2,2,3,3-Tetrafluorcyclobutylsulfonyl, 2-(2,2,3,3-Tetrafluorcyclobutyl)acryloyl, 1- oder 2-Alkyl- oder 1- oder 2-Arylsulfonylacryloyl, wie 1- oder 2-Methylsulfonylacryloyl, oder ein Rest der Formel SO₂-Y, CONH-L⁶-SO₂-Y oder NHCONH-L⁶-SO₂-Y, worin Y die obengenannte Bedeutung besitzt und L⁶ für C₁-C₄-Alkylen oder Phenylen steht.

W in Formel I stellt im Fall 1) z.B. den Rest einer Kupplungskomponente, eines Monoazofarbstoffs oder zusätzlich, wenn b=0, eines Disazofarbstoffs dar, der gegebenenfalls zusätzliche reaktive Gruppen aufweist. In diesem Fall ist der Ankerrest E über eine Azobrücke (-N=N-) an den Rest W geknüpft. Handelt es sich bei W um einen Monoazofarbstoff, so ist dessen Kupplungskomponente mit dem Ankerrest E über eine Azobrücke verknüpft. Entsprechend wird, wenn W ein Disazofarbstoff ist, auf seine Diazokomponente gekuppelt.

Farbstoffe dieser Klasse gehorchen z.B. der Formel IIIa, IIIb, IIIc oder IIId

(E-N=N-)ₐK (IIIa)

E-N=N-K-N=N-D (IIIb)

E-N=N-(D-N=N-K)-N=N-D (IIIc)

(E-N=N-)₂(K-N=N-D) (IIId)

worin K den Rest einer Kupplungskomponente, D den Rest einer Diazokomponente und a 1 oder 2 bedeuten und E die obengenannte Bedeutung besitzt. Wenn in den Formeln IIIa und IIId der Rest E doppelt auftritt (a=2), können die Reste E entweder gleich oder verschieden voneinander sein. Ebenso können in Formel IIIc die Reste D gleich oder verschieden sein.

Wertvolle Farbstoffe dieser Klasse sind z.B. wasserlösliche Azofarbstoffe, insbesondere Monoazofarbstoffe der Formel IIIa (a=1), Disazofarbstoffe der Formel IIIa (a=2) oder IIIb oder Trisazofarbstoffe der Formeln IIIc oder IIId, die Hydroxysulfonyl- und/oder Carboxylgruppen aufweisen.

Wichtige Kupplungskomponenten HK leiten sich z.B. von Verbindungen aus der Benzol-, Naphthalin-, Pyrazol-, Pyridin-, Pyrimidin-, Indol- oder N-Arylacetoacetamidreihe ab.

Wichtige Diazokomponenten D-NH₂ leiten sich z.B. von Verbindungen aus der Anilin- oder Aminonaphthalinreihe ab. Dabei ist es möglich, sie zugleich als Kupplungskomponente zu verwenden. Insofern sind die Begriffe Diazo- und Kupplungskomponente nicht zwingend für das Herstellverfahren, sondern spiegeln lediglich ein mögliches Verfahren wider.

W in Formel I in Fall 2) stellt weiterhin z.B. den gegebenenfalls metallisierten Rest eines Azofarbstoffs dar. Geeignete Azofarbstoffe, von denen sich solche Reste ableiten, sind an sich bekannt und in großer Zahl beschrieben, z.B. in K. Venkataraman "The Chemistry of Synthetic Dyes", Vol. VI, Academic Press, New York, London, 1972. Die Azofarbstoffe gehorchen der Formel V

D―N=N―K(―N=N―D)ₗ (V),

in der D den Rest einer Diazokomponente, K den Rest einer Kupplungskomponente und l 0 oder 1 bedeuten, worin, wenn l 1 ist, die Reste D gleich oder verschieden voneinander sind.

Wertvolle Farbstoffe, von denen sich der Rest W ableitet, sind z.B. wasserlösliche Azofarbstoffe, insbesondere Monoazofarbstoffe der Formel V (l = 0), die Hydroxysulfonyl- und/oder Carboxylgruppen aufweisen können.

Bevorzugt leitet sich der Rest W von nichtmetallisierten Azofarbstoffen ab, insbesondere von solchen, die Sulfonsäure- und/oder Carboxylgruppen enthalten, wobei jene, die 1 bis 6 Sulfonsäuregruppen aufweisen, besonders hervorzuheben sind.

Wichtige Azofarbstoffe, von denen sich der Rest W sowohl in Fall 1) als auch Fall 2) ableitet, sind beispielsweise solche der Phenyl-azo-naphthalin-, Phenyl-azo-1-phenylpyrazol-5-on-, Phenylazo-benzol-, Naphthyl-azo-benzol-, Phenyl-azo-aminonaphthalin-, Naphthyl-azo-naphthalin-, Naphthyl-azo-1-phenylpyrazol-5-on-, Phenyl-azo-pyridon-, Phenyl-azo-aminopyridin-, Naphthyl-azopyridon-, Naphthyl-azo-aminopyridin- oder Stilbyl-azo-benzolreihe.

Reste D¹ von Diazokomponenten der Anilin- oder Aminonaphthalinreihe, die keine faserreaktiven Gruppen tragen, leiten sich beispielsweise von Aminen der Formeln VIa-f 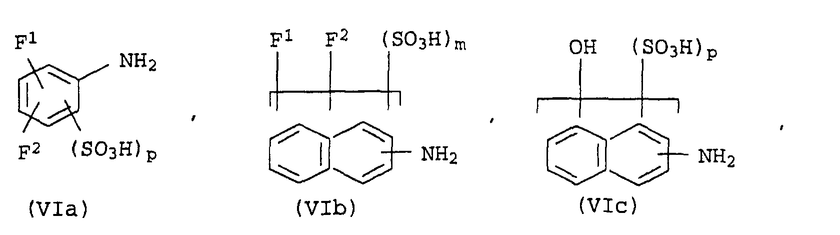 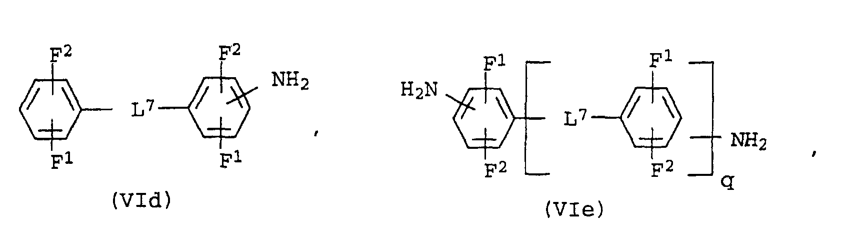 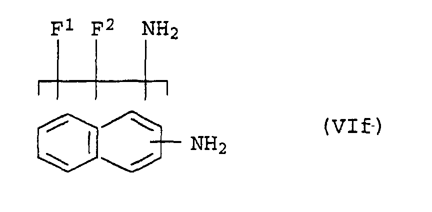
- ab,: worin
- m: 0, 1, 2 oder 3,
- p: 0, 1 oder 2,
- q: 0 oder 1,
- F¹: Wasserstoff, C₁-C₄-Alkyl, C₁-C₄-Alkoxy, Acetyl, Cyano, Carboxyl, Hydroxysulfonyl, C₁-C₄-Alkoxycarbonyl, Hydroxy, Carbamoyl, Mono- oder Di-(C₁-C₄)-alkylcarbamoyl, Fluor, Chlor, Brom oder Trifluormethyl,
- F²: Wasserstoff, C₁-C₄-Alkyl, C₁-C₄-Alkoxy, Cyano, Carboxyl, Hydroxysulfonyl, Hydroxysulfonylmethyl, Acetylamino, C₁-C₄-Alkoxycarbonyl, Carbamoyl, Mono- oder Di-(C₁-C₄)-alkylcarbamoyl, Fluor, Chlor, Nitro, Sulfamoyl, C₁-C₄-Mono- oder Dialkylsulfamoyl, C₁-C₄-Alkylsulfonyl, Phenylsulfonyl oder Phenoxy und
- L⁷: eine direkte Bindung, Sauerstoff, Schwefel oder einen Rest der Formel -NHCO-, -NHCONH-, -CONH-, -CO-, -NHSO₂-, -SO₂NH-, -SO₂-, -CH=CH-, -CH₂-CH₂-, -CH₂-, -NH-, oder -N=N- bedeuten.

Bevorzugt sind dabei solche Komponenten, in denen F¹ Wasserstoff, Methyl, Methoxy, Carboxyl, Hydroxysulfonyl, Hydroxy oder Chlor, F² Wasserstoff, Methyl, Methoxy, Carboxyl, Hydroxysulfonyl, Acetylamino oder Chlor und L⁷ einen Rest der Formel -CO-, -SO₂-, -CH=CH-, -CH₂-CH₂-, -CH₂- oder -N=N- bedeuten.

Aromatische Amine, die sich als Diazokomponenten eignen und die der Formel VIa, VIb, VIc oder VId entsprechen, sind beispielsweise Anilin, 2-Methoxyanilin, 2-Methylanilin, 4-Chlor-2-aminoanisol, 4-Methylanilin, 4-Methoxyanilin, 2-Methoxy-5-methylanilin, 2,5-Dimethoxyanilin, 2,5-Dimethylanilin, 2,4-Dimethylanilin, 2,5-Diethoxyanilin, 2-Chloranilin, 3-Chloranilin, 4-Chloranilin, 2,5-Dichloranilin, 4-Chlor-2-nitroanilin, 4-Chlor-2-methylanilin, 3-Chlor-2-methylanilin, 4-Chlor-2-aminotoluol, 4-Phenylsulfonylanilin, 2-Ethoxy-1-naphthylamin, 1-Naphthylamin, 2-Naphthylamin, 4-Methylsulfonylanilin, 2,4-Dichloranilin-5-carbonsäure, 2-Aminobenzoesäure, 4-Aminobenzoesäure, 3-Aminobenzoesäure, 3-Chloranilin-6-carbonsäure, Anilin-2- oder -3- oder -4-sulfonsäure, Anilin-2,5-disulfonsäure, Anilin-2,4-disulfonsäure, Anilin-3,5-disulfonsäure, 2-Aminotoluol-4-sulfonsäure, 2-Aminoanisol-4-sulfonsäure, 2-Aminoanisol-5-sulfonsäure, 2-Ethoxyanilin-5-sulfonsäure, 2-Ethoxyanilin-4-sulfonsäure, 4-Hydroxysulfonyl-2-aminobenzoesäure, 2,5-Dimethoxyanilin-4-sulfonsäure, 2,4-Dimethoxyanilin-5-sulfonsäure, 2-Methoxy-5-methylanilin-4-sulfonsäure, 4-Aminoanisol-3-sulfonsäure, 4-Aminotoluol-3-sulfonsäure, 2-Aminotoluol-5-sulfonsäure, 2-Chloranilin-4-sulfonsäure, 2-Chloranilin-5-sulfonsäure, 2-Bromanilin-4-sulfonsäure, 2,6-Dichloranilin-4-sulfonsäure, 2,6-Dimethylanilin-3- oder -4-sulfonsäure, 3-Acetylaminoanilin-6-sulfonsäure, 4-Acetyl-aminoanilin-2-sulfonsäure, 1-Aminonaphthalin-4-sulfonsäure, 1-Aminonaphthalin-3-sulfonsäure, 1-Aminonaphthalin-5-sulfonsäure, 1-Aminonaphthalin-6-sulfonsäure, 1-Aminonaphthalin-7-sulfonsäure, 1-Aminonaphthalin-3,7-disulfonsäure, 1-Aminonaphthalin-3,6,8-trisulfonsäure, 1-Aminonaphthalin-4,6,8-trisulfonsäure, 2-Naphthylamin-5- oder -6- oder -8-sulfonsäure, 2-Aminonaphthalin-3,6,8-trisulfonsäure, 2-Aminonaphthalin-6,8-disulfonsäure, 2-Aminonaphthalin-1,6-disulfonsäure, 2-Aminonaphthalin-1-sulfonsäure, 2-Aminonaphthalin-1,5-disulfonsäure, 2-Aminonaphhthalin-3,6-disulfonsäure, 2-Aminonaphthalin-4,8-disulfonsäure, 2-Aminophenol-4-sulfonsäure, 2-Aminophenol-5-sulfonsäure, 3-Aminophenol-6-sulfonsäure, 1-Hydroxy-2-aminonaphthalin-5,8- oder -4,6-disulfonsäure, 4-Aminodiphenylamin, 4-Amino-4'-methoxydiphenylamin, 4-Amino-4'-methoxydiphenylamin-3-sulfonsäure, 4-(2'-Methylphenylazo)-2-methylanilin, 4-Aminoazobenzol, 4'-Nitrophenylazo-1-aminonaphthalin, 4-(6'-Hydroxysulfonylnaphthylazo)-1-aminonaphthalin, 4-(2',5'-Dihydroxysulfonylphenylazo)-1-aminonaphthalin, 4'-Amino-3'-methyl-3-nitrobenzophenon, 4-Aminobenzophenon, 4-(4'-Aminophenylazo)-benzolsulfonsäure, 4-(4'-Amino-3'-methoxyphenylazo)benzolsulfonsäure oder 2-Ethoxy-1-naphthylamin-6-sulfonsäure.

Aromatische Diamine, die sich als Tetraazokomponenten oder auch zur Verdoppelung (z.B. mit Cyanurchlorid) eignen und die der Formel VIe oder VIf entsprechen, sind beispielsweise 1,3-Diaminobenzol, 1,3-Diaminobenzol-4-sulfonsäure, 1,4-Diaminobenzol, 1,4-Diaminobenzol-2-sulfonsäure, 1,4-Diamino-2-methylbenzol, 1,4-Diamino-2-methoxybenzol, 1,3-Diamino-4-methylbenzol, 1,3-Diaminobenzol-5-sulfonsäure, 1,3-Diamino-5-methylbenzol, 1,6-Diaminonaphthalin-4-sulfonsäure, 2,6-Diaminonaphthalin-4,8-disulfonsäure, 3,3'-Diaminodiphenylsulfon, 4,4'-Diaminodiphenylsulfon, 4,4'-Diaminostilben-2,2'-disulfonsäure, 2,2'-Diaminodiphenylsulfon, 2,2'-Diaminodiphenylsulfon-4,5-disulfonsäure, 4,4'-Diaminobenzophenon, 4,4'-Diamino-3,3'-dinitrobenzophenon, 3,3'-Diamino-4,4'-dichlorbenzophenon, 4,4'- oder 3,3'-Diaminodiphenyl, 4,4'-Diamino-3,3'-dichlordiphenyl, 4,4'-Diamino-3,3'dimethoxy- oder -3,3'-dimethyl- oder -2,2'-dimethyl- oder -2,2'-dichlor- oder -3,3'-diethoxydiphenyl, 4,4'-Diamino-3,3'dimethyl-6,6'-dinitrodiphenyl, 4,4'-Diaminodiphenyl-2,2'- oder -3,3'-disulfonsäure, 4,4'-Diamino-3,3'-dimethyl- oder -3,3'-dimethoxy- oder -2,2'-dimethoxydiphenyl-6,6'-disulfonsäure, 4,4'-Diamino-2,2',5,5'-tetrachlordiphenyl, 4,4'-Diamino-3,3'-dinitrodiphenyl, 4,4'-Diamino-2,2'-dichlor-5,5'-dimethoxydiphenyl, 4,4'-Diaminodiphenyl-2,2'- oder -3,3'-dicarbonsäure, 4,4'-Diamino-3,3'-dimethyldiphenyl-5,5'-disulfonsäure, 4,4'-Diamino-2-nitrodiphenyl, 4,4'-Diamino-3-ethoxy- oder -3-hydroxysulfonyldiphenyl, 4,4'-Diamino-3,3'-dimethyldiphenyl-5-sulfonsäure, 4,-4'-Diaminodiphenylmethan, 4,4'-Diamino-3,3'-dimethyldiphenylmethan, 4,4'-Diamino-2,2',3,3'-tetramethyldiphenylmethan, 4,4'-Diaminodiphenylethan, 4,4'-Diaminostilben oder 4,4'-Diaminodiphenylmethan-3,3'-dicarbonsäure.

Aromatische Reste D² von Diazokomponenten aus der Anilin- oder Aminonaphthalinreihe, die weitere faserreaktive Reste tragen, leiten sich beispielsweise von Aminen der Formeln VIIa-c 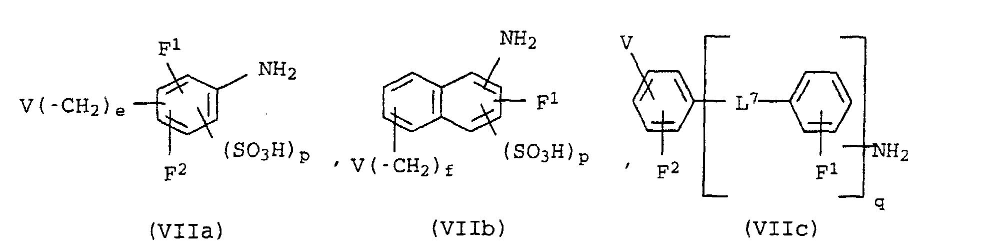 ab, in denen F¹, F², p, q und L⁷ jeweils die obengenannte Bedeutung besitzen und e und f gleich oder verschieden sind und unabhängig voneinander jeweils 0 oder 1 und V einen faserreaktiven Rest bedeuten.

Faserreaktive Reste V leiten sich beispielsweise vom Rest E ab oder sind, wie oben bereits ausgeführt, heterocyclische Ankerreste oder Ankerreste aus der aliphatischen Reihe.

Aromatische Amine, die den, den faserreaktiven Rest V aufweisenden, Derivaten der Formel VIIa, VIIb oder VIIc zugrundeliegen, sind beispielsweise 1,3 Diaminobenzol, 1,3-Diaminobenzol-4-sulfonsäure, 1,3-Diaminobenzol-4,6-disulfonsäure, 1,4-Diaminobenzol, 1,4-Diaminobenzol-2-sulfonsäure, 1,4-Diaminobenzol-2,5-disulfonsäure, 1,4-Diamino-2-methylbenzol, 1,4-Diamino-2-methoxybenzol, 1,3-Diamino-4-methylbenzol, 1,4-Diaminobenzol-2,6-disulfonsäure, 1,5-Diamino-4-methylbenzol-2-sulfonsäure, 1,5-Diamino-4-methoxybenzol-2-sulfonsäure, 1,6-Diaminonaphth-2-ol-4-sulfonsäure, 1,6-Diaminonaphthalin-4-sulfonsäure, 2,6-Diaminonaphthalin-4,8-disulfonsäure, 2,6-Diaminonaphth-1-ol-4,8-disulfonsäure, 1,3-Diaminobenzol-5-sulfonsäure, 1,3-Diamino-5-methylbenzol, 2,6-Diaminophenol-4-sulfonsäure, 5-Aminomethyl-2-aminonaphthalin-2-sulfonsäure, 5-(N-Methylaminomethyl)-2-aminonaphthalin-1-sulfonsäure, 4,4'-Diaminostilben-3,3'-dicarbonsäure, 4-(N-Methylaminomethyl)anilin-2-sulfonsäure oder 3-(N-Methylaminomethyl)-anilin-6-sulfonsäure.

Die Reste K der Kupplungskomponente entstammen vorzugsweise der Benzol-, Naphthalin-, Pyrazol-, Pyridin-, Pyrimidin-, Indoloder N-Arylacetoacetamidreihe und können auch faserreaktive Gruppen tragen.

Faserreaktivgruppenfreie Kupplungskomponenten sind bevorzugt Verbindungen der Naphthalin-, Anilin-, Pyrazolon-, Aminopyrazol-, 2,6-Diaminopyridin-, Pyridon-, Hydroxypyrimidin-, Indol-, N-Arylacetoacetamidreihe und entsprechen beispielsweise den Verbindungen der Formeln VIII a-m 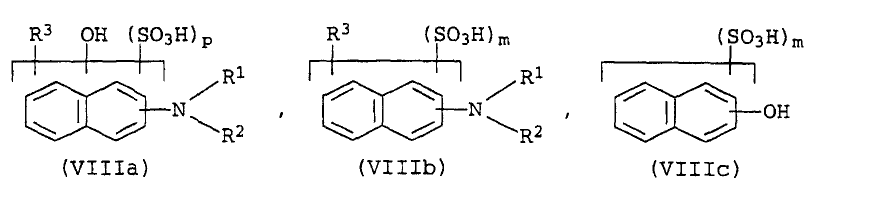 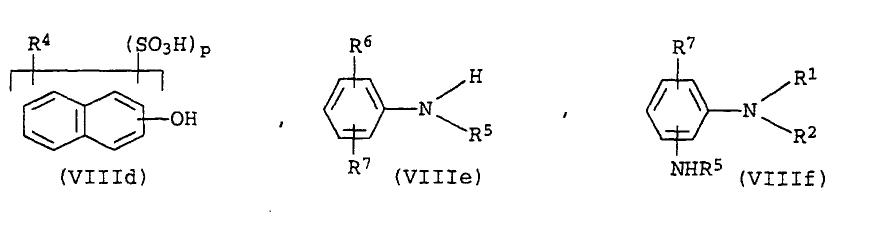 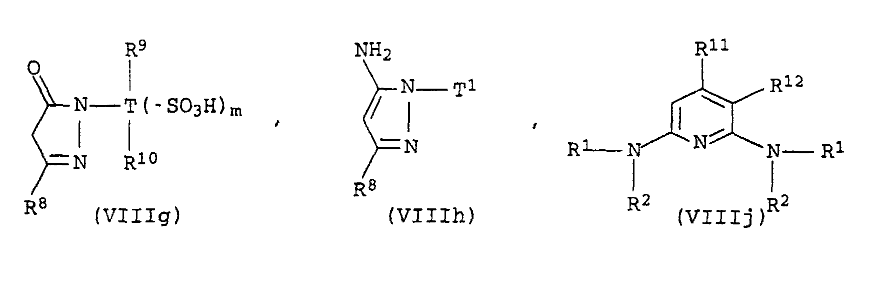 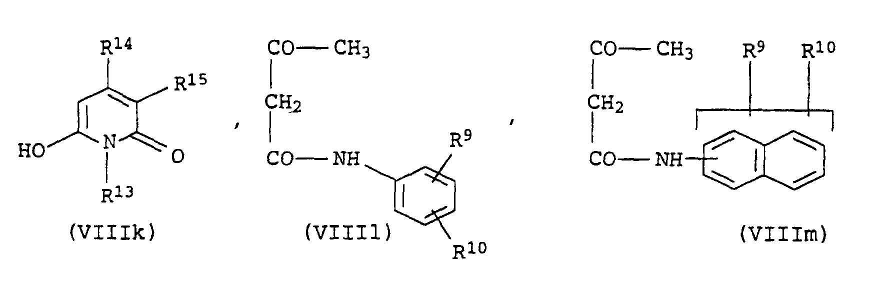 worin
- m: 0, 1, 2 oder 3,
- p: 0, 1 oder 2,
- R¹: Wasserstoff oder C₁-C₄-Alkyl, das durch Hydroxy, Cyano, Carboxyl, Hydroxysulfonyl, Sulfato, Methoxycarbonyl, Ethoxycarbonyl oder Acetoxy substituiert sein kann,
- R²: Wasserstoff, C₁-C₄-Alkyl, das durch Hydroxy, Cyano, Carboxyl, Hydroxysulfonyl, Sulfato, Methoxycarbonyl, Ethoxycarbonyl oder Acetoxy substituiert sein kann, Benzyl oder Phenyl, das durch C₁-C₄-Alkyl, C₁-C₄-Alkoxy, Chlor oder Hydroxysulfonyl substituiert sein kann,
- R³: Wasserstoff oder C₁-C₄-Alkyl, das durch Hydroxysulfonyl oder Carboxyl substituiert sein kann,
- R⁴: C₁-C₆-Alkylureido, Phenylureido, das durch Chlor, Methyl, Methoxy, Nitro, Hydroxysulfonyl oder Carboxyl substituiert sein kann, C₁-C₆-Alkanoylamino, das durch Hydroxysulfonyl oder Chlor substituiert sein kann, Cyclohexylcarbonylamino, Benzoylamino, das durch Chlor, Methyl, Methoxy, Nitro, Hydroxysulfonyl oder Carboxyl substituiert sein kann, oder Hydroxy,
- R⁵: Wasserstoff, C₁-C₆-Alkyl, insbesondere C₁-C₄-Alkyl, das jeweils durch Phenyl, C₁-C₄-Alkoxy, Hydroxy, Phenoxy oder C₁-C₄-Alkanoyloxy substituiert sein kann, C₅-C₇-Cycloalkyl, Hydroxysulfonylphenyl, C₁-C₄-Alkanoyl, Carbamoyl, Mono- oder Di-(C₁-C₄)-alkylcarbamoyl, Phenylcarbamoyl oder Cyclohexylcarbamoyl,
- R⁶: C₁-C₄-Alkoxy, Chlor, Brom, Hydroxysulfonyl, C₁-C₄-Alkanoylamino, Amino, Ureido, Methylsulfonylamino, Ethylsulfonylamino, Dimethylaminosulfonylamino, Methylamino, Ethylamino, Dimethylamino oder Diethylamino
- R⁷: Wasserstoff, C₁-C₄-Alkyl, C₁-C₄-Alkoxy, Hydroxysulfonyl, Chlor oder Brom,
- T: den Rest eines Benzol- oder Naphthalinrings,
- T¹: C₁-C₄-Alkyl, Cyclohexyl, Benzyl oder Phenyl, das ein- bis dreifach durch Fluor, Chlor, Brom, Methoxy, Nitro, Hydroxysulfonyl, Carboxyl, Acetyl, Acetylamino, Methylsulfonyl, Sulfamoyl oder Carbamoyl substituiert ist,
- R⁸: Methyl, Carboxyl, C₁-C₄-Alkoxycarbonyl oder Phenyl,
- R⁹: Wasserstoff, C₁-C₄-Alkyl, C₁-C₄-Alkoxy, Acetyl, Cyano, Carboxyl, Hydroxysulfonyl, C₁-C₄-Alkoxycarbonyl, Hydroxy, Carbamoyl, Mono- oder Di-(C₁-C₄)-alkylcarbamoyl, Fluor, Chlor, Brom oder Trifluormethyl,
- R¹⁰: Wasserstoff, C₁-C₄-Alkyl, C₁-C₄-Alkoxy, Cyano, Carboxyl, Hydroxysulfonyl, Acetylamino, C₁-C₄-Alkoxycarbonyl, Carbamoyl, Mono- oder Di-(C₁-C₄)-alkylcarbamoyl, Fluor, Chlor, Nitro, Sulfamoyl, Mono- oder Di-(C₁-C₄)-alkylsulfamoyl, C₁-C₄-Alkylsulfonyl, Phenylsulfonyl oder Phenoxy,
- R¹¹: Wasserstoff oder C₁-C₄-Alkyl, das durch C₁-C₄-Alkoxy oder Cyano substituiert sein kann,
- R¹²: Wasserstoff, Methyl, Hydroxysulfonylmethyl, Hydroxysulfonyl, Cyano oder Carbamoyl,
- R¹³: Wasserstoff, C₁-C₄-Alkyl, das durch Phenyl, Hydroxysulfonylphenyl, Hydroxy, Amino, C₁-C₄-Alkoxyl, Carboxyl, Hydroxysulfonyl, Acetylamino, Benzoylamino oder Cyano substituiert sein kann, Cyclohexyl, Phenyl, das gegebenenfalls durch Carboxyl, Hydroxysulfonyl, Benzoylamino, Acetylamino, Methyl, Methoxy, Cyano oder Chlor substituiert ist, oder Amino, das durch Phenyl, C₁-C₄-Alkyl, C₁-C₄-Alkanoyl oder Benzoyl substituiert ist,
- R¹⁴: Wasserstoff, C₁-C₄-Alkyl, Phenyl, Hydroxyl, Cyano, Acetyl, Benzoyl, Carboxyl, Methoxycarbonyl, Carbamoyl oder Hydroxysulfonylmethyl und
- R¹⁵: Wasserstoff, Chlor, Brom, Acetylamino, Amino, Nitro, Hydroxysulfonyl, Sulfamoyl, Methylsulfonyl, Phenylsulfonyl, Carboxyl, C₁-C₄-Alkoxycarbonyl, C₁-C₄-Alkanoyl, Benzoyl, Carbamoyl, Cyano oder Hydroxysulfonylmethyl bedeuten.

Reste U², U³, F¹, F², R¹, R², R³, R⁵, R⁷, T¹, R⁹, R¹⁰, R¹¹, R¹³, R¹⁴ sowie die unten erwähnten Reste G³, G⁵, G¹² und G¹³ sind z.B. Methyl, Ethyl, Propyl, Isopropyl, Butyl, Isobutyl, sec-Butyl oder tert-Butyl.

Die Reste U², U³ und R⁵ können weiterhin Pentyl, Isopentyl, Neopentyl, tert-Pentyl, Hexyl oder 2-Methylpentyl sein.

Die Reste U², U³, R¹, R², R⁵ und R¹³ sind Hydroxy-C₁-C₄-alkyl wie Hydroxymethyl, 1-Hydroxyeth-1-yl, 2-Hydroxyeth-1-yl, 1-Hydroxyprop-1-yl, 2-Hydroxyprop-1-yl, 3-Hydroxyprop-1-yl, 1-Hydroxyprop-2-yl, 2-Hydroxyprop-2-yl, 1-Hydroxbut-1-yl, 2-Hydroxybut-1-yl, 3-Hydroxybut-1-yl, 4-Hydroxybut-1-yl, 1-Hydroxybut-2-yl, 2-Hydroxybut-2-yl, 1-Hydroxybut-3-yl, 2-Hydroxybut-3-yl, 1-Hydroxy-2-methyl-prop-3-yl, 2-Hydroxy-2-methylprop-3-yl, 3-Hydroxy-2-methyl-prop-3-yl und 2-Hydroxymethylprop-2-yl.

Die Reste U², U³, R¹, R², R¹¹ und R¹³ sind weiterhin z.B. Cyanomethyl, Cyanoethyl, Cyanopropyl oder Cyanobutyl.

Die Reste R¹, R², R³ und R¹³ sind beispielsweise Carboxylmethyl, Carboxylethyl, 2- oder 3-Carboxylpropyl oder 2- oder 4-Carboxylbutyl.

Die Reste U², U³, R¹, R² und R³ stehen ferner für beispielsweise Hydroxysulfonylmethyl, 2-Hydroxysulfonylethyl, 2- oder 3-Hydroxysulfonylpropyl oder 2- oder 4-Hydroxysulfonylbutyl.

R¹ und R² stehen weiterhin für z.B. 2-Sulfatoethyl, 2- oder 3-Sulfatopropyl, 2- oder 4-Sulfatobutyl, Methoxycarbonylmethyl, 2-Methoxycarbonylethyl, 2- oder 3-Methoxycarbonylpropyl, 2- oder 4-Methoxycarbonylbutyl, Ethoxycarbonylmethyl, 2-Ethoxycarbonylethyl, 2- oder 3-Ethoxycarbonylpropyl, 2- oder 4-Ethoxycarbonylbutyl, Acetoxymethyl, 2-Acetoxyethyl, 2- oder 3-Acetoxypropyl oder 2- oder 4-Acetoxybutyl.

Die Reste R² können weiterhin z.B. 2-, 3- oder 4-Methylphenyl, 2-, 3- oder 4-Ethylphenyl, 2-, 3- oder 4-Propylphenyl, 2-, 3-oder 4-Isopropylphenyl, 2-, 3- oder 4-Butylphenyl, 2-, 3- oder 4-Isobutylphenyl, 2-, 3- oder 4-sec-Butylphenyl, 2-, 3- oder 4-tert-Butylphenyl, 2-, 3- oder 4-Methoxyphenyl, 2-, 3- oder 4-Ethoxyphenyl, 2-, 3- oder 4-Propoxyphenyl, 2-, 3- oder 4-Isopropoxyphenyl, 2-, 3- oder 4-Butoxyphenyl, 2-, 3- oder 4-Isobutoxyphenyl, 2-, 3- oder 4-sec-Butoxyphenyl, 2-, 3- oder 4-tert-Butoxyphenyl oder 2-, 3- oder 4-Chlorphenyl sein.

Die Reste R², R⁵ und T¹ sind weiterhin z.B. 2-, 3- oder 4-Hydroxysulfonylphenyl.

Der Rest R⁴ ist z.B. Methylureido, Ethylureido, Propylureido, Butylureido, Pentylureido, Hexylureido, Formylamino, Acetylamino, Propionylamino, Butyrylamino, Isopropylcarbonylamino, Valerylamino, Isobutylcarbonylamino, sec-Butylcarbonylamino, tert-Butylcarbonylamino oder Pentylcarbonylamino.

Die Reste R⁵ und R¹³ können z.B. Benzyl, 1-Phenylethyl, 2-Phenylethyl, 1-Phenylprop-1-yl, 2-Phenylprop-1-yl, 3-Phenylprop-1-yl, 1-Phenylbut-1-yl, 2-Phenylbut-1-yl, 3-Phenylbut-1-yl, 4-Phenylbut-1-yl, 1-Phenylbut-2-yl, 2-Phenylbut-2-yl, 3-Phenylbut-2-yl, 3-Phenylbut-2-yl, 4-Phenylbut-2-yl, 1-(Phenylmethyl)-eth-1-yl, 1-(Phenylmethyl)-1-(methyl)-eth-1-yl und 1-(Phenylmethyl)-prop-1-yl, vorzugsweise Benzyl und 2-Phenylethyl sein.

Die Reste R⁵, R¹¹ und R¹³ stehen weiter für beispielsweise Methoxymethyl, Ethoxymethyl, n-Propoxymethyl, (1-Methylethoxy)methyl, n-Butoxymethyl, (1-Methylpropoxy)methyl, (2-Methylpropoxy)methyl, (1,1-Dimethylethoxy)methyl, 2-(Methoxy)ethyl, 2-(Ethoxy)ethyl, 2-(n-Propoxy)ethyl, 2-(1-Methoxyethoxy)ethyl, 2-(n-Butoxy)ethyl, 2-(1-Methoxypropoxy)ethyl, 2-(2-Methylpropoxy)ethyl, 2-(1,1-Dimethylethoxy)ethyl, 2-(Methoxy)propyl, 2-(Ethoxy)propyl, 2-(n-Propoxy)propyl, 2-(1-Methylethoxy)propyl, 2-(n-Butoxy)-propyl, 2-(1-Methylpropoxy)propyl, 2-(2-Methylpropoxy)propyl, 2-(1,1- Dimethylethoxy)propyl, 3-(Methoxy)propyl, 3-(Ethoxy)-propyl, 3-(n-Propoxy)propyl, 3-(1-Methylethoxy)propyl, 3-(n-Butoxy)- propyl, 3-(1-Methylpropoxy)propyl, 3-(2-Methylpropoxy)-propyl, 3-(1,1-Dimethylethoxy)propyl, 2-(Methoxy)butyl, 2-(Ethoxy)butyl, 2-(n-Propoxy)butyl, 2-(1-Methylethoxy)butyl, 2-(n-Butoxy)butyl, 2-(1-Methylpropoxy)butyl, 2-(2-Methylpropoxy)butyl, 2-(1,1- Dimethylethoxy)butyl, 3-(Methoxy)butyl, 3-(Ethoxy)butyl, 3-(n-Propoxy)butyl, 3-(1-Methylethoxy)butyl, 3-(n-Butoxy)butyl, 3-(1-Methylpropoxy)butyl, 3-(2-Methylpropoxy)butyl, 3-(1,1-Dimethylethoxy)butyl, 4-(Methoxy)butyl, 4-(Ethoxy)butyl, 4-(n-Propoxy)butyl, 4-(1-Methylethoxy)butyl, 4-(n-Butoxy)butyl, 4-(1-Methylpropoxy)butyl, 4-(2-Methylpropoxy)butyl oder 4-(1,1-Dimethylethoxy)butyl.

Reste R⁵ sind ferner z.B. Phenoxymethyl, 2-Phenoxyethyl, 2-oder 3-Phenoxypropyl, 2- oder 4-Phenoxybutyl, Formyloxymethyl, 2-(Formyloxy)ethyl, 3-(Formyloxy)propyl, 2- oder 4-(Formyloxy)butyl, Methylcarbonyloxymethyl, 2-(Methylcarbonyloxy)ethyl, 2- oder 3-(Methylcarbonyloxy)propyl, 2- oder 4-(Methylcarbonyloxy)butyl, Ethylcarbonyloxymethyl, 2-(Ethylcarbonyloxy)ethyl, 2- oder 3-(Ethylcarbonyloxy)propyl, 2- oder 4-(Ethylcarbonyloxy)butyl, Propylcarbonyloxymethyl, 2-(Propylcarbonyloxy)ethyl, 2- oder 3-(Propylcarbonyloxy)propyl, 2- oder 4-(Propylcarbonyloxy)butyl, Cyclopentyl, Cyclohexyl oder Cycloheptyl.

Die Reste R⁵, R¹⁵ sowie die unten beschriebenen Reste G⁴ sind z.B. Formyl, Acetyl, Propionyl, Butyryl oder Isobutyryl.

Die Reste F¹, F², R⁵, R⁹, R¹⁰ sowie die unten beschriebenen Reste G⁴ sind beispielsweise Mono- oder Dimethylcarbamoyl, Monooder Diethylcarbamoyl, Mono- oder Dipropylcarbamoyl oder Monooder Dibutylcarbamoyl.

Reste F¹, F², R⁶, R⁷, R⁹, R¹⁰ sowie die unten beschriebenen Reste G³ und G⁵ können z.B. Methoxy, Ethoxy, Propoxy, Isopropoxy, Butoxy, sec-Butoxy, Isobutoxy oder tert-Butoxy sein.

Die Reste R⁶ und R¹³ sind beispielsweise Formylamino, Methylcarbonylamino, Ethylcarbonylamino, Propylcarbonylamino oder Isopropylcarbonylamino.

Reste T¹ sind weiterhin z.B. 2-, 3- oder 4-Fluorphenyl, 2-, 3-oder 4-Chlorphenyl, 2-, 3- oder 4-Bromphenyl, 2-, 3- oder 4-Methoxyphenyl, 2-, 3- oder 4-Nitrophenyl, 2-, 3- oder 4-Carboxylphenyl, 2-, 3- oder 4-Acetylphenyl, 2-, 3- oder 4-Acetylaminophenyl, 2-, 3- oder 4-Methylsulfonylphenyl, 2-, 3- oder 4-Sulfamoylphenyl oder 2-, 3- oder 4-Carbamoylphenyl.

Die Reste F¹, F², R⁸, R⁹, R¹⁰, R¹⁵ sowie die unten beschriebenen Reste R¹⁶ sind ferner z.B. Methoxycarbonyl, Ethoxycarbonyl, Propoxycarbonyl, Isopropoxycarbonyl, Butoxycarbonyl, Isobutoxycarbonyl, sec-Butoxycarbonyl oder tert-Butoxycarbonyl.

Die Reste F² und R¹⁰ sind weiterhin beispielsweise Mono- oder Dimethylsulfamoyl, Mono- oder Diethylsulfamoyl, Mono- oder Dipropylsulfamoyl, Mono- oder Dibutylsulfamoyl, Methylsulfonyl, Ethylsulfonyl, Propylsulfonyl oder Butylsulfonyl.

Als Reste R¹³ kommen ferner in Betracht z.B. Hydroxysulfonylphenylmethyl, 2-Hydroxysulfonylphenylethyl, 2- oder 3-Hydroxysulfonylphenylpropyl, 2- oder 4-Hydroxysulfonylphenylbutyl, Aminomethyl, 2-Aminoethyl, 2- oder 3-Aminopropyl, 2- oder 4-Aminobutyl, Hydroxysulfonylmethyl, 2-Hydroxysulfonylethyl, 2-oder 3-Hydroxysulfonylpropyl, 2- oder 4-Hydroxysulfonylbutyl, Acetylaminomethyl, 2-Acetylaminoethyl, 2- oder 3-Acetylaminopropyl, 2- oder 4-Acetylaminobutyl, Benzoylaminomethyl, 2-Benzoylaminoethyl, 2- oder 3-Benzoylaminopropyl, 2- oder 4-Benzoylaminobutyl, 2-, 3- oder 4-Carboxylphenyl, 2-, 3- oder 4-Hydroxysulfonylphenyl, 2-, 3- oder 4-Benzoylaminophenyl, 2-, 3-oder 4-Acetylaminophenyl, 2-, 3- oder 4-Methylphenyl, 2-, 3- oder 4-Methoxyphenyl, 2-, 3- oder 4-Cyanophenyl, 2-, 3- oder 4-Chlorphenyl, Phenylamino, Methylamino, Ethylamino, Propylamino, Isopropylamino, Butylamino, Isobutylamino, sec-Butylamino, tert-Butylamino oder Benzoylamino.

Die Reste L⁵ sowie die unten beschriebenen Reste L⁸ sind z.B. (CH₂)₂, (CH₂)₃, (CH₂)₄, CH(CH₃)CH₂, CH(CH₃)CH(CH₃), (CH₂)₅ oder (CH₂)₆.

Die Reste L⁵ sind weiterhin z.B. (CH₂)₂O(CH₂)₂, (CH₂)₃O(CH₂)₂, (CH₂)₂O(CH₂)₂O(CH₂)₂, (CH₂)₂S(CH₂)₂, (CH₂)₃S(CH₂)₂, (CH₂)₂S(CH₂)₂S(CH₂)₂, (CH₂)₂NH(CH₂)₂, (CH₂)₃NH(CH₂)₂, (CH₂)₂NH(CH₂)₂NH(CH₂)₂.

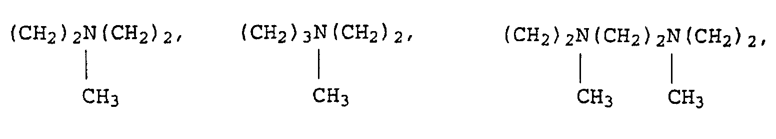

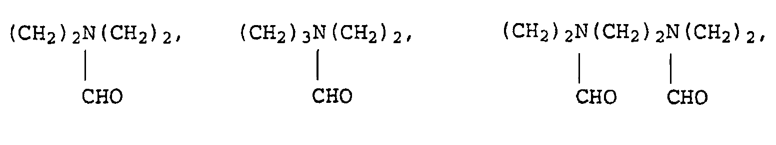

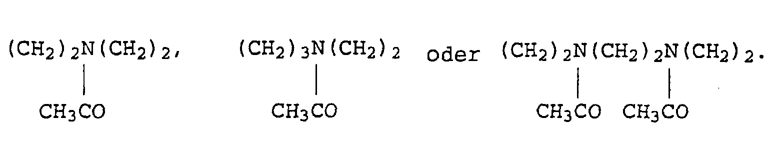

Die Reste L⁶ und L¹⁰ sind CH₂, (CH₂)₂, (CH₂)₃, (CH₂)₄, CH (CH₃) CH₂ oder CH(CH₃)CH(CH₃).

Im folgenden werden beispielhaft Kupplungskomponenten KH aufgeführt. Im einzelnen sind beispielsweise als Naphtholsulfonsäuren 1-Naphthol-3-sulfonsäure, 1-Naphthol-4-sulfonsäure, 1-Naphthol-5-sulfonsäure, 1-Naphthol-8-sulfonsäure, 1-Naphthol-3,6-disulfonsäure, 1-Naphthol-3,8-disulfonsäure, 2-Naphthol-5-sulfonsäure, 2-Naphthol-6-sulfonsäure, 2-Naphthol-7-sulfonsäure, 2-Naphthol-8-sulfonsäure, 2-Naphthol-3,6-disulfonsäure, 2-Naphthol-6,8-disulfonsäure, 2-Naphthol-3,6,8-trisulfonsäure, 1,8-Dihydroxynaphthalin-3,6-disulfonsäure, 2,6-Dihydroxynaphthalin-8-sulfonsäure oder 2,8-Dihydroxynaphthalin-6-sulfonsäure zu nennen.

Weiterhin sind beispielsweise 1-Naphthylamin, N-Phenyl-1-naphthylamin, N-Ethyl-1-naphthylamin, N-Phenyl-2-naphthylamin, 1-Naphthol, 2-Naphthol, 1,5-Dihydroxynaphthalin, 1,6-Dihydroxynaphthalin, 1,7-Dihydroxynaphthalin oder 2,7-Dihydroxynaphthalin zu nennen.

Aminonaphthalinsulfonsäuren sind beispielsweise 1-Naphthylamin-6-sulfonsäure, 1-Naphthylamin-7-sulfonsäure, 1-Naphthylamin-8-sulfonsäure, 2-Naphthylamin-3,6-disulfonsäure, 2-Naphthylamin-5,7-disulfonsäure, 2-Naphthylamin-6,8-disulfonsäure, 2-Hydroxysulfonylmethylaminonaphthalin-5-sulfonsäure oder 2-Hydroxysulfonylmethylaminonaphthalin-6-sulfonsäure.

Als Aminonaphtholsulfonsäuren sind z.B. 1-Amino-5-hydroxynaphthalin-7-sulfonsäure, 1-Amino-8-hydroxynaphthalin-4-sulfonsäure, 1-Amino-8-hydroxynaphthalin-2,4-disulfonsäure, 1-Amino-8-hydroxynaphthalin-3,6-disulfonsäure, 1-Amino-8-hydroxynaphthalin-4,6-disulfonsäure, 2-Amino-5-hydroxynaphthalin-7-sulfonsäure, 2-Amino-8-hydroxynaphthalin-6-sulfonsäure, 2-Amino-8-hydroxynaphthalin-3,6-disulfonsäure, 2-Amino-5-hydroxynaphthalin-1,7-disulfonsäure, 3-Amino-7-hydroxysulfonylmethyl-8-hydroxynaphthalin-3,6-disulfonsäure, 2-Amino-7-hydroxysulfonylmethyl-8-hydroxynaphthalin-6-sulfonsäure, 1-Acetylamino-8-hydroxynaphthalin-3,6-disulfonsäure, 1-Benzoylamino- 8-hydroxynaphthalin-3,6-disulfonsäure, 1-Acetylamino-8-hydroxynaphthalin-4,6-disulfonsäure, 1-Benzoylamino-8-hydroxynaphthalin-4,6-disulfonsäure, 1-Acetylamino-5-hydroxynaphthalin-7-sulfonsäure, 2-Methylamino-8-hydroxynaphthalin-6-sulfonsäure, 2-Methylamino-8-hydroxynaphthalin-6-sulfonsäure, 2-Hydroxysulfonylmethylamino-8-hydroxynaphthalin-6-sulfonsäure, 2-Hydroxysulfonylmethylamino-7-hydroxysulfonylmethyl-8-hydroxynaphthalin-6-sulfonsäure, 2-Hydroxysulfonylmethylamino-8-hydroxynaphthalin-3,6-disulfonsäure, 2-Hydroxysulfonylmethylamino-7-hydroxysulfonylmethyl-8-hydroxynaphthalin-3,6-disulfonsäure, 2-(3'- oder 4'-Hydroxysulfonylphenylamino)-8-hydroxynaphthalin-6-sulfonsäure, 2-Acetylamino-5-hydroxynaphthalin-7-sulfonsäure oder 2-Acetylamino-8-hydroxynaphthalin-6-sulfonsäure zu nennen.

Als Benzol-Kupplungskomponenten sind beispielsweise o- oder m-Toluidin, o- oder m-Anisidin, Kresidin, 2,5-Dimethylanilin, 2,5-Dimethoxyanilin, m-Aminoacetanilid, 3-Amino-4-methoxyacetanilid, 3-Amino-4-methylacetanilid, m-Aminophenylharnstoff, N-Methylanilin, N-Methyl-m-toluidin, N-Ethylanilin, N-Ethyl-mtoluidin, N-(2-Hydroxyethyl)anilin oder N-(2-Hydroxyethyl)-mtoluidin zu nennen.

Als Pyrazolon-Kupplungskomponenten sind beispielsweise 3-Methyl-, 3-Carboxy- oder 3-(C₁-C₄-Alkoxycarbonyl)pyrazol-5-one zu nennen, die in 1-Stellung Wasserstoff, gegebenenfalls durch Methyl, Ethyl, Fluor, Chlor, Brom, Trifluormethyl, Methoxy, Ethoxy, Cyano, Phenoxy, Phenylsulfonyl, Methylsulfonyl, Hydroxysulfonyl, Acetylamino, Nitro, Hydroxyl, Carboxyl, Carbamoyl oder Sulfamoyl substituiertes Phenyl oder durch Hydroxysulfonyl substituiertes 1- oder 2-Naphthyl tragen können. Beispielsweise sind 1-Phenyl-, 1-(2'-Chlorphenyl)-, 1-(2'-Methoxyphenyl)-, 1-(2'-Methylphenyl)-, 1-(1',5'-Dichlorphenyl)-, 1-(2',6'-Dichlorphenyl)-, 1-(2'-Methyl-6'-chlorphenyl)-, 1-(2'-Methoxy-5'-methylphenyl)-, 1-(2'-Methoxy-5'-hydroxysulfonylphenyl)-, 1-(2',5'-Dichlor-4'-hydroxysulfonylphenyl)-, 1-(2',5'-Dihydroxysulfonylphenyl)-, 1-(2'-Carboxyphenyl)-, 1-(3'-Hydroxysulfonylphenyl)-, 1-(4'-Hydroxysulfonylphenyl)- oder 1-(3'-Sulfamoylphenyl)-3-carboxylpyrazol-5-on, 1-(3'- oder 4'-Hydroxysulfonylphenyl)-, 1-(2'-Chlor-4'- oder -5'-hydroxysulfonylphenyl)-, 1-(2'-Methyl-4'-hydroxysulfonylphenyl)-, 1-(2',5'-Dichlorphenyl)-, 1-(4',8'-Dihydroxysulfonyl-1-naphthyl)-, 1-(6'-Hydroxysulfonyl-1-naphthyl)-3-methylpyrazol-5-on, 1-Phenylpyrazol-5-on-3-carbonsäureethylester, Pyrazol-5-on-3-carbonsäureethylester oder Pyrazol-5-on-3-carbonsäure zu nennen.

Andere aus der Pyrazolreihe stammende Kupplungskomponenten sind beispielsweise 1-Methyl-, 1-Ethyl-, 1-Propyl-, 1-Butyl-, 1-Cyclohexyl-, 1-Benzyl- oder 1-Phenyl-5-aminopyrazol, 1-(4'-Chlorphenyl)-, 1-(4'-Methylphenyl)-5-aminopyrazol oder 1-Phenyl-3-methyl-5-aminopyrazol.

N-Arylacetoacetamide sind vor allem Acetessiganilid oder dessen im Phenylkern durch Chlor, Methyl, Ethyl, Methoxy, Ethoxy, Acetylamino, Hydroxylsulfonyl, Carboxyl, Carbamoyl oder Sulfamoyl ein- oder mehrfach substituierte Derivate.

Vom Pyridin abgeleitete Kupplungskomponenten sind beispielsweise die in der DE-A-2 260 827 beschriebenen Derivate.

Als Pyrimidinkupplungskomponenten sind z.B. die in der DE-A-2 202 820, DE-A-2 308 663 oder DE-A-3 119 349 aufgeführten Verbindungen geeignet. Weiterhin sind Barbitursäure und deren N-Substitutionsprodukte zu nennen. Als N-Substituenten kommen dabei insbesondere C₁-C₄-Alkyl oder Phenyl in Betracht.

Als Indolkupplungskomponenten sind beispielsweise 2-Methylindol, 2-Phenylindol, 2-Phenylindol-5-sulfonsäure, 1-Methyl-2-phenylindol, 1-(2'-Hydroxyethyl)-, 1-(2'-Carboxyethyl)-, 1-(2'-Carbamoylethyl)-2-methylindol oder -2-phenylindol zu nennen.

Als Pyridonkupplungskomponenten sind beispielsweise 1-Ethyl-2-hydroxy-4-methyl-5-carbamoylpyrid-6-on, 1-(2'-Hydroxyethyl)2-hydroxy-4-methyl-5-carbamoylpyrid-6-on, 1-Phenyl-2-hydroxy-4-methyl-5-carbamoylpyrid-6-on, 1-Ethyl-2-hydroxy-4-methyl-5-cyanopyrid-6-on, 1-Ethyl-2-hydroxy-4-methyl-5-hydroxysulfonylmethylpyrid-6-on, 1-Methyl-2-hydroxy-4-methyl-5-cyanopyrid-6-on, 1-Methyl-2-hydroxy-5-acetylpyrid-6-on, 1,4-Dimethyl-2-hydroxy-5-cyanopyrid-6-on, 1,4-Dimethyl-5-carbamoylpyrid-6-on, 2,6-Dihydroxy-4-ethyl-5-cyanopyridin, 2-Hydroxy-4-ethyl-5-carbamoylpyrid-6-on, 1-Ethyl-2-hydroxy-4-methyl-5-hydroxysulfonylmathylpyrid-6-on, 1-Methyl-2-hydroxy-4-methyl-5-methylsulfonylpyrid-6-on oder 1-Carboxymethyl-2-hydroxy-4-ethyl-5-phenylsulfonylpyrid-6-on zu nennen.

Faserreaktivgruppenhaltige Kupplungskomponenten K der Naphthalin-, Benzol-, Pyrazolon-, Aminopyrazol-, 2,6-Diaminopyridin-, Pyridon-, Hydroxypyrimidin-, Aminopyrimidin-, Indoloder N-Arylacetoacetamidreihe sind beispielsweise Verbindungen der Formeln IXa-m 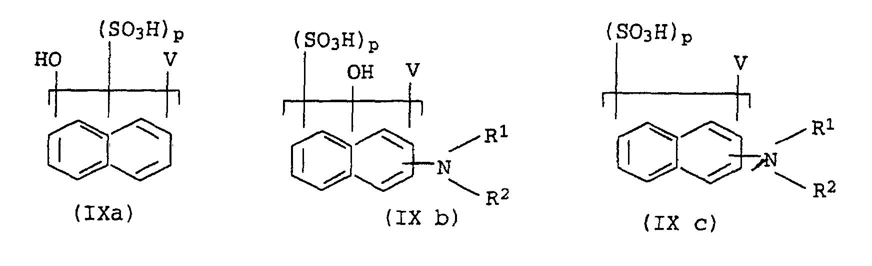 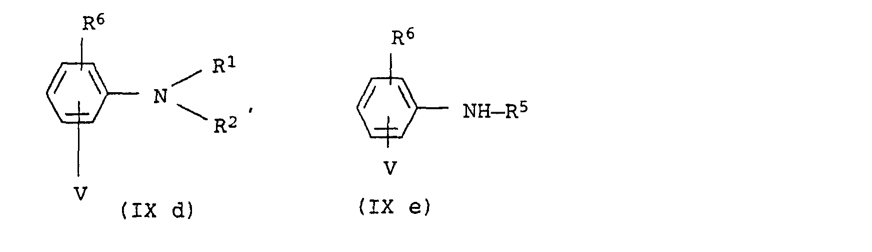 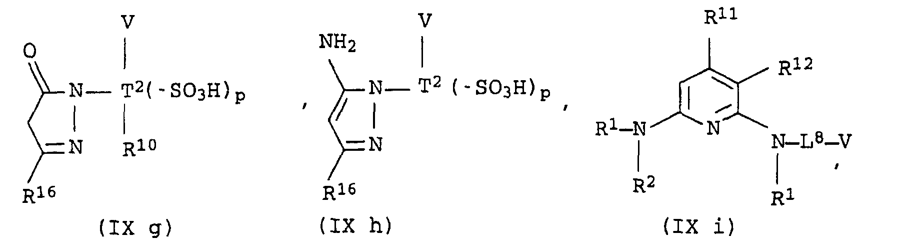 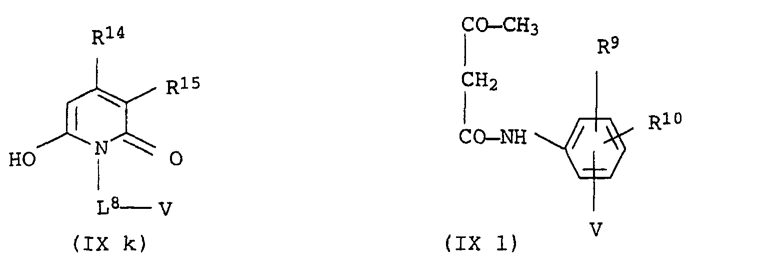 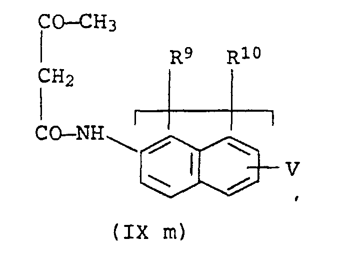 worin
T² für den Rest eines Benzol- oder Naphthalinrings,
R¹⁶ für Methyl, Carboxyl, C₁-C₄-Alkoxycarbonyl oder Phenyl und L⁸ für C₁-C₆-Alkylen stehen und
R¹, R², R⁵, R⁶, R⁹, R¹⁰, R¹¹, R¹², R¹⁴, R¹⁵, p und V jeweils die obengenannte Bedeutung besitzen.

Faserreaktive Reste V tragende Pyrazolonkupplungskomponenten leiten sich beispielsweise von folgenden Pyrazolonen ab: 1-(3'oder 4'-Aminophenyl)-, 1-(2'-Hydroxysulfonyl-5'-aminophenyl)-oder 1-(2'-Methoxy-5'-aminophenyl)- 3-carboxylpyrazol-5-on, 1-(3'- oder 4'-Aminophenyl)- oder 1-(6'-Amino- 4',8'-dihydroxysulfonylnaphth-2'-yl)-3-carboxylpyrazol-5-on.

Besonders bevorzugt sind Farbstoffe der Formel X

E-N=N-K¹ (X),

in der E die obengenannte Bedeutung besitzt und K¹ für den Rest einer Kupplungskomponente der Benzol-, Naphthalin-, Pyrazol- oder Pyridinreihe steht, der gegebenenfalls weitere faserreaktive Gruppen aufweist, insbesondere die Gruppe E, die Gruppe der Formel SO₂-Y, worin Y die obengenannte Bedeutung besitzt, oder solche der Halogentriazinreihe.

Insbesondere werden Reaktivfarbstoffe mit aminosubstituierten Naphthalinen als Kupplungskomponenten bevorzugt, von denen sich vor allem die in 1-Position gekuppelten 2-Aminonaphthalinsulfonsäuren aufgrund ihrer besonders guten Lichtechtheit auszeichnen. Die Farbstoffe der allgemeinen Formel XI 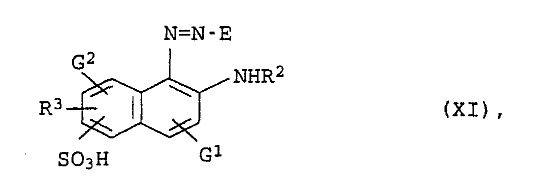 in der
- G¹: Wasserstoff oder Hydroxysulfonyl und
- G²: Wasserstoff oder Hydroxy bedeuten und
E, R² und R³ die obengenannte Bedeutung haben, sind daher vor allem bevorzugt.

Aus der Gruppe der Reaktivfarbstoffe der Formel XI sind diejenigen hervorzuheben, in denen R² und/oder R³ für Wasserstoff, C₁-C₄-Alkyl, das durch Hydroxysulfonyl oder Carboxyl substituiert ist, insbesondere für Wasserstoff, Hydroxysulfonylmethyl oder Carboxymethyl, steht.

Natürlich sind aus der Gruppe der Farbstoffe der allgemeinen Formel XI diejenigen mit den bevorzugten Ankerresten der Formel IIa oder IIb ebenfalls bevorzugt. Sie sind Verbindungen der allgemeinen Formel XIa und XIb 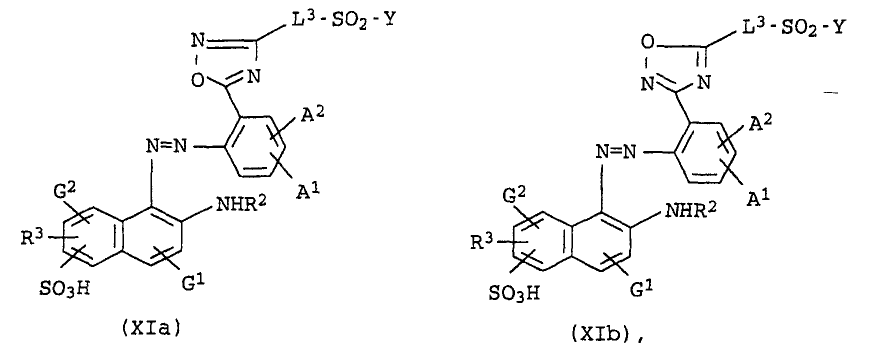 worin
- A¹ und A²: unabhängig voneinander Wasserstoff, Nitro, Amino, Hydroxysulfonyl oder einen Rest der Formel SO₂C₂H₄OSO₃H und
- L³: C₁-C₄-Alkylen
- G¹: Wasserstoff oder Hydroxysulfonyl,
- G²: Wasserstoff oder Hydroxy und,
- R² und R³: unabhängig voneinander Wasserstoff, Hydroxysulfonylmethyl oder Carboxymethyl
bedeuten und Y die obengenannte Bedeutung hat.

Weiterhin besonders bevorzugt sind Farbstoffe der Formeln XIIa und XIIb 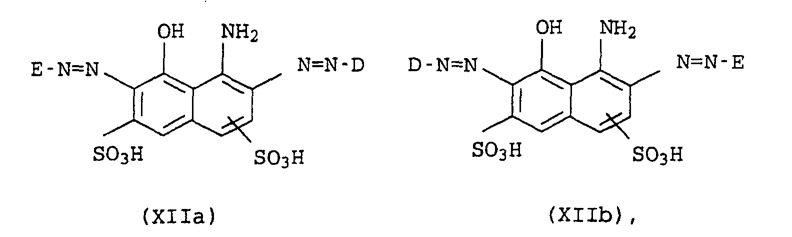 in denen der Rest E die obengenannte Bedeutung hat und D für den Rest einer Diazokomponente der Anilin- oder Naphthalinreihe steht, der gegebenenfalls weitere faserreaktive Gruppen, insbesondere die Gruppe E, die Gruppe SO₂Y oder solche der Halogentriazinreihe aufweist.

Weiterhin besonders bevorzugt sind Reaktivfarbstoffe der Formel XIII 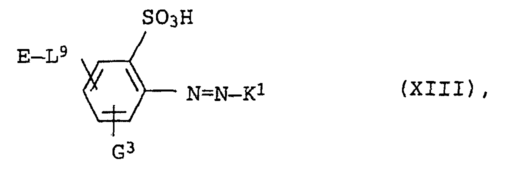 in der E und K¹ jeweils die obengenannte Bedeutung besitzen,
- L⁹: einen Rest der Formel O₂S-NZ¹, OC-NZ¹, Z¹N-SO₂, Z¹N-CO, Z¹N-CO-NZ², NZ¹ oder 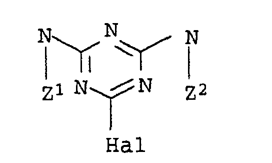 worin Z¹, Z² und Hal jeweils die obengenannte Bedeutung besitzen und
G³ Wasserstoff, C₁-₄-Alkyl, C₁-C₄-Alkoxy, Chlor oder Hydroxysulfonyl bedeuten.

Weiterhin besonders bevorzugt sind Reaktivfarbstoffe der Formel XIV 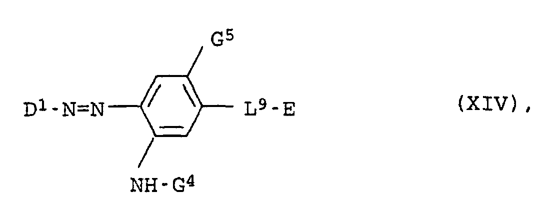 in der D¹, E und L⁹ jeweils die obengenannte Bedeutung besitzen,
- G⁴: für C₁-C₄-Alkanoyl, Carbamoyl, Mono- oder Di-(C₁-C₄)-alkylcarbamoyl, Phenylcarbamoyl oder Cyclohexylcarbamoyl und
- G⁵: für Wasserstoff, C₁-C₄-Alkyl, C₁-C₄-Alkoxy, Hydroxysulfonyl oder Chlor stehen.

Weiterhin besonders bevorzugt sind Reaktivfarbstoffe der Formel XV 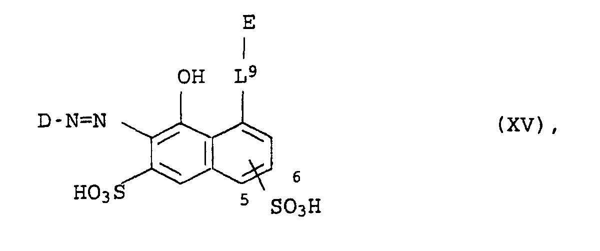 in der D, E und L⁹ jeweils die obengenannte Bedeutung besitzen und die Hydroxysulfonylgruppe in Ringposition 5 oder 6 steht.

Weiterhin besonders bevorzugt sind Reaktivfarbstoffe der Formel XVI 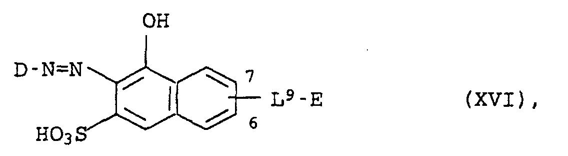 in der D, E und L⁹ jeweils die obengenannte Bedeutung besitzen und die Gruppe -L⁹-E in Ringposition 6 oder 7 steht.

Weiterhin sind wertvolle Verbindungen solche der Formel XVII 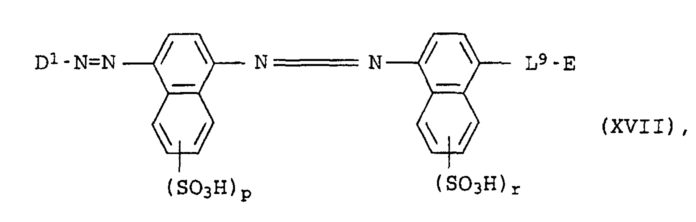 in der D¹, E und L⁹ jeweils die obengenannte Bedeutung besitzen und p und r unabhängig voneinander jeweils für 0, 1 oder 2 stehen.

Weiterhin sind wertvolle Verbindungen solche der Formel XVIII 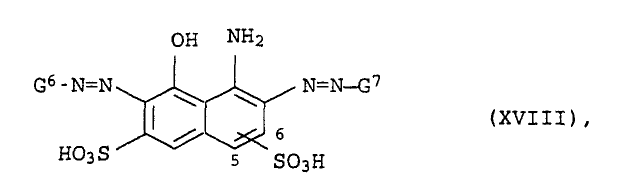 in der einer der beiden Reste G⁶ und G⁷ für den Rest D, wobei dieser die obengenannte Bedeutung besitzt,
und der andere für den Rest 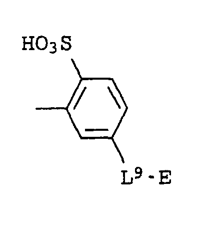 oder auch beide Reste G⁶ und G⁷ für den Rest 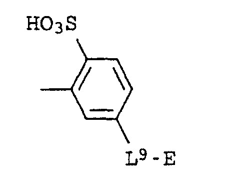 stehen, wobei L⁹ und E jeweils die obengenannte Bedeutung besitzen.

Anstelle der Azofarbstoffreste können die Farbstoffe der Formel I auch entsprechende Metallkomplexazofarbstoffreste enthalten. Als komplexierende Metalle kommen dabei insbesondere Kupfer, Kobalt Chrom, Nickel oder Eisen in Betracht, wobei Kupfer, Kobalt oder Chrom bevorzugt sind.

Dabei befinden sich die metallisierten Gruppen vorzugsweise jeweils in ortho-Stellung zur Azogruppe, z. B. in Form von o,o'-Dihydroxy-, o-Hydroxy-o'-carboxy-, o-Carboxy-o'-amino- oder o-Hydroxy-o'-amino-azogruppierungen.

W in Formel I stellt weiterhin z.B. den Rest eines metallisierten Formazanfarbstoffs dar, wobei insbesondere Kupferformazane zu nennen sind. Kupferformazane sind an sich bekannt und beispielsweise in K. Venkataraman "The Chemistry of Synthetic Dyes", Vol. III, Academic Press, New York, London, 1970, beschrieben.

Besonders bevorzugt sind Kupfer-Formazanfarbstoffe der Formel XIX 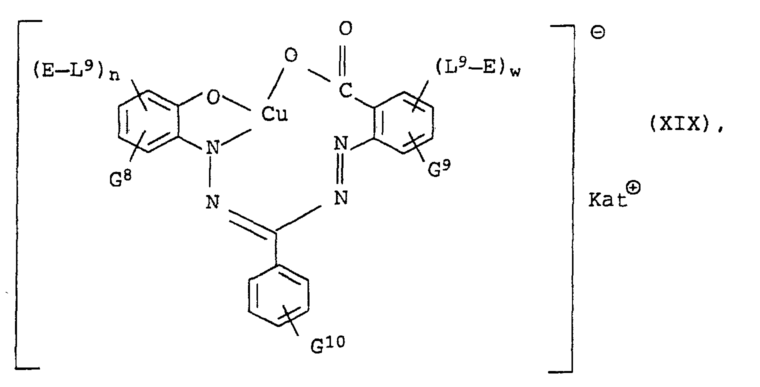 in der
- Kat^{⊕}: das Äquivalent eines Kations ist
- G⁸, G⁹ und G¹⁰: gleich oder verschieden sind und unabhängig voneinander jeweils Wasserstoff oder Hydroxysulfonyl
- n: 0 oder 1 und
- w: 0 oder 1 bedeuten und
- E: und L⁹ jeweils die obengenannte Bedeutung besitzen, mit der Maßgabe, daß n und w nicht gleichzeitig 0 bedeuten.

Kat^{⊕} in Formel XIX stellt das Äquivalent eines Kations dar. Es ist entweder ein Proton oder leitet sich von Metall- oder Ammoniumionen ab. Metallionen sind insbesondere die Lithium-, Natrium- oder Kaliumionen. Unter Ammoniumionen im erfindungsgemäßen Sinne sind die bereits oben genannten unsubstituierten oder substituierten Ammoniumkationen zu verstehen.

Besonders als Kationen hervorzuheben sind Protonen oder Lithium-, Natrium- oder Kaliumionen, wobei die genannten Metallkationen auch bevorzugte Kationen sind, wenn die Reaktivfarbstoffe XIX in Salzform vorliegen.

Eine Methode zur Herstellung der diesen Farbstoffen zugrundeliegenden Formazane ist beispielsweise in der EP-A-315 046 beschrieben.

W in Formel I stellt weiterhin z.B. den Rest eines Anthrachinonfarbstoffs dar. Anthrachinone sind an sich bekannt und beispielsweise in K. Venkataraman "The Chemistry of Synthetic Dyes", Vol. II, Academic Press, New York, 1952, beschrieben.

Besonders bevorzugt sind Anthrachinonfarbstoffe der Formel XX 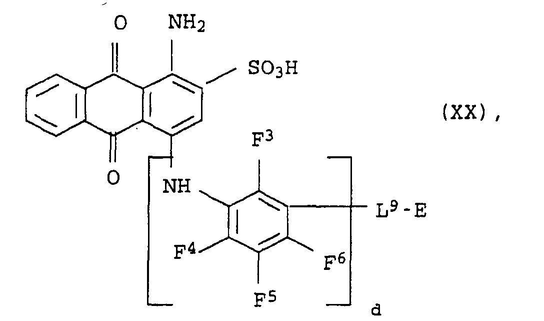 worin E und L⁹ jeweils die obengenannte Bedeutung besitzen,
- d: 0 oder 1
- F³ und F⁴: unabhängig voneinander jeweils Wasserstoff oder Methyl
und einer der beiden Reste F⁵ und F⁶ Wasserstoff oder Methyl und der andere Hydroxysulfonyl bedeuten.

W in Formel I stellt weiterhin z.B. den Rest eines Triphendioxazinfarbstoffs dar. Triphendioxazine sind an sich bekannt und beispielsweise in der EP- 359 oder EP-A-311 969 beschrieben.

Besonders bevorzugt sind Triphendioxazinfarbstoffe der Formel XXI 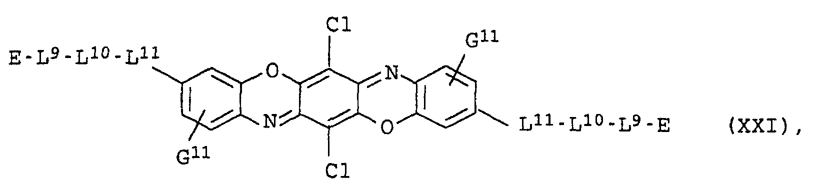 in der
- E und L⁹: jeweils die obengenannte Bedeutung besitzen und
- G¹¹: für Hydroxysulfonyl oder den Rest SO₂-C₂H₄-SO₃H,
- L¹⁰: für C₂-C₄-Alkylen oder Phenylen und
- L¹¹: für Sauerstoff, Imino oder C₁-C₄-Alkylimino stehen.

W in Formel I stellt weiterhin z.B. den Rest eines metallisierten Phthalocyaninfarbstoffs dar. Phthalocyanine sind an sich bekannt und beispielsweise in F.H. Moser, D.L. Thomas "The Phthalocyanines", Vol. II, CRC Press, Boca Raton, Florida 1983, beschrieben.

Besonders bevorzugt sind Phthalocyaninfarbstoffe der Formel XXII 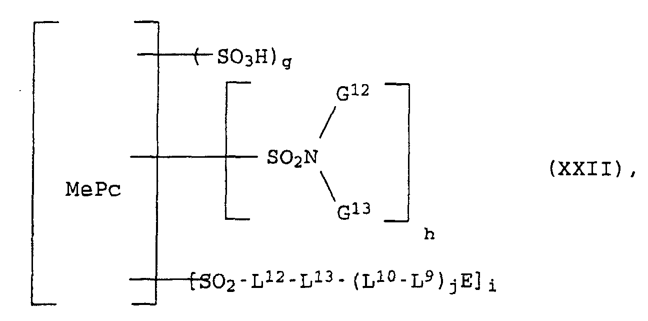 in der
- Pc: den Phthalocyaninrest,
- G¹²: und G¹³ unabhängig voneinander jeweils Wasserstoff oder C₁-C₄-Alkyl,
- L¹²: Imino oder C₁-C₄-Alkylimino,
- L¹³: eine direkte Bindung oder C₁-C₄-Alkylen,
- Me: Kupfer oder Nickel,
- g: 0, 1 oder 2,
- h: 0, 1 oder 2,
- i: 1 oder 2 und
- j: 0, 1, 2 oder 3 bedeuten
und E, L⁹ und L¹⁰ jeweils die obengenannte Bedeutung besitzen.

Die Herstellung der neuen Reaktivfarbstoffe der Formel I kann nach an sich bekannten Methoden erfolgen.

Wenn der Rest W eine Kupplungskomponente darstellt, gelangt man zu den erfindungsgemäßen Farbstoffen, indem man z.B. die faserreaktive Verbindung der Formel XXIII

H₂N-E (XXIII),

in der E die obengenannte Bedeutung besitzt, auf an sich bekannte Weise diazotiert und mit einer Kupplungskomponente der Formel XXIV

W¹-H (XXIV)

kuppelt, in der W¹ den Rest einer Kupplungskomponente, eines Monoazofarbstoffs oder zusätzlich, wenn b=O, eines Disazofarbstoffs ist, die gegebenenfalls weitere faserreaktive Gruppen aufweisen, bedeutet.

Beispielsweise kann man einen geeigneten Farbstoff der Formel XXV

W²-G¹⁴ (XXV),

in der W² den Rest eines Chromophors, der gegebenenfalls weitere faserreaktive Gruppen aufweist und der sich von einem gegebenenfalls metallisierten Mono- oder Disazofarbstoff, einem Triphendioxazin, einem Anthrachinon, einem metallisierten Formazan oder einem metallisierten Phthalocyanin ableitet und G¹⁴ einen Aminorest der Formel NHZ¹ oder einen Säurehalogenidrest der Formel CO-Hal oder SO₂Hal, worin Z¹ und Hal jeweils die obengenannte Bedeutung besitzen, bedeuten, mit einer faserreaktiven Verbindung der Formel XXVI

G¹⁵-E (XXVI),

in der E die obengenannte Bedeutung besitzt und G¹⁵ einen der Reste G¹⁴ bedeutet umsetzen, mit der Maßgabe, daß jeweils ein Amin mit einem Säurehalogenid reagiert.

Wenn L¹ (Fall 2) eine Harnstoffbrücke oder einen Triazinrest darstellt, fügt man die bei diesen Stoffklassen üblichen Syntheseschritte ein.

Es ist auch möglich, von solchen Vorprodukten der Verbindungen der Formel XXV auszugehen, die ein Teil des späteren Chromophors sind, und sie zunächst mit der faserreaktiven Verbindung XXVI umzusetzen und anschließend den Chromophorrest W² aufzubauen.

Wenn b in Formel I den Wert 1 bedeutet, so kann man zu den verbrückten Chromophoren z.B. auf die Weise gelangen, daß man entweder die fertigen Einzelchromophore verbrückt oder aber zunächst geeignete Zwischenprodukte verbrückt und danach die jeweiligen chromophoren Systeme aufbaut.

Die Herstellung der faserreaktiven Verbindungen der Formeln XXVI und XXIII ist an sich bekannt und beispielsweise in der DE-A 195 28 189 beschrieben.

So kann man von Zwischenprodukten ausgehen, die geeignet sind, den Heterocyclus, der dem Rest Het zugrundeliegt, aufzubauen.

Dies wird in den folgenden Syntheseschemata in dem L³, Y, A¹ und A² die obengenannte Bedeutung haben und Hal, Chlor oder Brom bedeuten, für den Fall näher erläutert, in dem sich Het von 1,2,4-Oxadiazol ableitet.

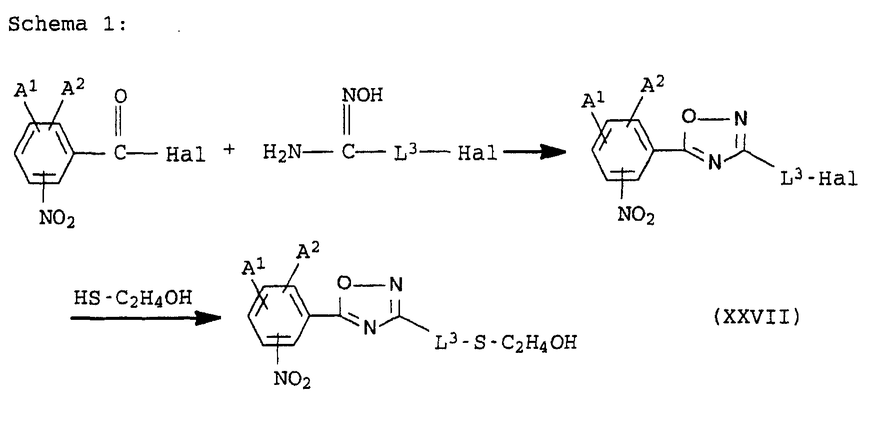

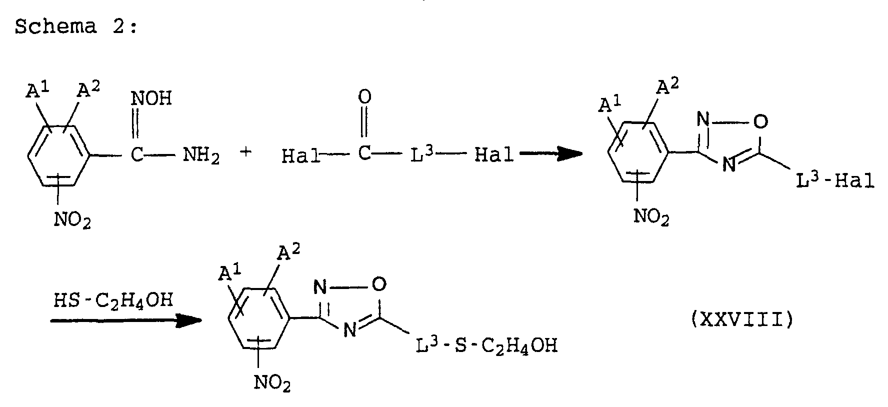

In den beiden heterocyclischen Zwischenprodukten XXVII und XXVIII werden anschließend in beliebiger Reihenfolge und auf an sich bekanntem Wege die Nitrogruppe zur Aminogruppe reduziert, das Sulfid zum Sulfon oxidiert und die Hydroxyethylgruppe in eine unter alkalischen Reaktionsbedingungen abspaltbare Gruppe überführt.

Die neuen Reaktivfarbstoffe der Formel I eignen sich in vorteilhafter Weise zum Färben oder Bedrucken von Hydroxygruppen oder Stickstoffatome aufweisenden organischen Substraten. Solche Substrate sind beispielsweise Leder oder Fasermaterial, das überwiegend natürliche oder synthetische Polyamide oder natürliche oder regenerierte Cellulose enthält. Vorzugsweise eignen sich die neuen Farbstoffe zum Färben und Bedrucken von Textilmaterial auf der Basis von Wolle oder insbesondere von Baumwolle.

Insbesondere auf Substraten auf Basis von Cellulose werden farbstarke Färbungen mit sehr hoher Fixierausbeute erhalten, die eine sehr gute Lichtechtheit sowie vorzügliche Naßechtheiten, wie Wasch-, Chlorbleich-, Peroxidbleich-, Alkali-, Meerwasser- oder Schweißechtheit, aufweisen.

Die folgenden Beispiele sollen die Erfindung näher erläutern.

### Beispiel 1

### Herstellung des Oxadiazolankers

a) 3-(2-Hydroxyethylsulfonyl)propionsäurenitril
   328 g (2,50 mol) 3-[(2-Hydroxyethyl)thio]propionsäurenitril in 500 ml Wasser wurden mit 10 ml Eisessig, 2 g Natriumacetat und 2 g Natriumwolframat-dihydrat versetzt und anschließend bei einer Temperatur von 60 bis 70°C innerhalb von 4 h 520 ml (5,09 mol) 30 gew.-%iges wäßriges Wasserstoffperoxid zugetropft. Um den angegebenen Temperaturbereich zu halten, mußte zeitweise mit Eiswasser gekühlt werden. Nach dem Abkühlen wurde überschüssiges Wasserstoffperoxid mit Natriumdithionit vernichtet und das Lösungsmittel unter vermindertem Druck abdestilliert. Der ölige Rückstand wurde mit 200 ml Aceton digeriert und vom Niederschlag abfiltriert. Das Filtrat wurde unter vermindertem Druck zur Trockne eingeengt. Es fielen 405 g eines zähflüssigen Öls mit einem Reingehalt an 3-(2-Hydroxyethylsulfonyl)propionsäurenitril von 86,4 % an (85,8 % d.Th.).

   NC―C₂H₄SO₂C₂H₄OH
b) 3-(2-Hydroxyethylsulfonyl)propionamidoxim
   Zu einer Lösung von 163 g (1,00 mol) der unter a) beschriebenen Verbindung und 69,5 g (1,00 mol) Hydroxylammoniumchlorid in 1 Liter Methanol wurden 190 ml (1,00 mol) einer 30 gew.-%igen Lösung von Natriummethanolat in Methanol getropft. Das Reaktionsgemisch wurde 6 h unter Rückfluß zum Sieden erhitzt. Nach dem Abkühlen wurde der Niederschlag abgesaugt und unter vermindertem Druck bei 50°C getrocknet. Es wurden 151 g eines hellbraunen mikrokristallinen Pulvers mit einem Gehalt an 3-(2-Hydroxyethylsulfonyl)propionamidoxim von 71,4 % erhalten (55,0 % d.Th.). 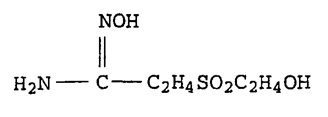
c) 5-(2'-Aminophenyl)-3-[2-(2-hydroxyethylsulfonyl)ethyl]-1,2,4-oxadiazol
   In eine auf 50°C erwärmte Lösung von 98,1 g (0,50 mol) der unter b) beschriebenen Verbindung in 1 Liter 1-Methoxypropan-2-ol wurden 81,6 g (0,50 mol) Isatosäureanhydrid langsam eingetragen und das Reaktionsgemisch nach Beendigung der Gasentwicklung 6 h unter Rückfluß zum Sieden erhitzt. Das Lösungsmittel wurde anschließend unter vermindertem Druck abdestilliert, der verbliebene Rückstand mit Isopropanol überschichtet und der ausgefallene Niederschlag abgesaugt. Ausbeute 76,8 g (51,7 % d.Th.), beiges Pulver, Schmp. 118 bis 119°C, der Formel 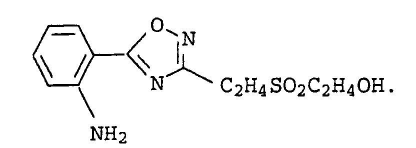
d) 5- (2'-Aminophenyl)-3-[2-(2-sulfatoethylsulfonyl)ethyl]-2,2,4-oxadiazol
   59,4 g (0,2 mol) 5-(2'-Aminophenyl)-3-[2-(2-hydroxyethylsulfonyl)ethyl]-1,2,4-oxadiazol wurde bei 10 bis 15°C in 100%ige Schwefelsäure eingetragen und 1 h bei 35 bis 40°C gerührt. Die Reaktionslösung wurde auf 210 g Eis gegossen und der entstandene Niederschlag unter Anlegen eines Vakuums filtriert und mit wenig Eiswasser gewaschen. Es wurden 98,8 g der Verbindung der Formel 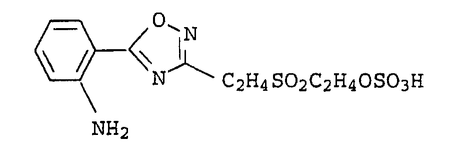 als feuchtes beiges Pulver erhalten.
e) Sulfonierung
   59,4 g (0,2 mol) 5-(2'-Aminophenyl)-3-[2-(2-hydroxyethylsulfonyl)ethyl]-1,2,4-oxadiazol wurden bei 10 bis 15°C in 100%ige Schwefelsäure eingetragen und 1 h bei 40°C gerührt. Anschließend wurden bei 40°C portionsweise 240 ml 24 gew.-%iges Oleum innerhalb von 20 h zugegeben und 8 h auf 60°C erhitzt. Die Reaktionslösung wurde auf Eis gegossen, der pH-Wert mit Natriumhydrogencarbonat auf pH 4 bis 5 gestellt und das Produkt mit 500 g Kaliumchlorid ausgesalzen. Es wurden 95,3 g 5-(2'-Amino-5'-sulfophenyl)-3-[2-(2-hydroxyethylsulfonyl)ethyl]-1,2,4-oxadiazol erhalten.
   Wurde anstelle des 24 gew.-%igen Oleums 65 gew.-%iges Oleum bei 10 bis 15°C zugetropft, 2 h bei 40°C und 6 h bei 75°C gerührt, so erhielt man nach Ausgießen der Reaktionslösung auf Eis, Einstellen des pH-Wertes mit Natriumhydrogencarbonat auf 5, anschließender Filtration von gebildetem Natriumsulfat und Aussalzen mit Kaliumchlorid die 3,5-disulfonierte Verbindung der Formel

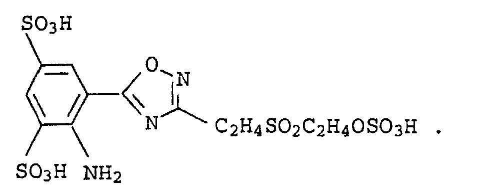

### Herstellung der Farbstoffe

### Beispiel 1.1

20 g (0,05 mol) 5- (2-Aminophenyl)-3-[2-(2-sulfatoethylsulfonyl)-ethyl]-1,2,4-oxadiazol wurden in 200 ml Eiswasser angerührt, mit 20 ml 10N Salzsäure versetzt und unter Rühren bei einer Temperatur von 0 bis 5°C durch Zutropfen von 15 ml 23 gew.-%iger wäßriger Natriumnitritlösung diazotiert. Nach 2-stündigem Rühren bei 0 bis 5°C wurde der geringe Überschuß an salpetriger Säure mit Amidosulfonsäure zerstört.

Zu dieser Lösung wurden bei einer Temperatur von 0 bis 5°C 22 g (0,053 mol) 2-Amino-8-hydroxy-3,6-disulfonsäure gegeben und die Reaktionslösung mit Natriumacetat bei pH 2,5 bis 3 gehalten. Nach Beendigung der Reaktion ließ man auf Raumtemperatur erwärmen und stellte den pH-Wert mit Natriumcarbonat auf 5 bis 5,5 ein. Durch Zugabe von 100 g Natriumchlorid wurde das Produkt ausgefällt und 40,2 g (0,046 mol) des roten Farbstoffs 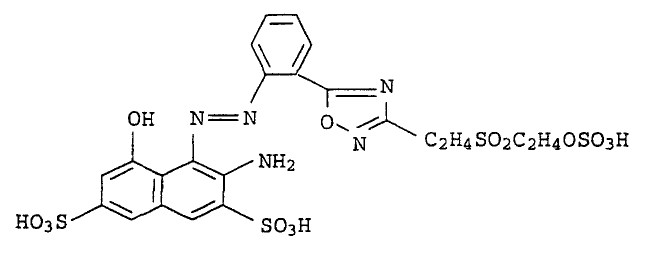 erhalten.

In analoger Weise wurden die in der folgenden Tabelle 1 aufgeführten Farbstoffe erhalten.

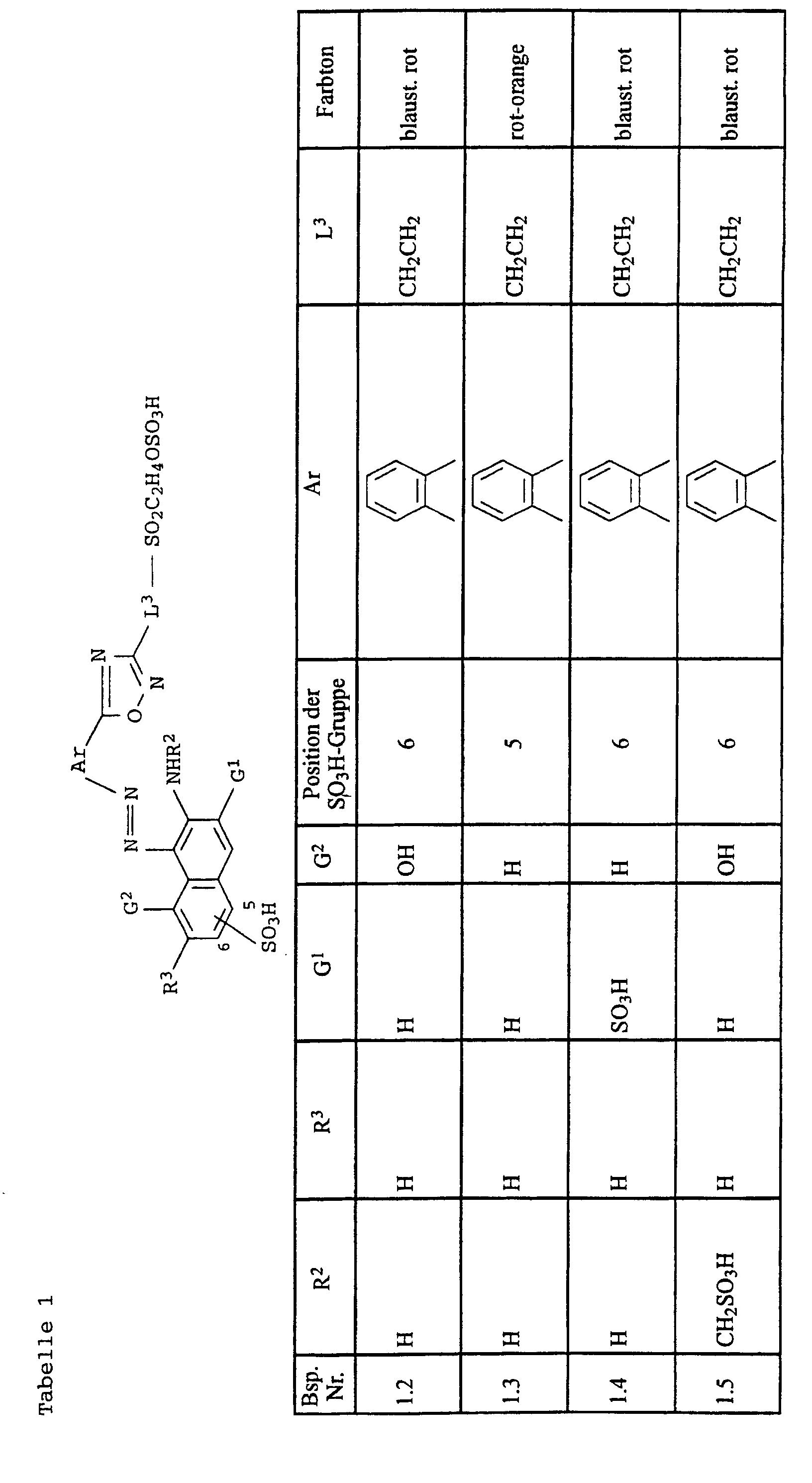

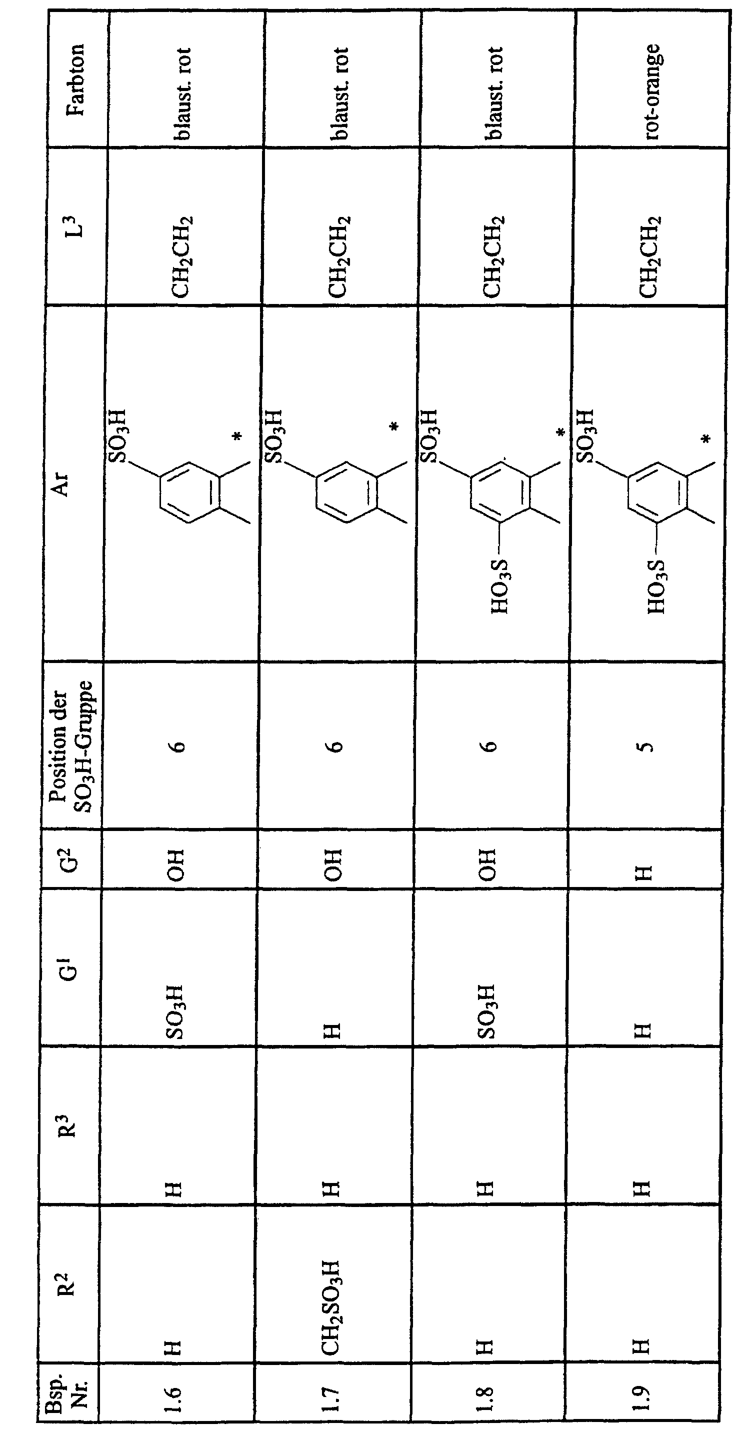

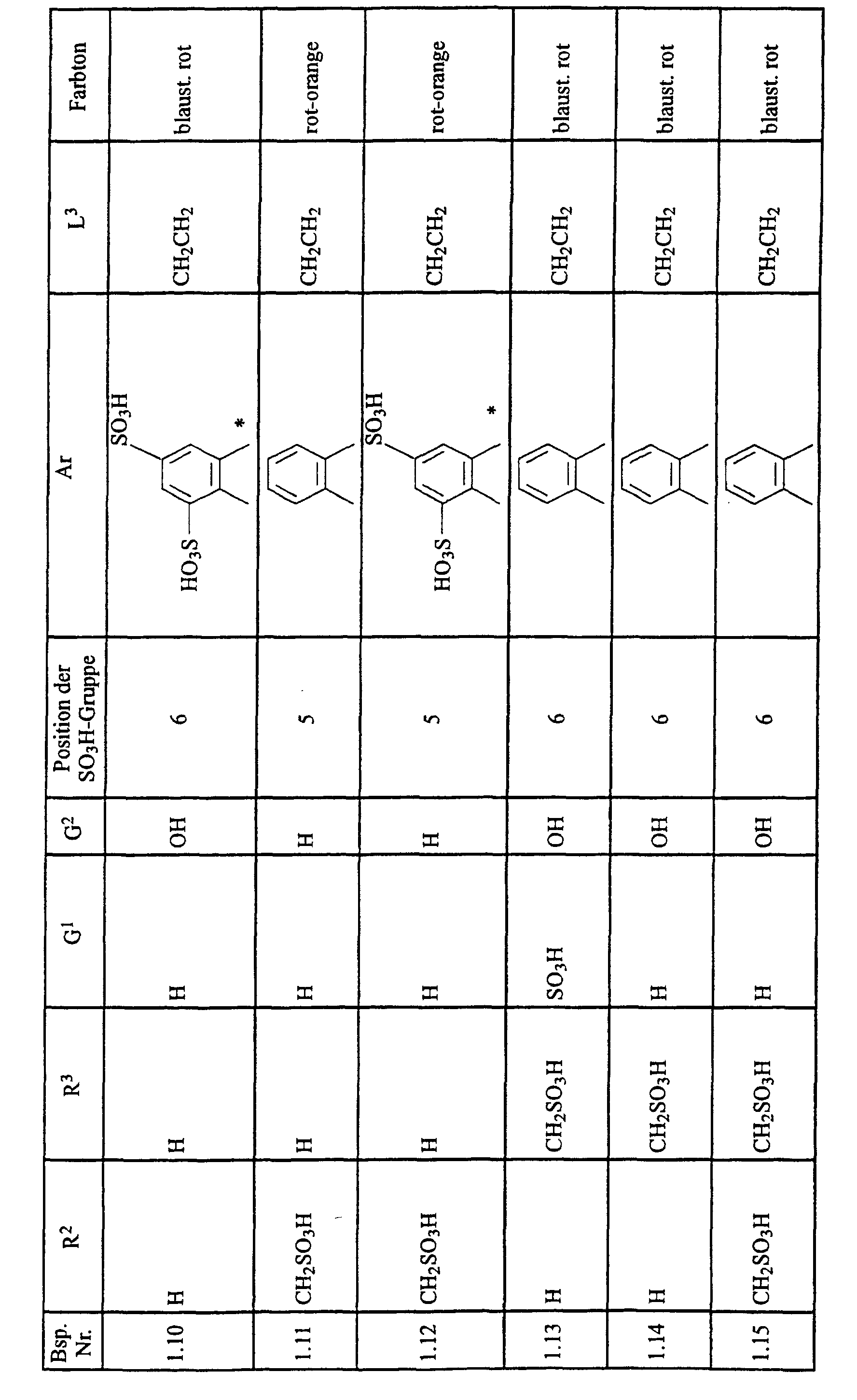

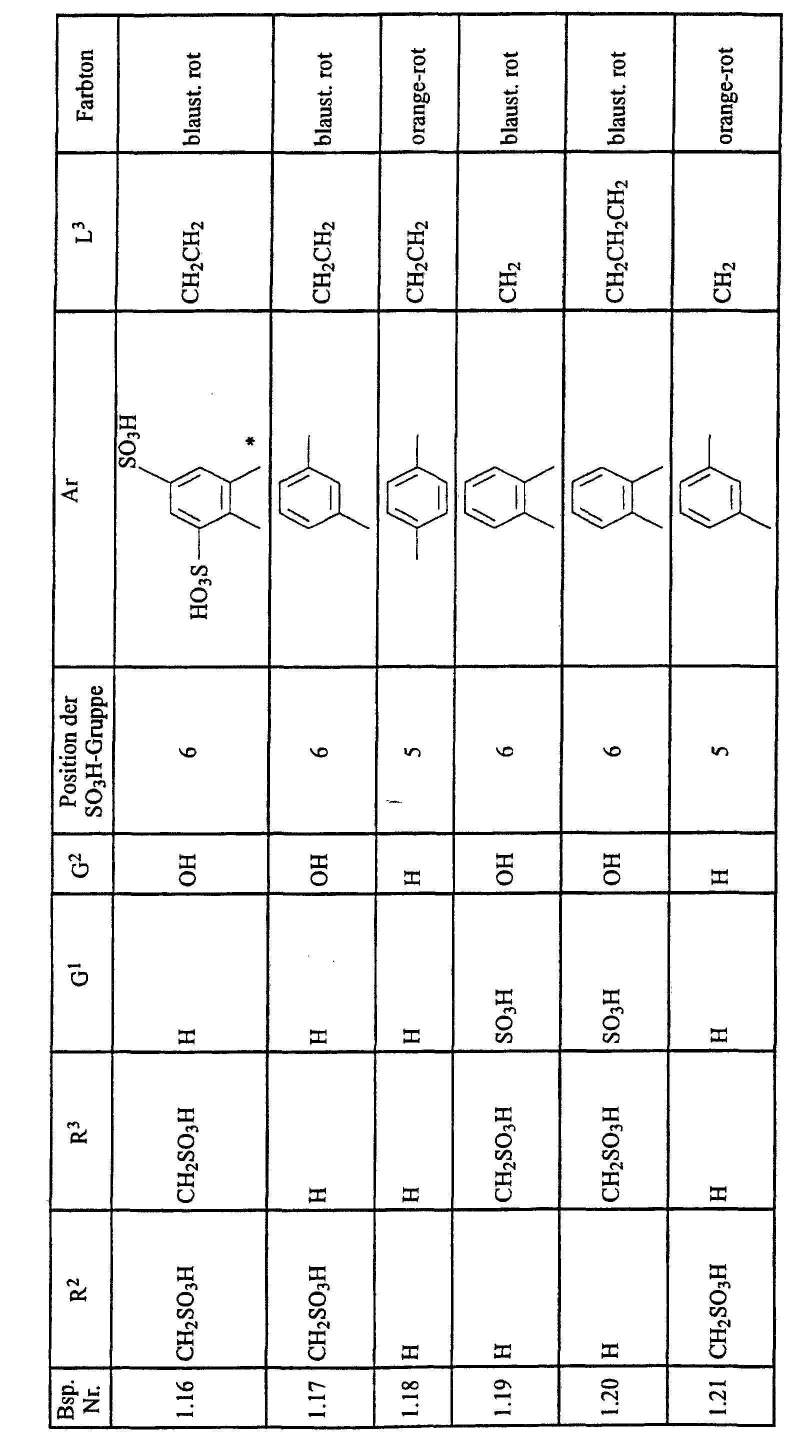

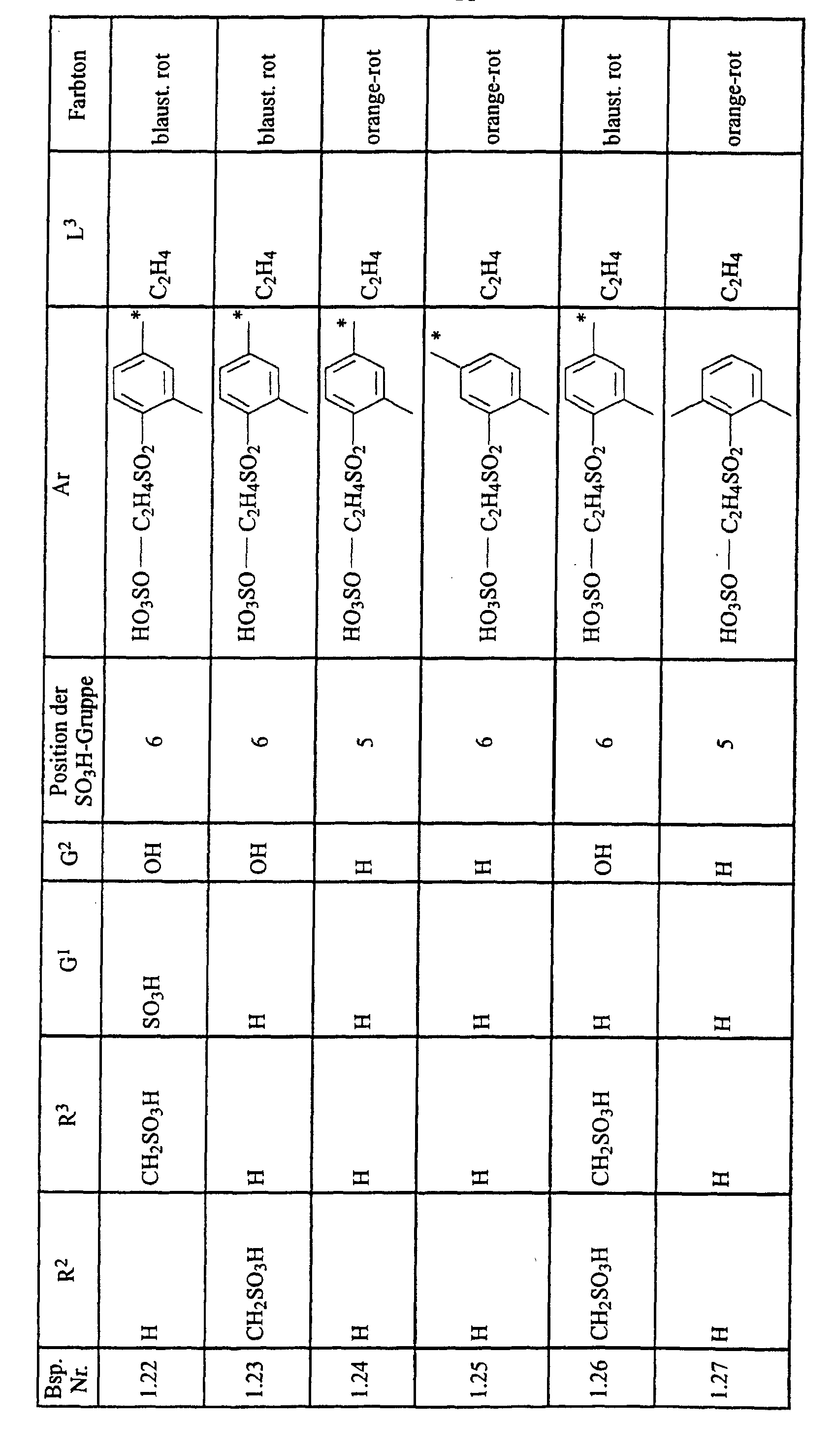

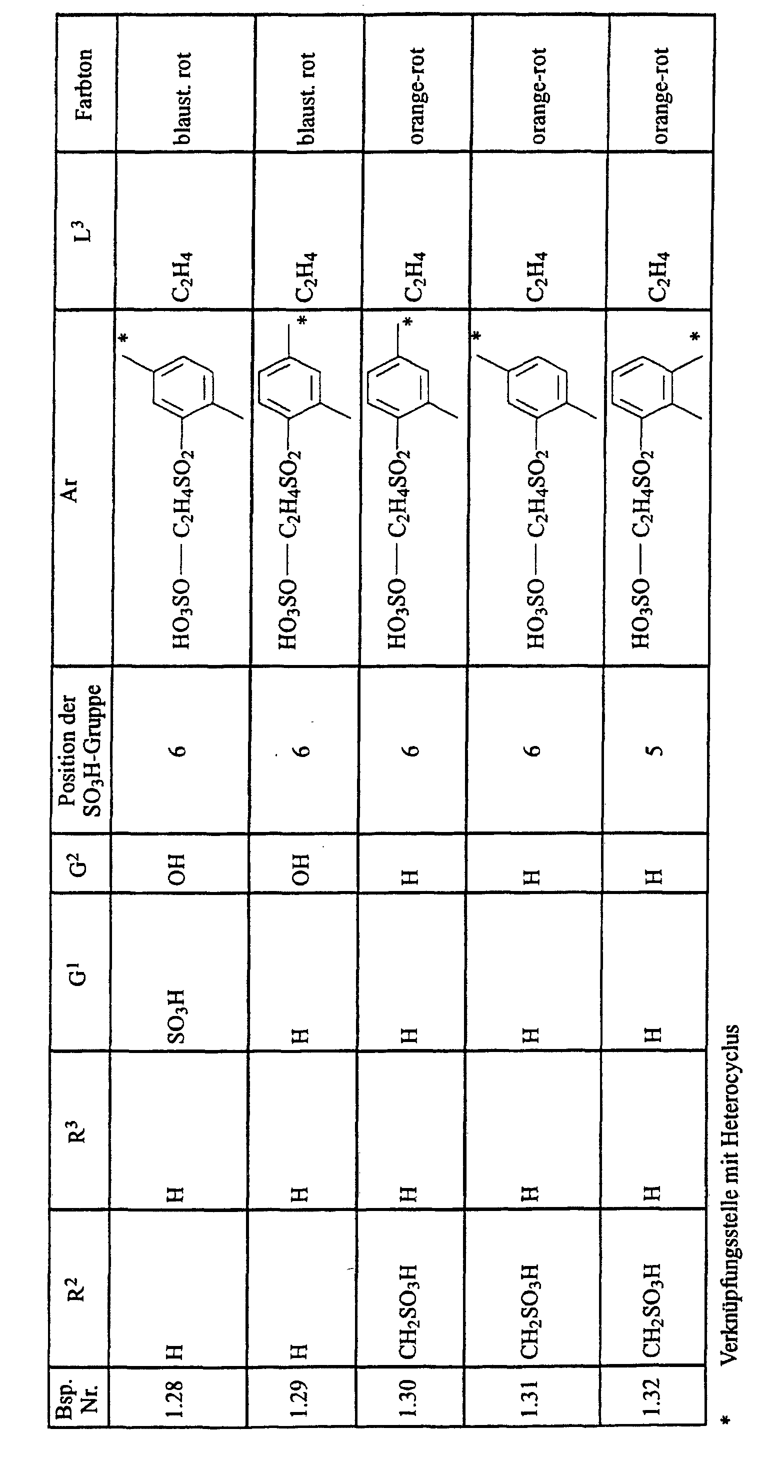

### Beispiel 2

### Herstellung des Oxadiazolankers

a) 3-[(2-Hydroxyethylthio)methyl]-5-(3'-nitrophenyl)-1,2,4-oxadiazol
   Ein Gemisch aus 132 g (0,55 mmol) 3-Chlormethyl-5-(3'-nitrophenyl)-1,2,4-oxadiazol (zugänglich durch Umsetzung von 3-Nitrobenzoylchlorid mit Chloracetamidoxim), 39,0 ml (0,56 mol) Mercaptoethanol und 80 ml Triethylamin in 700 ml 1-Methoxy-propan-2-ol wurde 4 h auf 100°C erhitzt und nach dem Abkühlen auf Eiswasser gegeben. Der dabei ausgefallene Feststoff wurde abgesaugt, mit Wasser gewaschen und unter vermindertem Druck bei 40°C getrocknet. 142 g der Verbindung der Formel 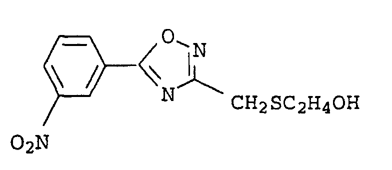 wurden erhalten.
b) 3-[(2-Hydroxyethylsulfonyl)methyl]-5-(3'-nitrophenyl)-1,2,4-oxadiazol
   140 g (0,50 mol) der unter a) beschriebenen Verbindung in 1 Liter Wasser wurden mit 40 ml Eisessig, 20 g Natriumacetat und 1 g Natriumwolframat-dihydrat versetzt und anschließend bei einer Temperatur von 70 bis 80°C innerhalb von 2 h 115 ml (1,13 mol) 30 gew.-%iges wäßriges Wasserstoffperoxid zugetropft. Nach beendeter Zugabe wurde noch 2 h bei 90°C nachgerührt. Der nach dem Abkühlen ausgefallene Feststoff wurde abgesaugt, mit Wasser gewaschen und unter vermindertem Druck bei Raumtemperatur getrocknet. 105 g der Verbindung der Formel 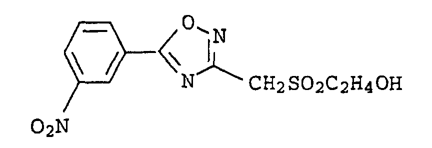 wurden erhalten.
c) 5-(3'-Aminophenyl)-3-[(2-hydroxyethylsulfonyl)methyl]-1,2,4-oxadiazol
   In 110 ml (127 mmol) einer 15 gew.-%igen Lösung von Titantrichlorid in 10 gew.-%iger Salzsäure wurden 6,10 g (19,5 mmol) der unter b) beschriebenen Verbindung eingetragen und das Reaktionsgemisch 20 h bei Raumtemperatur gerührt. Vom verbliebenen Niederschlag wurde abfiltriert, die Mutterlauge mit Natronlauge alkalisch gestellt und der dabei ausgefallene Niederschlag abgesaugt und getrocknet. Anschließend wurde der Niederschlag mit 10 ml Tetrahydrofuran digeriert und vom unlöslichen Rückstand abfiltriert. Das Filtrat wurde unter vermindertem Druck zur Trockne eingeengt und der Rückstand unter vermindertem Druck bei 50°C getrocknet. 1,40 g der Verbindung der Formel 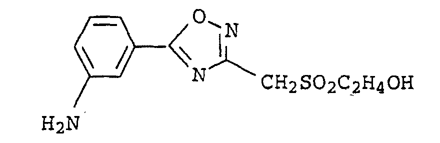 wurden erhalten.
d) 5-(3'-Aminophenyl) -3- [(2-sulfatoethylsulfonyl)methyl] -1,2,4-oxadiazol
   Die unter 2c) beschriebene Verbindung wurde nach der unter 1d) beschriebenen Vorgehensweise sulfatiert.

### Herstellung der Farbstoffe

### Beispiel 2.1

a) 94 g Cyanurchlorid wurden in einer Mischung aus 400 ml Eiswasser, 1 ml 30 gew.-%iger Salzsäure und 0,5 g eines Dispergiermittels dispergiert und bei 0° bis 5°C mit einer Lösung von 126 g Anilin-2,5-disulfonsäure in 250 ml Wasser und 35 ml 50 gew.-%iger Natronlauge versetzt. Nach vierstündigem Rühren bei 0 bis 5°C und einem pH-Wert von 4 bis 5, der mit 47 g Natriumhydrogencarbonat eingehalten wurde, war die Reaktion beendet und das Reaktionsgemisch wurde klärfiltriert.
   Dem Filtrat ließ man eine Lösung von 170 g 1-Amino-8-hydroxynaphthalin-3,6-disulfonsäure (Mononatriumsalz) in 500 ml Wasser und 25 ml 50 gew.-%iger Natronlauge zufließen und hielt dabei ohne weitere Kühlung mit Natriumhydrogencarbonat einen pH-Wert von 4,5 bis 5 ein. Nach Rühren über Nacht bei Raumtemperatur wurde das Kondensat mit 600 g Kochsalz gefällt, abgesaugt, mit 20 gew.-%iger wäßriger Kochsalzlösung gewaschen und bei 50°C unter vermindertem Druck getrocknet
b) 18,2 g der Ankerverbindung der Formel 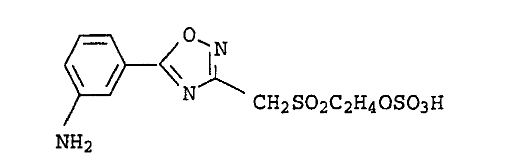 wurden in 200 ml Wasser mit 4 g Natriumhydrogencarbonat bei einem pH-Wert von 4,4 gelöst. Nach Kühlung mit 150 g Eis wurden 18 ml 30 gew.-%ige Salzsäure zugegeben und durch Eintropfen von 15 ml 3,33N wäßriger Natriumnitritlösung diazotiert. Nach 30-minütigem Rühren bei 0° bis 5°C wurde ein leichter Nitritüberschuß mit Amidosulfonsäure entfernt und das Reaktionsgemisch mit einer Lösung von 52 g der unter a) beschriebenen Verbindung (Reinheit: 95 %, Kochsalzgehalt: 20 %) in 200 ml Wasser versetzt. Die Kupplung erfolgte durch Eintropfen einer wäßrigen Natriumacetatlösung bis zu einem pH-Wert von 5.
   Durch Fällung mit 200 g Kaliumchlorid, Absaugen und Trocknen wurde der Farbstoff der Formel 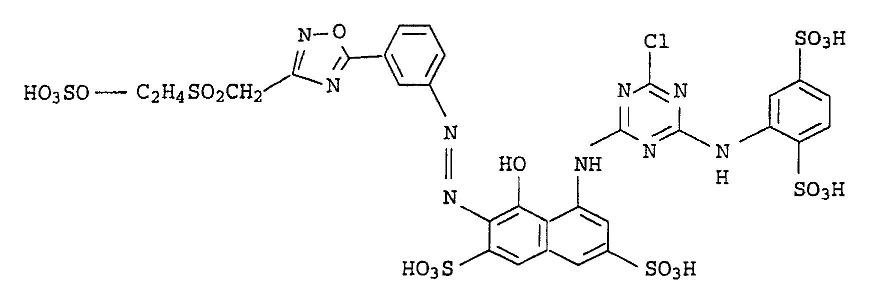 als Pentanatriumsalz isoliert. Es färbt Baumwolle entweder nach dem Ausziehverfahren bei 40 bis 60°C oder nach dem Kaltverweilverfahren bei Raumtemperatur in blaustichigen Rottönen. Die Färbungen zeichnen sich durch sehr gute Gebrauchsechtheiten und hohe Fixiergrade aus und sind sehr unempfindlich gegen Färbetemperaturschwankungen.
   In analoger Weise können die in der folgenden Tabelle 2 aufgeführten Farbstoffe erhalten werden.

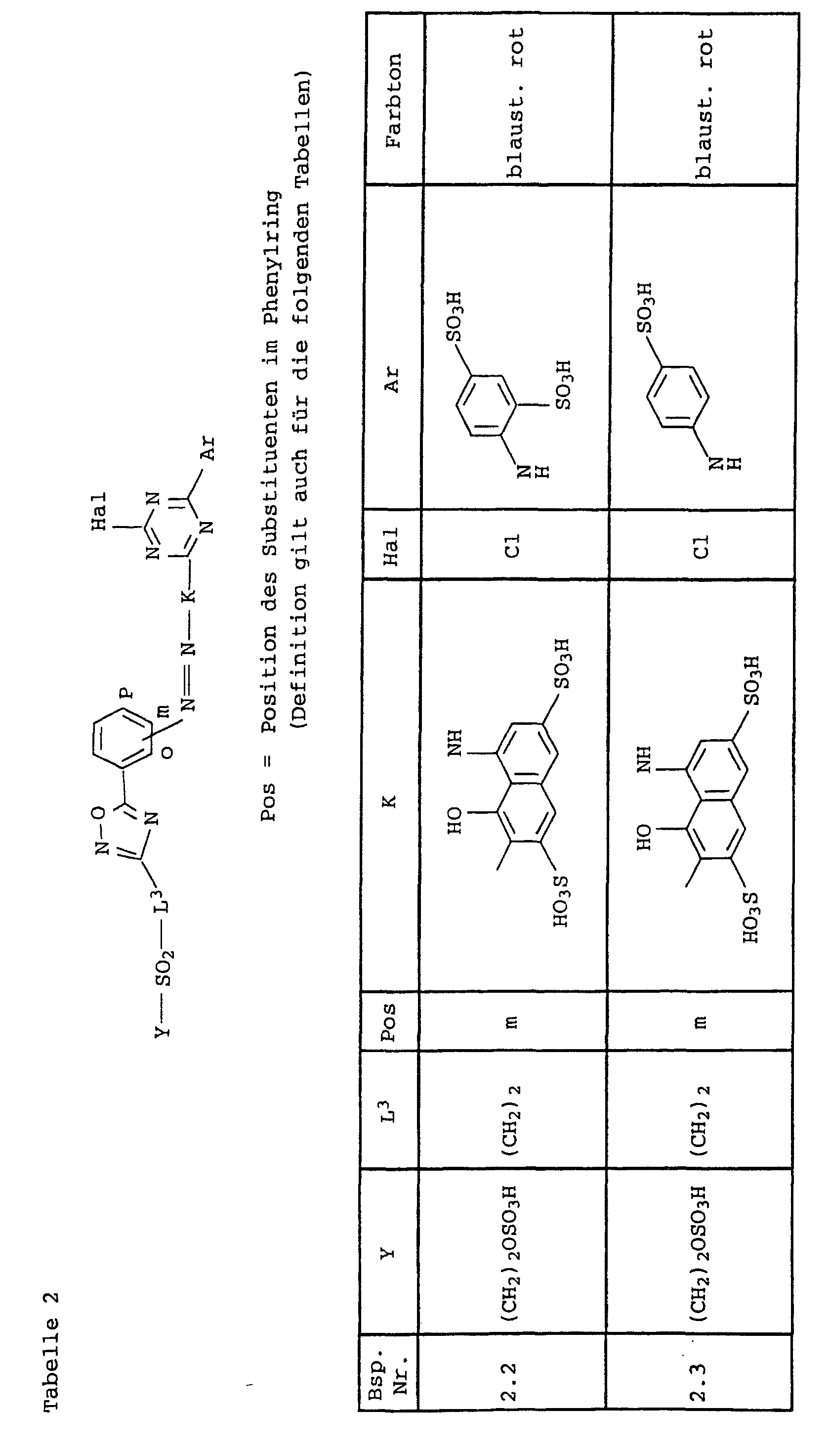

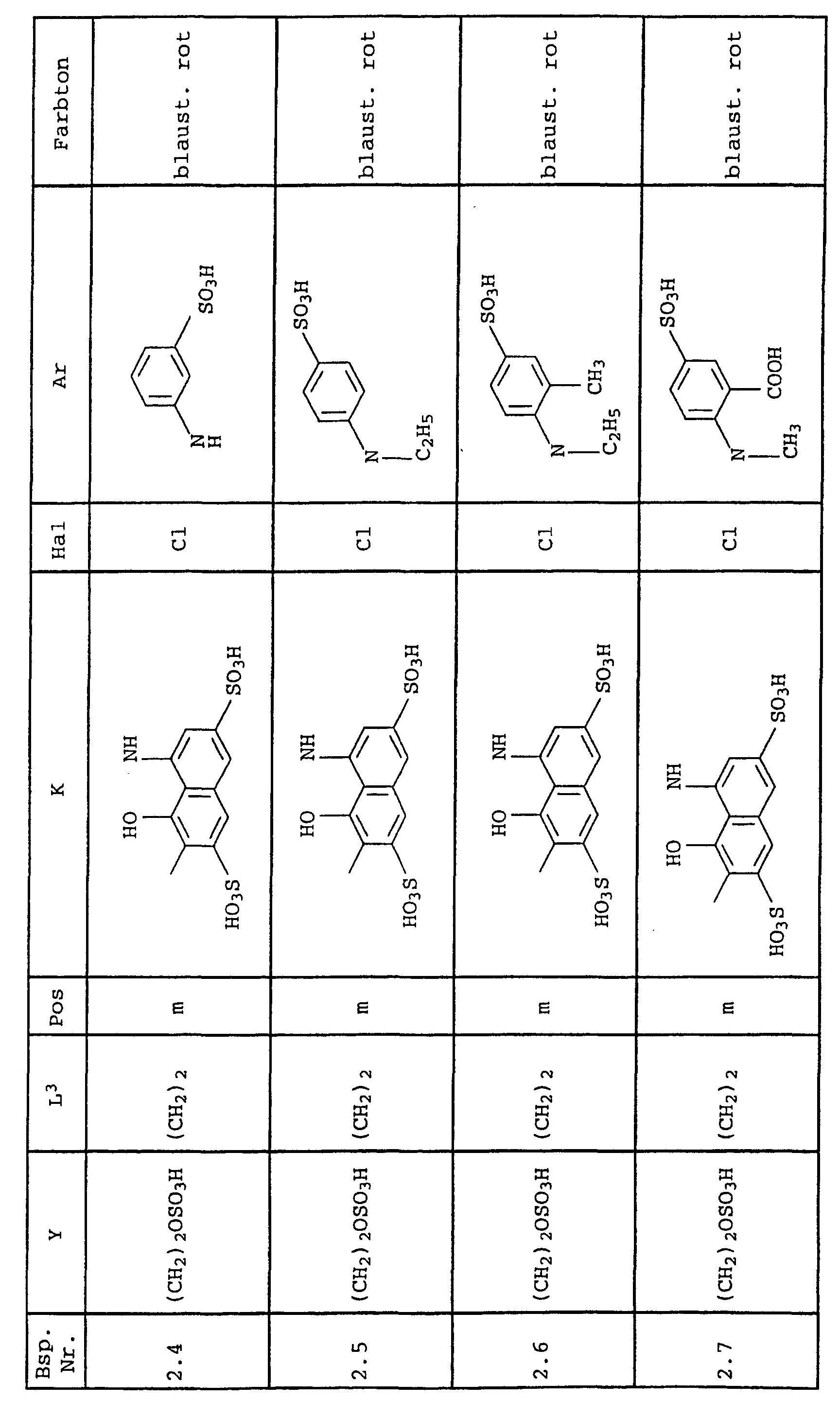

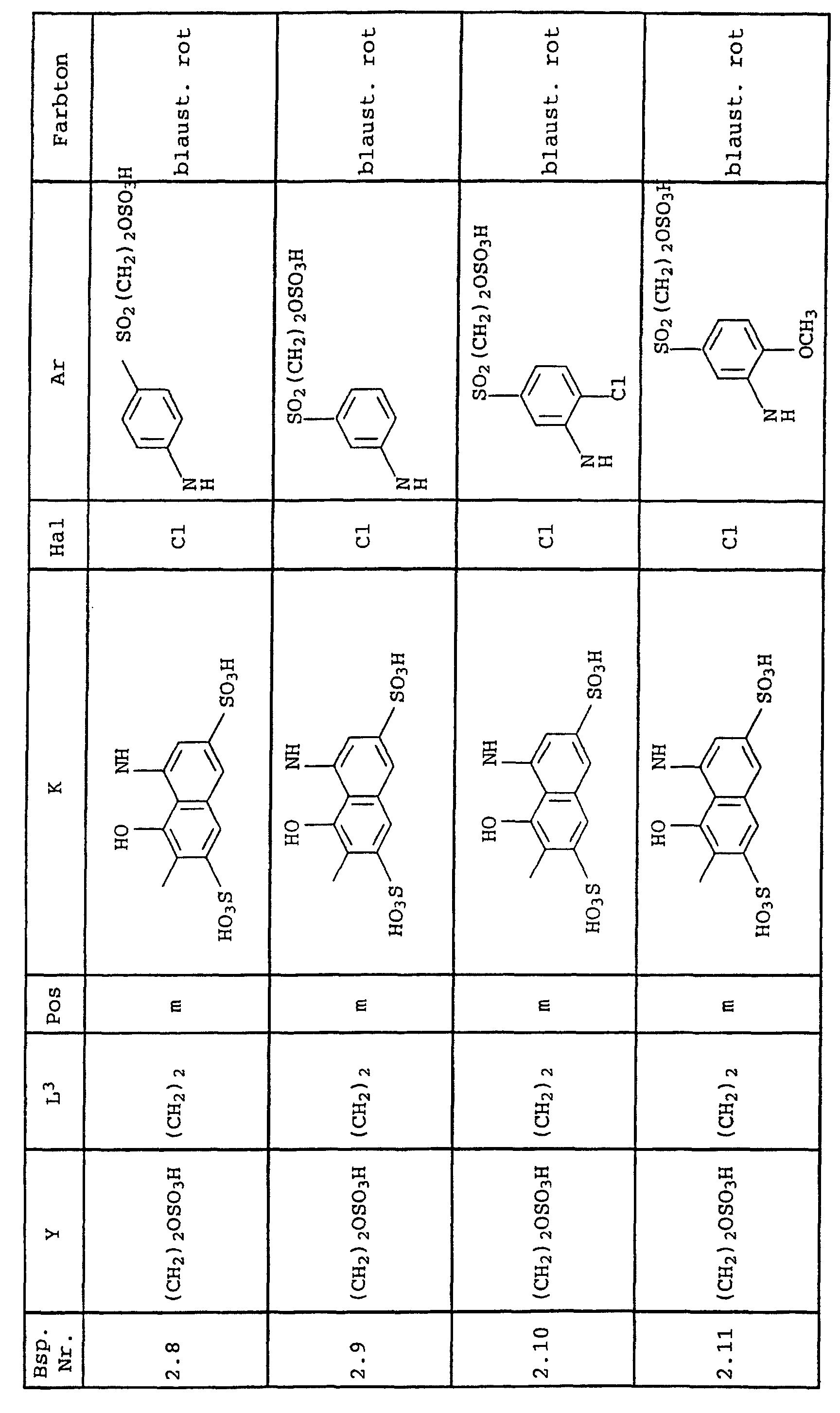

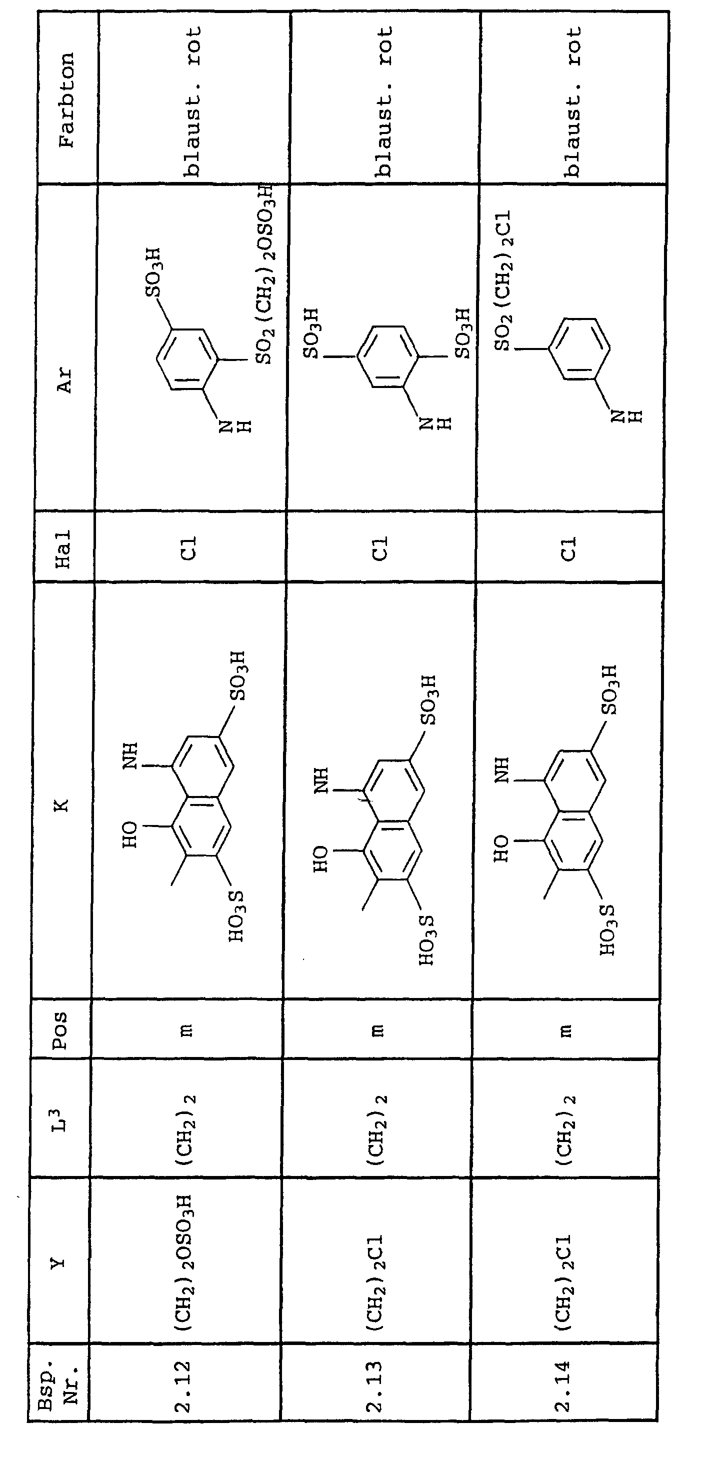

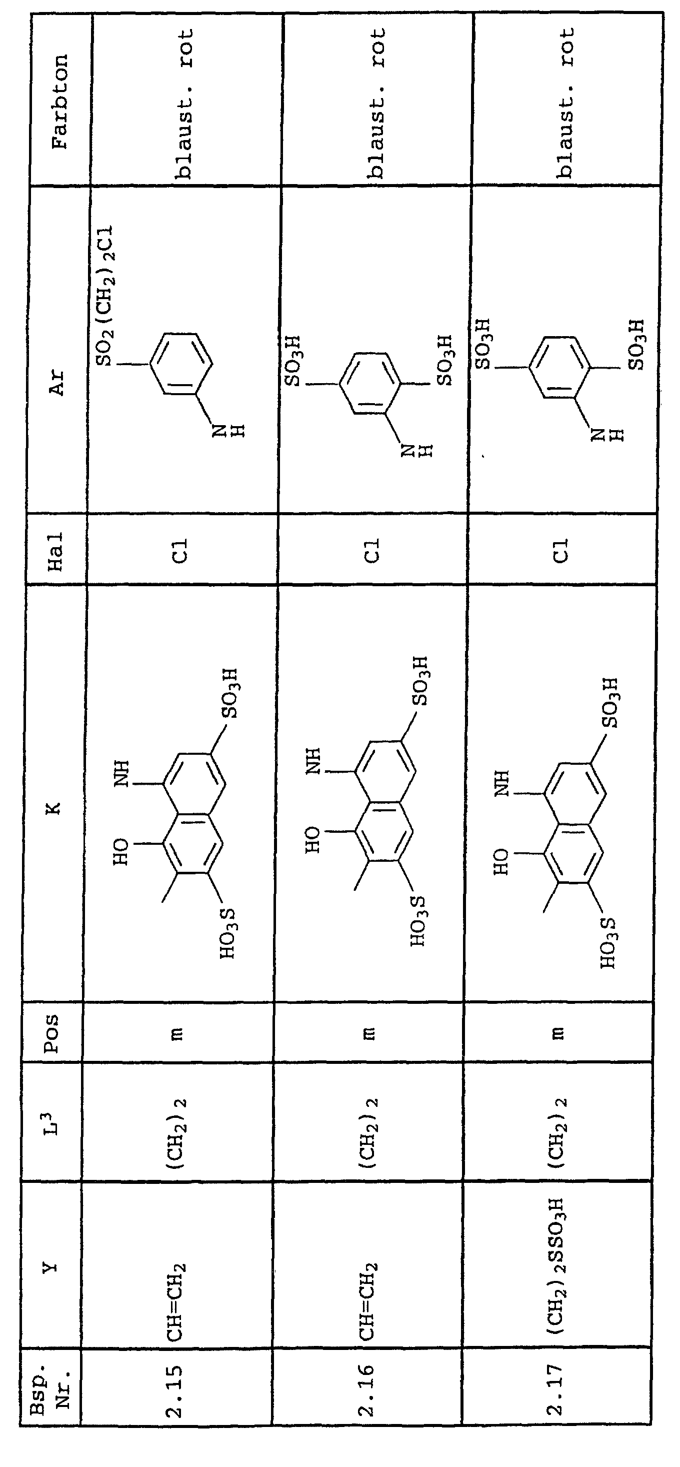

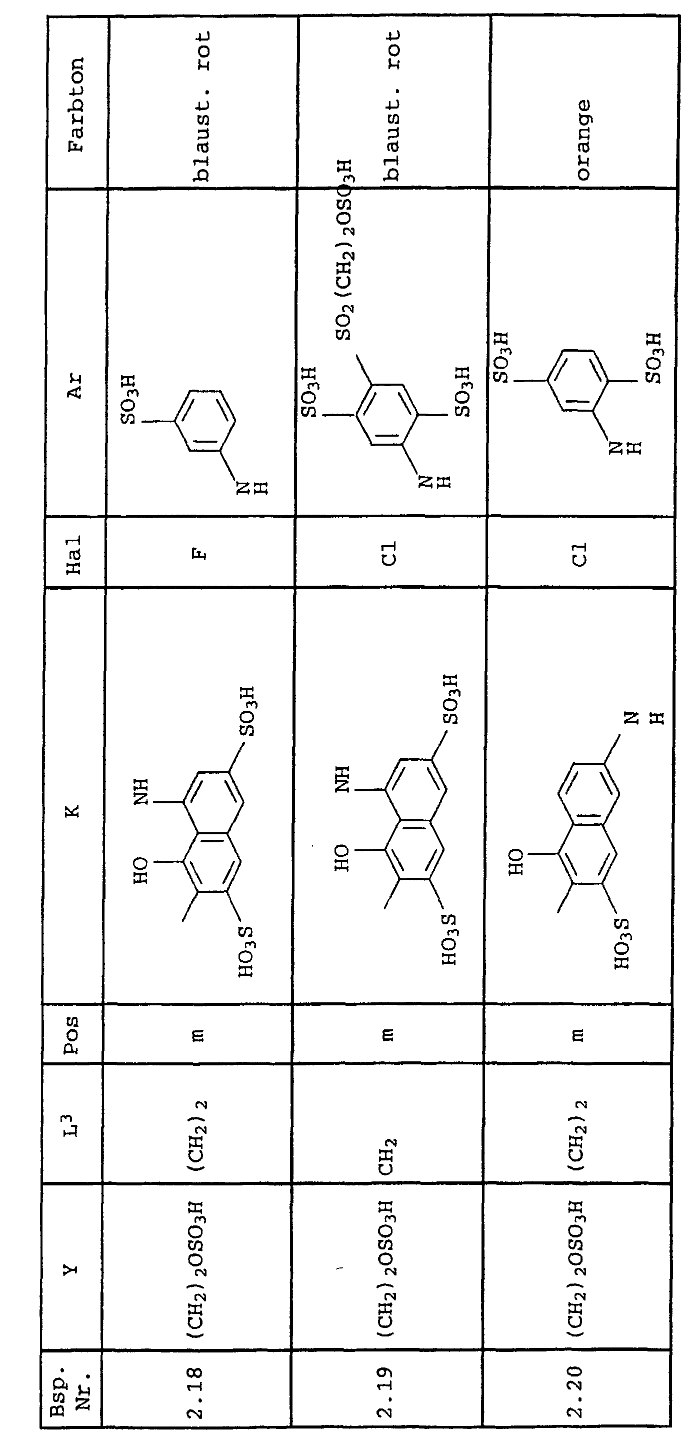

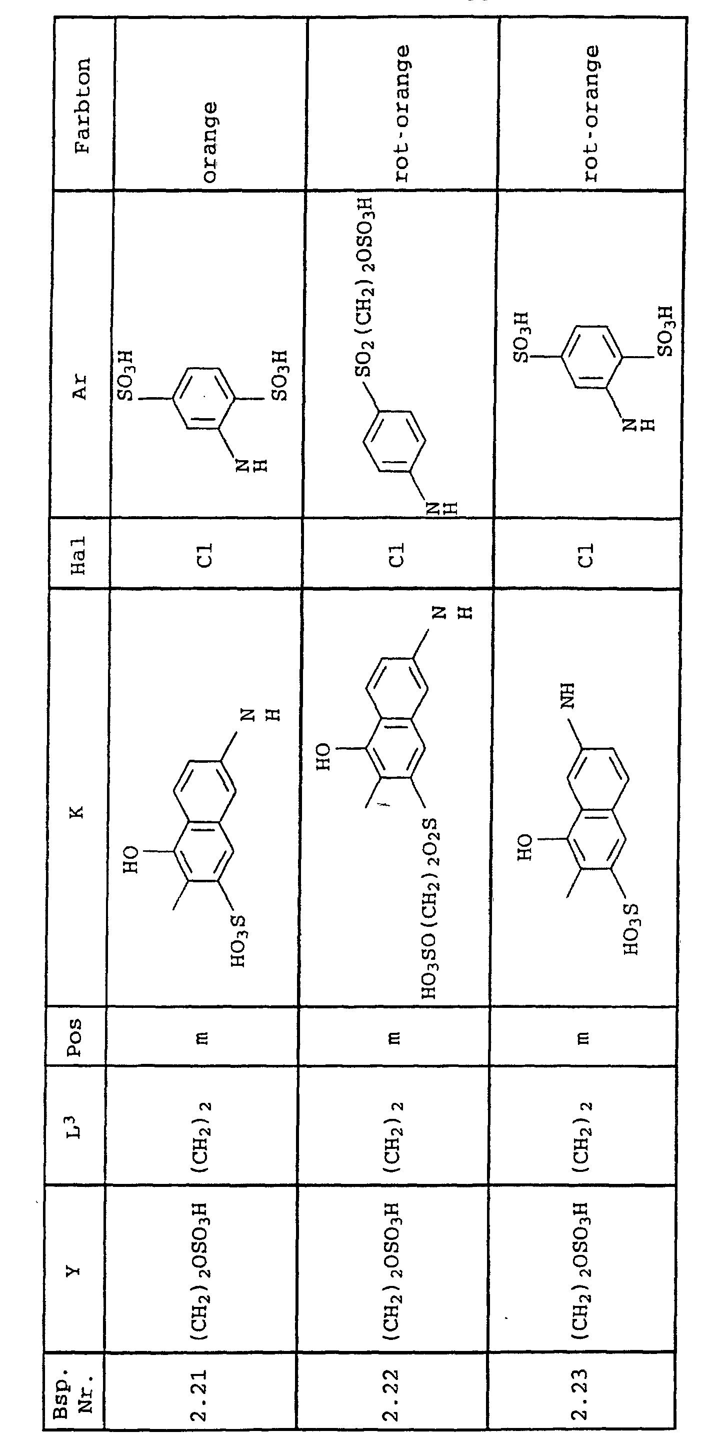

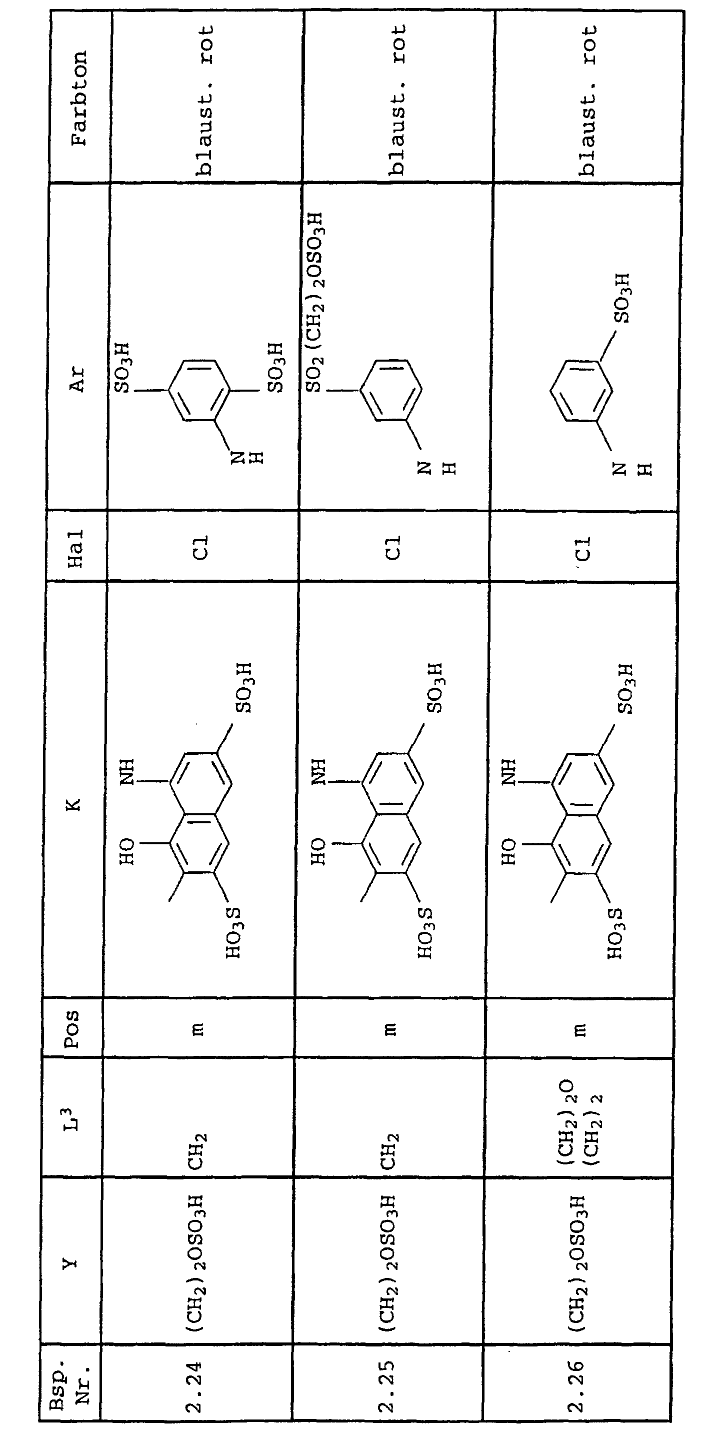

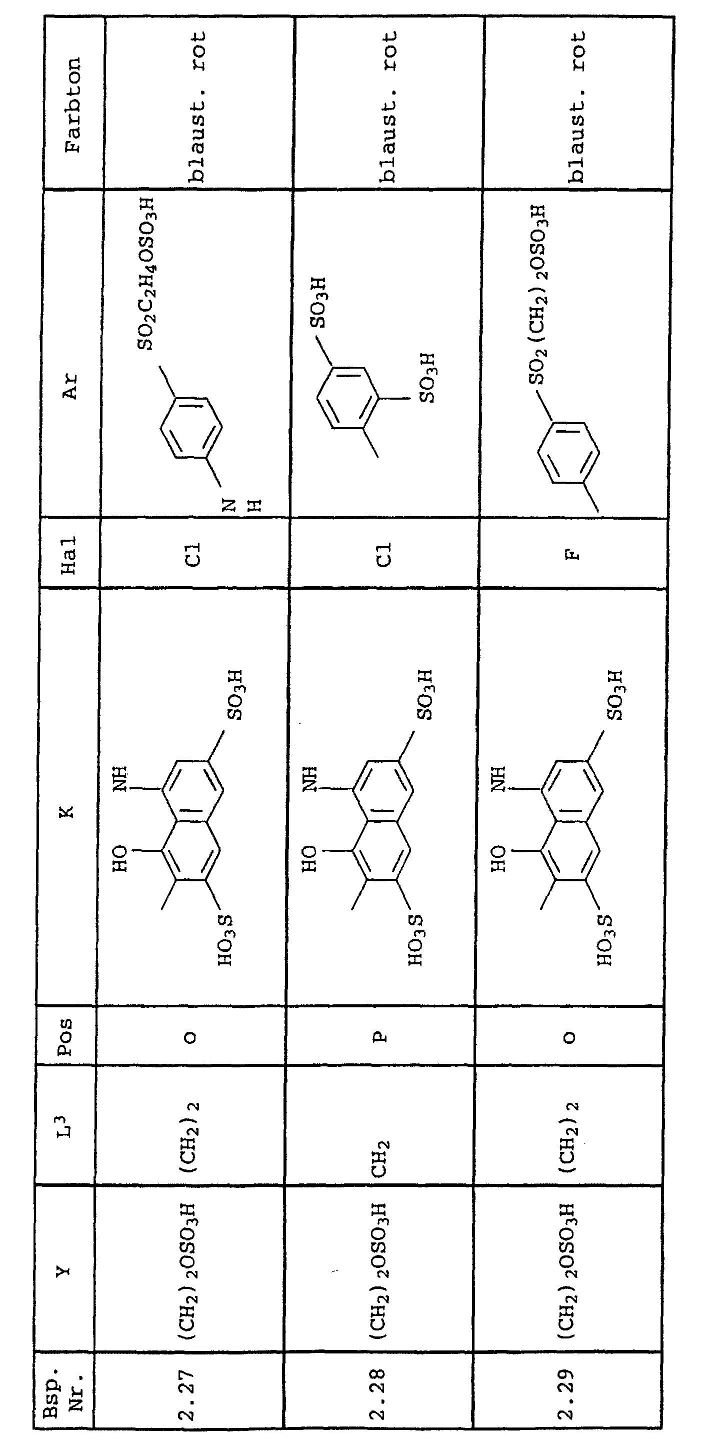

Die analog Beispiel 2 aus 3-Chlormethyl-5-(4'-nitrophenyl)-1,2,4-oxadiazol hergestellte Ankerverbindung der Formel 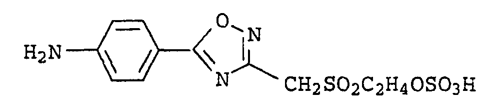 wurde nach den unter 2.1b) beschriebenen Bedingungen diazotiert und mit N-Acetyl-H-Säure bei pH 5 gekuppelt, die zuvor aus H-Säure und Acetanhydrid in wäßriger Lösung bereitet wurde.

Der durch Aussalzen mit Kochsalz erhaltene Farbstoff der Formel 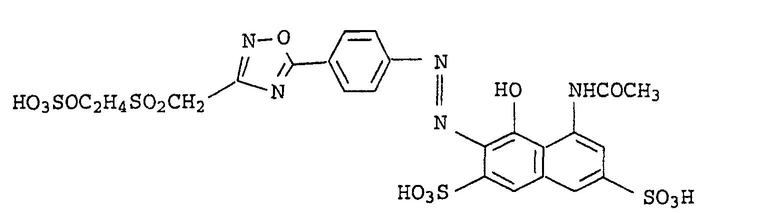 färbt Baumwolle in blaustichig rotem, klaren Ton mit gutem Echtheitsprofil.

Vergleichbare Eigenschaften besitzen die in der folgenden Tabelle 3 aufgeführten Farbstoffe.

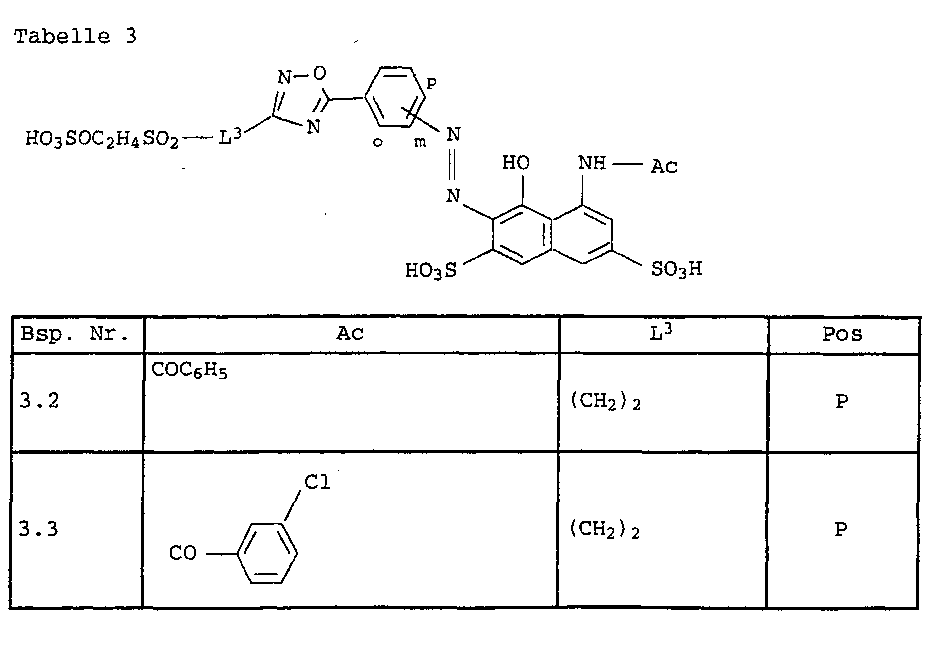

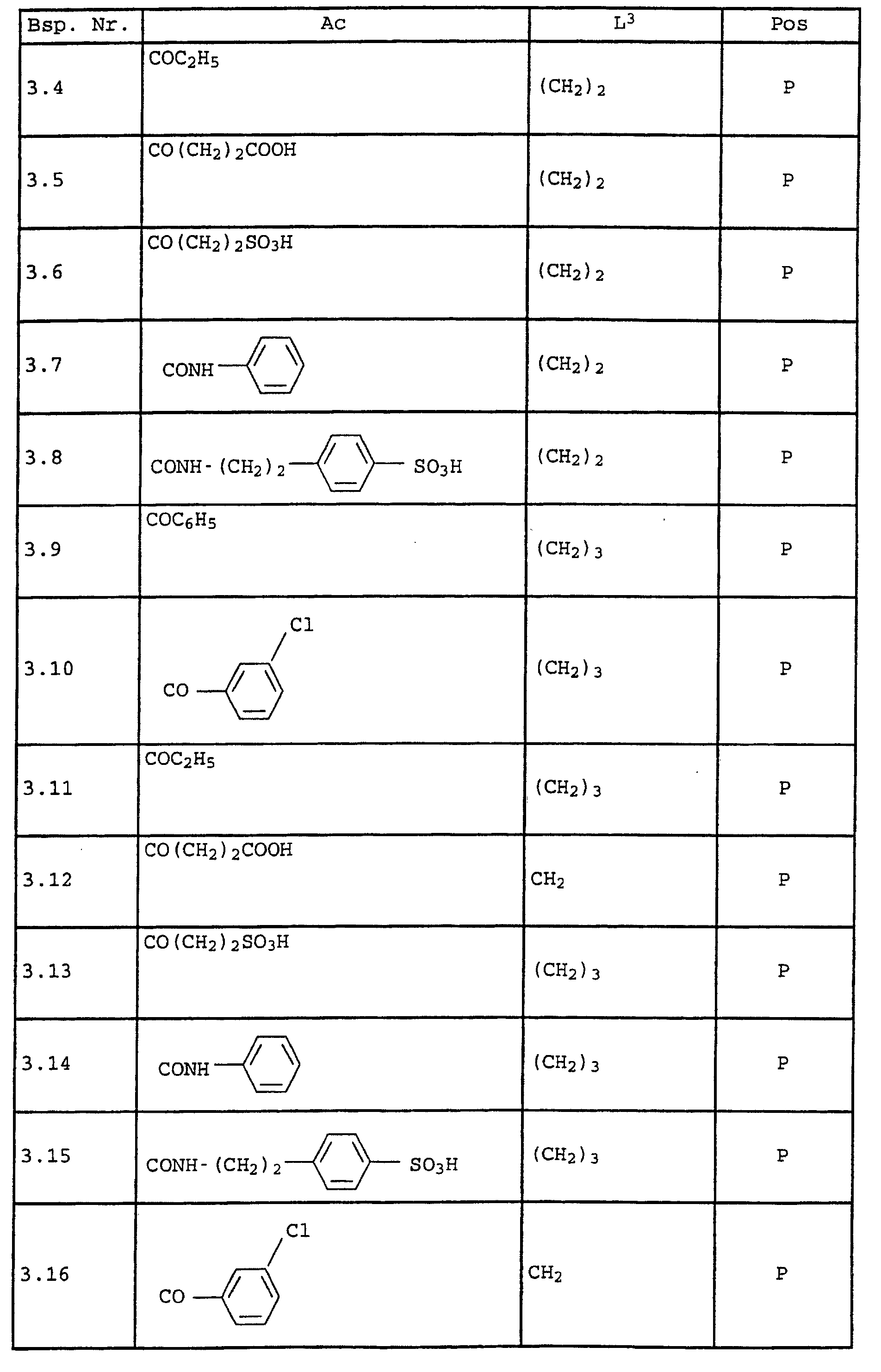

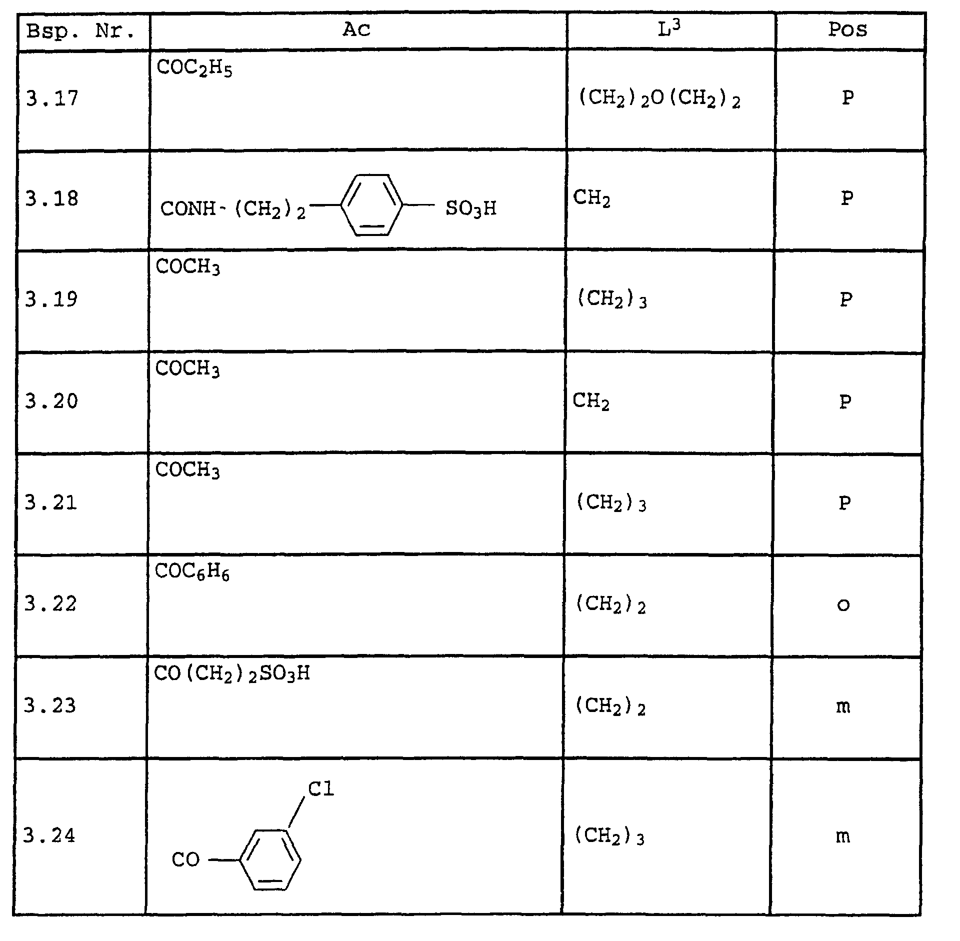

### Beispiel 4.1

a) 18,5 g Cyanurchlorid wurden in 60 ml einer Mischung aus 60 ml Eiswasser, 1 ml 30 gew.-%iger Salzsäure und 0,5 g eines Dispergiermittels dispergiert. Durch Zugabe einer Lösung von 26,3 g H-Säure-Dinatriumsalz in Wasser, die 1 g Dinatriumphosphat enthielt, bei 5 bis 10°C fand im stark sauren pH-Bereich vollständige Umsetzung statt. Dem resultierenden Reaktionsgemisch setzte man die Lösung von 37,7 g der Verbindung der Formel 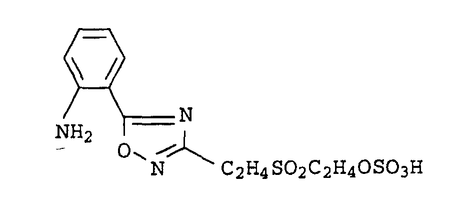 in 150 ml Wasser und 80 ml 10 gew. -%iger wäßriger Natriumhydrogencarbonatlösung zu und rührte unter Einhalten des pH-Wertes von 5 bei Raumtemperatur über Nacht.
   Das Reaktionsprodukt der Formel 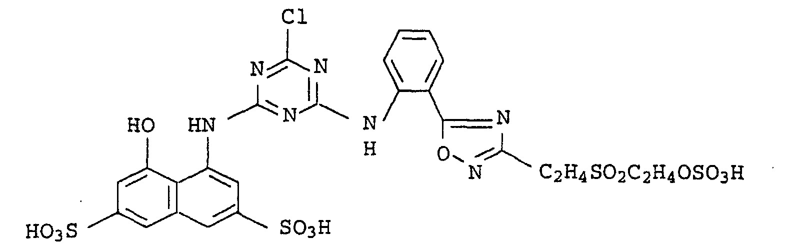 wurde mit 180 g Kochsalz gefällt, abgesaugt und mit 20 gew.-%iger wäßriger Kochsalzlösung gewaschen.
b) 17 g 2-Aminonaphthalin-1,5-disulfonsäure wurden in einer Mischung aus 50 ml Wasser, 6 ml 30 gew.-%iger Salzsäure und 50 g Eis verrührt und mit 16,5 ml 3,33N wäßriger Natriumnitritlösung versetzt. Nach einstündigem Rühren bei 5 bis 10°C wurde der geringe Überschuß salpetriger Säure mit Amidosulfonsäure zerstört und das gesamte Reaktionsgemisch mit der Hälfte der Lösung des unter a) beschriebenen Monochlortriazins in 350 ml Wasser vereinigt. Durch Zugabe von Natriumhydrogencarbonat wurde bei 15 bis 20°C ein pH-Wert von 7 bis 8 eingehalten, bis die Umsetzung beendet war. Der Farbstoff der Formel 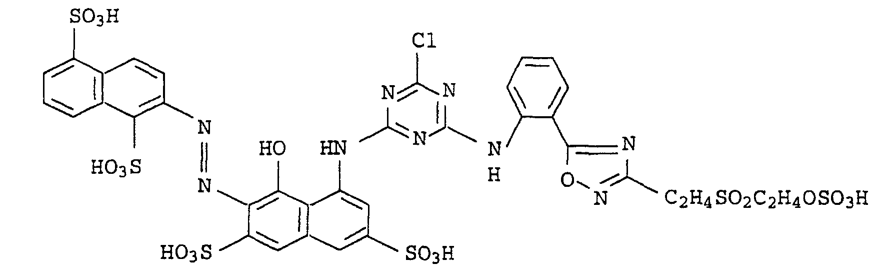 wurde mit 230 g Kaliumchlorid ausgefällt und abgesaugt. Er färbt Baumwolle aus alkalischem Bad in klarer blaustichig roter Nuance bei sehr guten Gebrauchsechtheiten.
   In analoger Weise werden die in der folgenden Tabelle 4 aufgeführten Farbstoffe erhalten.

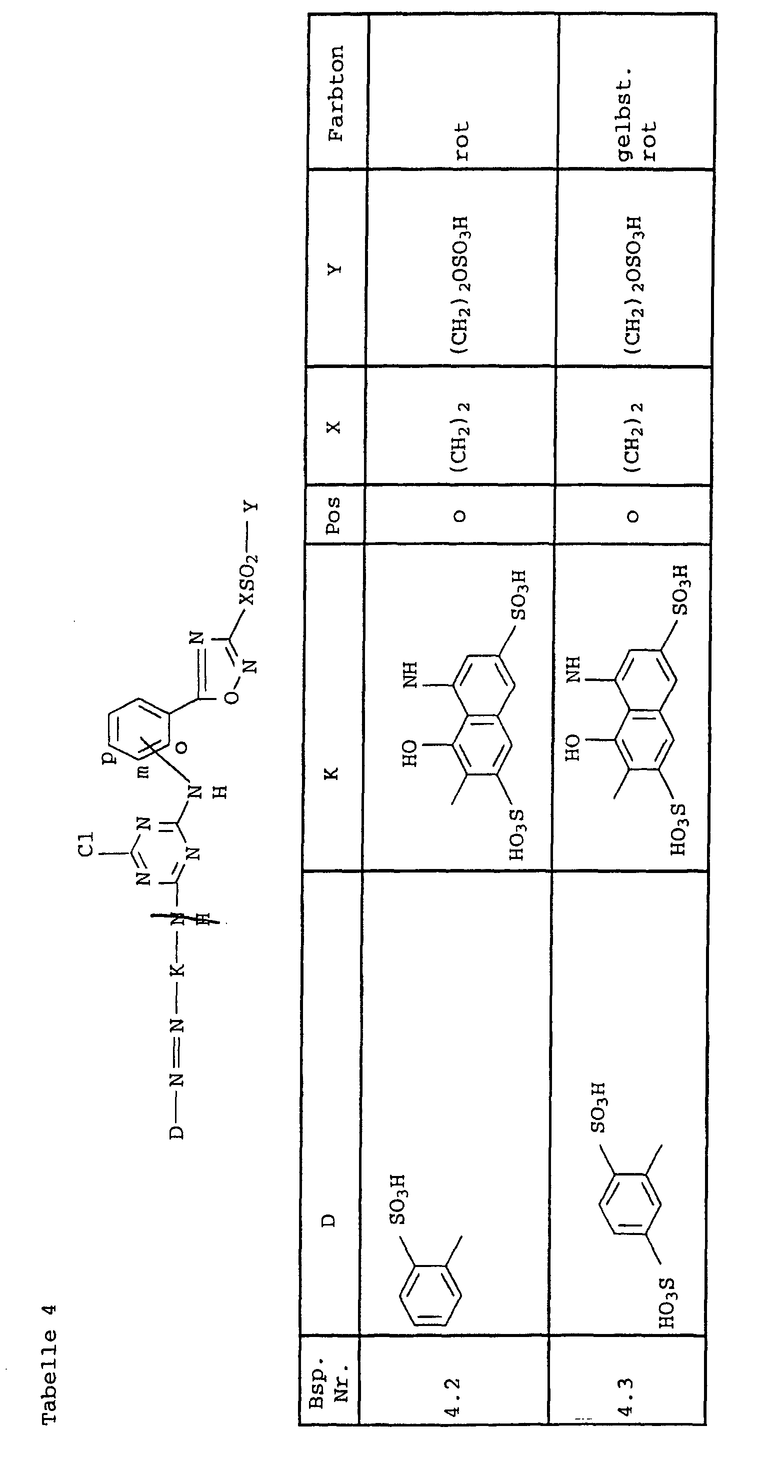

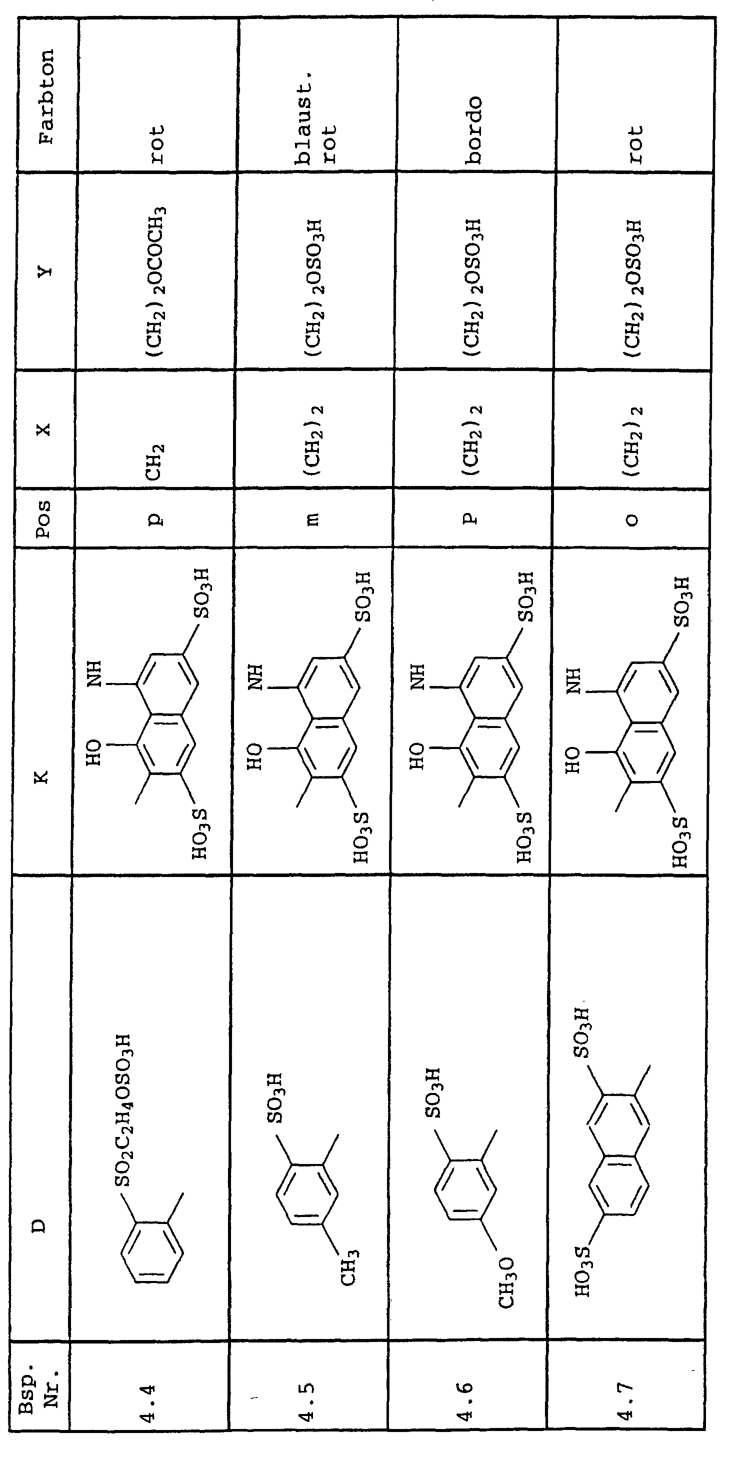

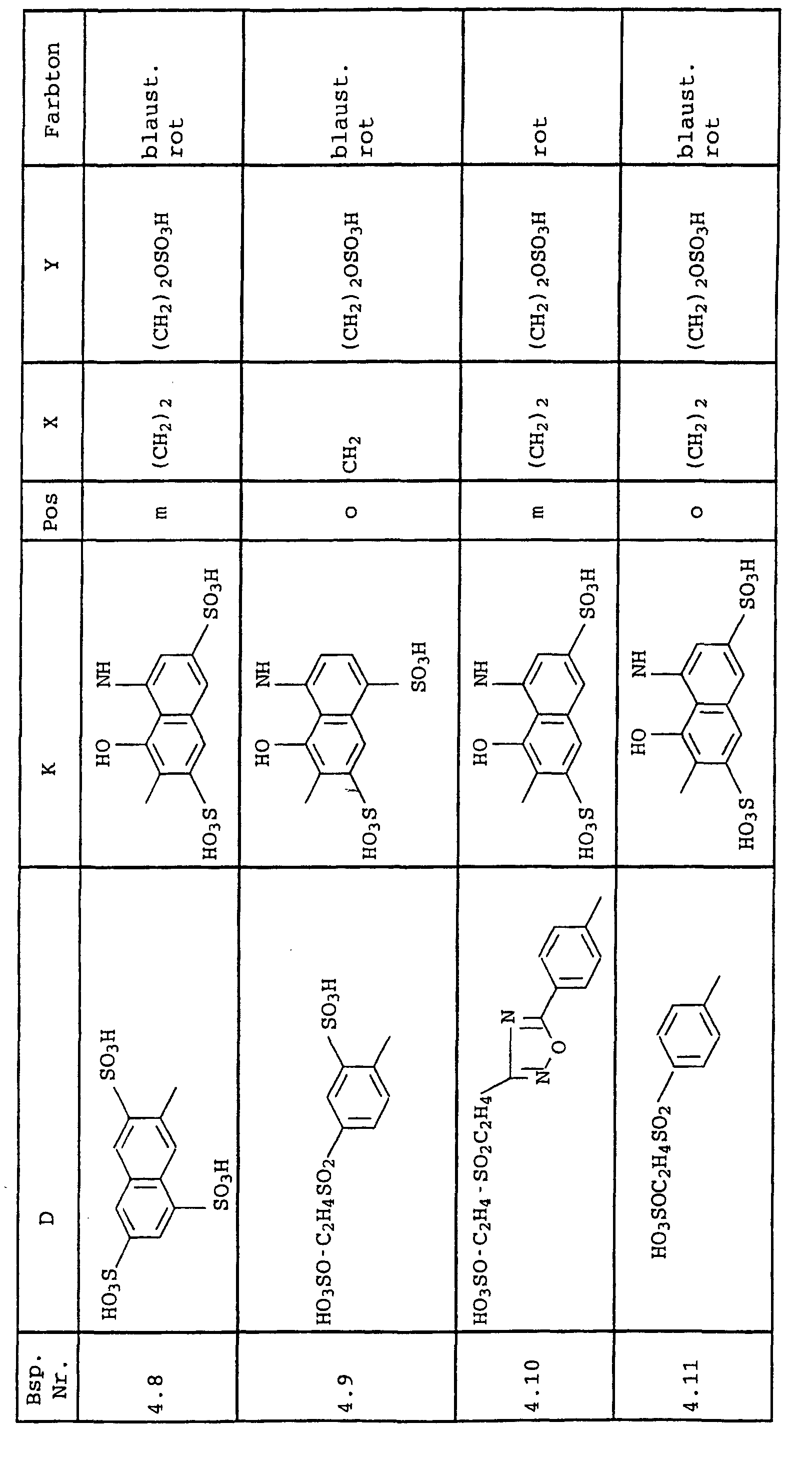

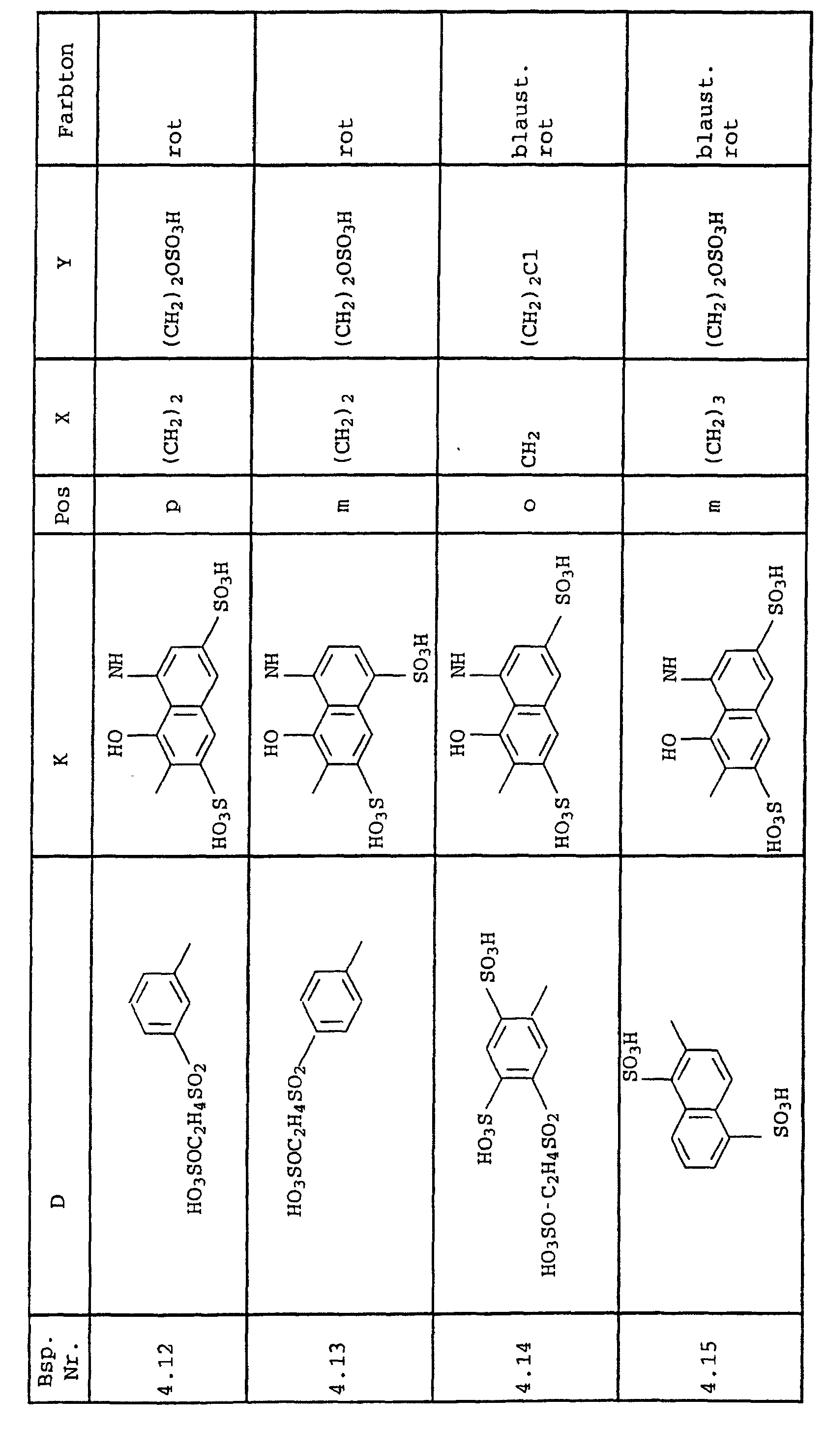

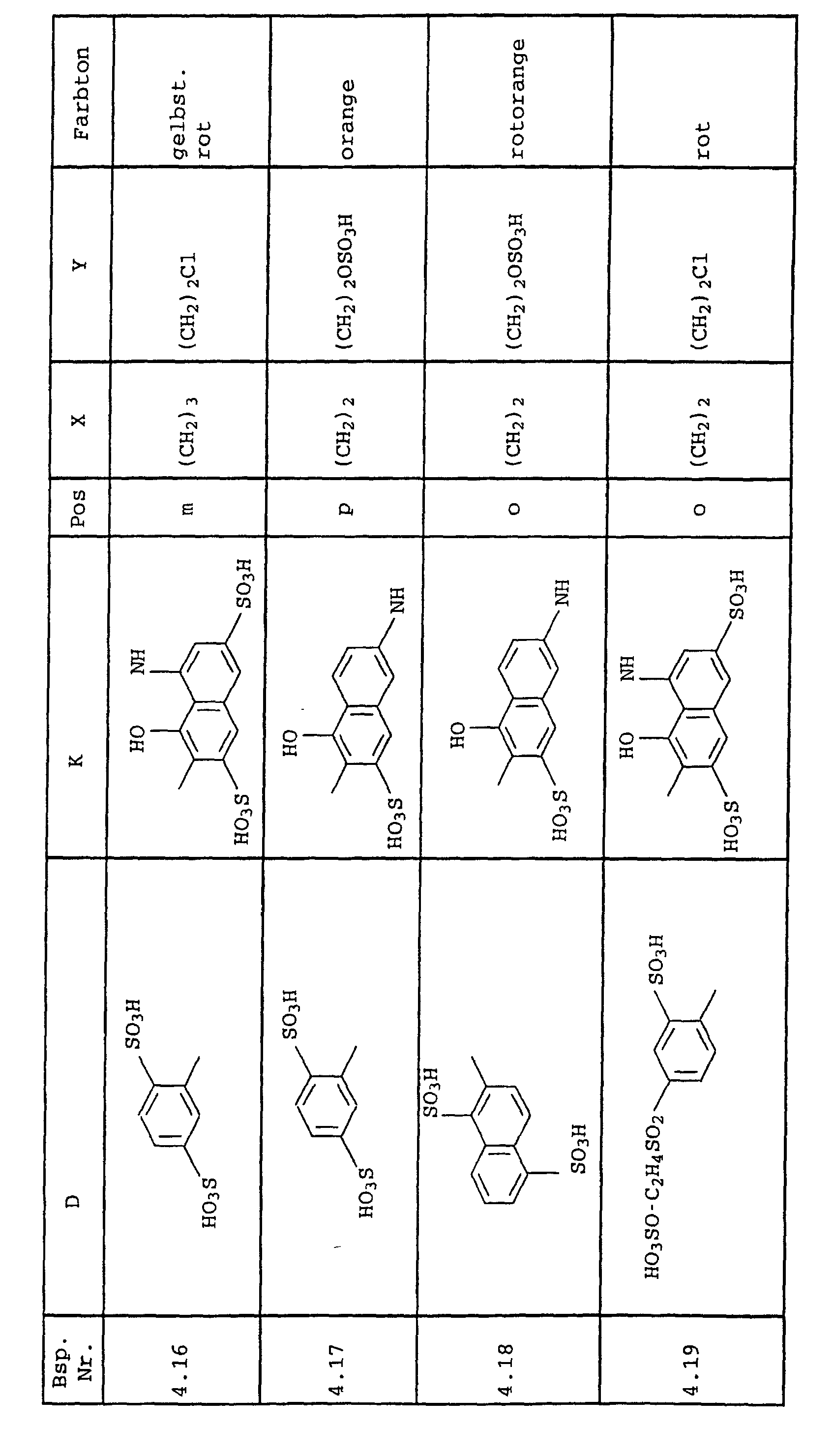

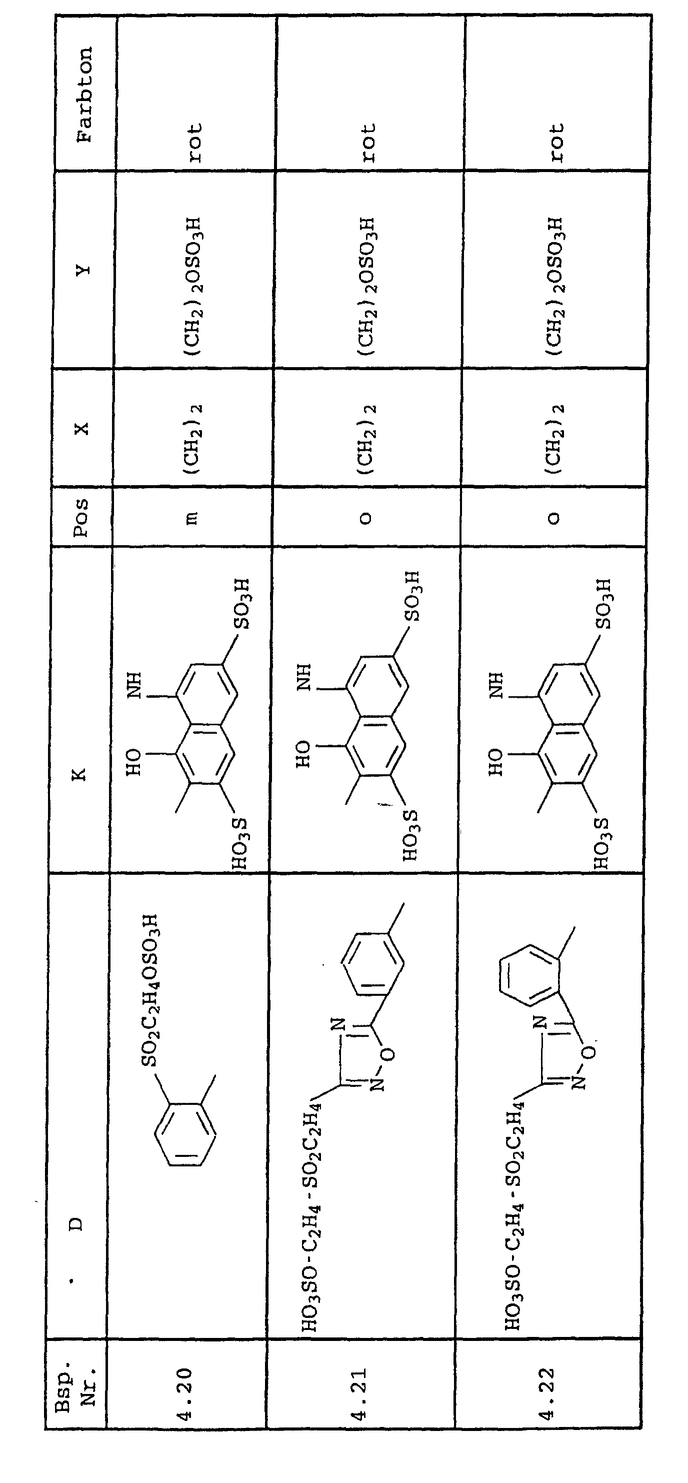

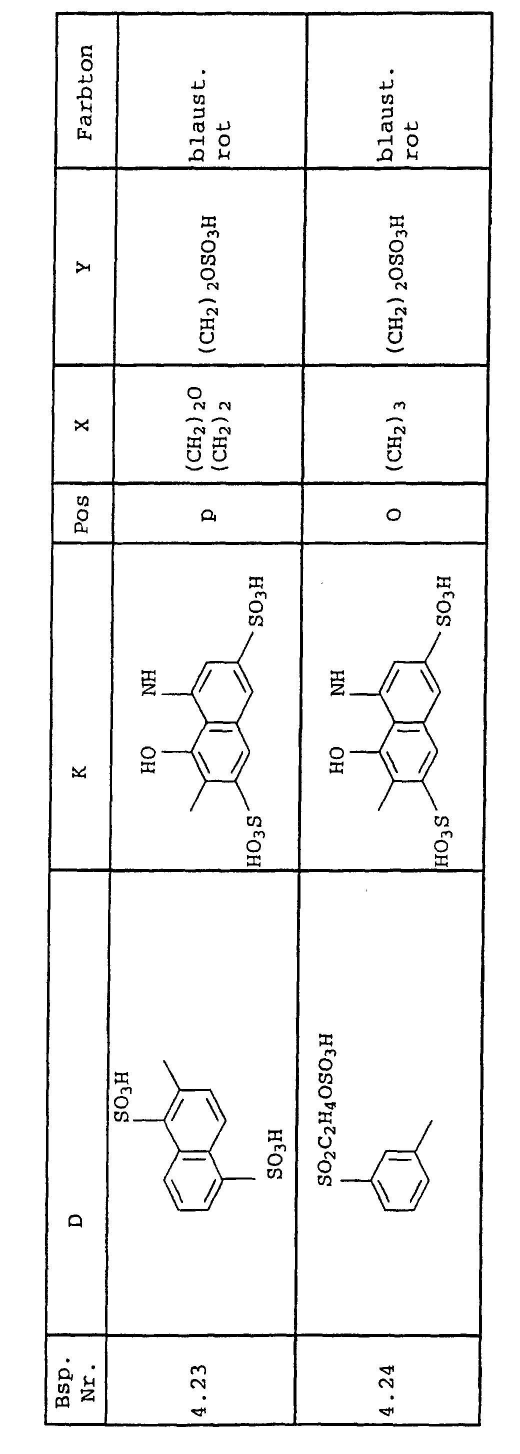

### Beispiel 5.1

a) 30,3 g 4-(2-Sulfatoethylsulfonyl)anilin-Natriumsalz wurden in 500 ml Eiswasser gelöst und mit 30 ml 3,33N wäßriger Natriumnitritlösung versetzt. Durch Zugabe von 30 ml 30 gew.-%iger Salzsäure und einstündiges Nachrühren bei 0 bis 5°C wurde diazotiert. Nachdem überschüssige salpetrige Säure mit Amidosulfonsäure zerstört wurde, vereinigte man die erhaltene Dispersion des Diazoniumsalzes mit einer Lösung von 1-(4,6-Dichlor-1,3,5-triazin-2-yl)amino-8-hydroxynaphthalin-4,6-disulfonsäure, die wie folgt bereitet wurde:
   Man ließ eine Lösung von 36,6 g K-Säure Dinatriumsalz und 25 g Natriumformiat in 150 ml Wasser unter intensivem Rühren zu einer eiskalten Dispersion aus 18,5 g Cyanurchlorid, 0,1 g eines Dispergiermittels, 1 ml 30 gew.-%iger Salzsäure und 200 ml Eiswasser fließen und rührte 2 h bei 5 bis 10°C und bei einem pH-Wert von 1 nach, bis die Umsetzung beendet war.
   Durch Pufferung mit Natriumacetatlösung (pH ca. 3) und 30minütiges Nachrühren bei 10 bis 15°C wurde die Kupplungsreaktion zu Ende geführt.
   Der Dispersion des so erhaltenen Dichlortriazinylazofarbstoffes setzte man sodann 34,1 g H-Säure-Mononatriumsalz zu und stellte durch Einstreuen von Natriumhydrogencarbonat einen pH-Wert von 5 bis 5,5 ein, wobei die Temperatur auf 20°C anstieg. Nach zweistündigem Rühren bei 20 bis 25°C und Einhalten des obengenannten pH-Wertes war die Reaktion beendet und der Farbstoff der Formel 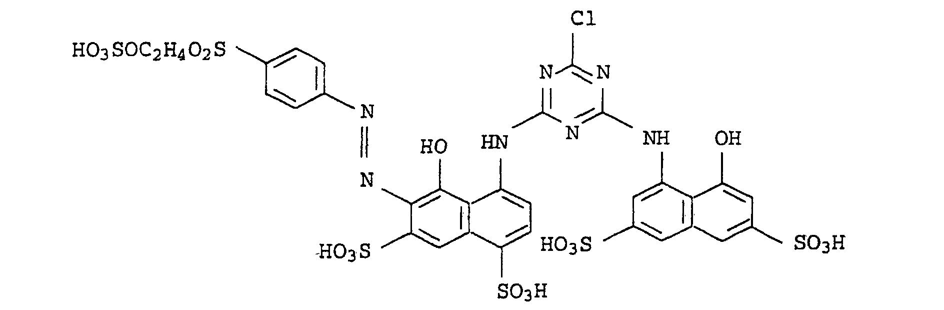 wurde mittels Kaliumchlorid vollständig ausgefällt, abgesaugt und mit 5 gew.-%iger wäßriger Kaliumchloridlösung nachgewaschen.
b) 0,05 mol des unter a) beschriebenen Farbstoffes wurden mit der unter Beispiel 1c) beschriebenen Ankerverbindung versetzt. Pufferung mit Natriumacetat bis zu einem pH-Wert von 5 vervollständigte die Kupplungsreaktion. Der Farbstoff der Formel 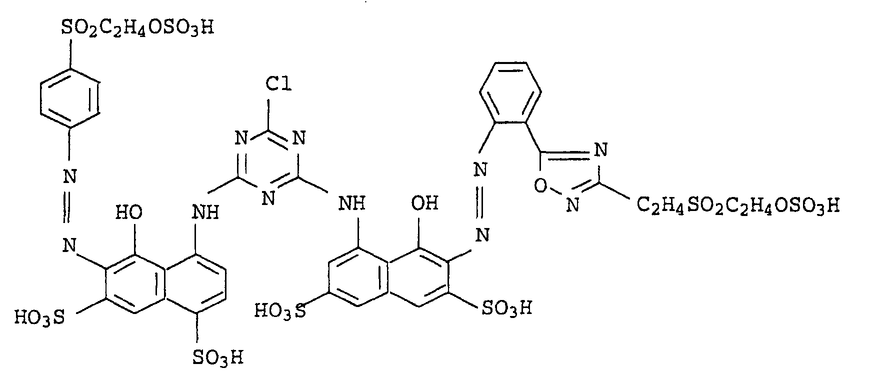 wurde mit 130 g Kaliumchlorid gefällt, abgesaugt, mit 20 gew.-%iger wäßriger Kaliumchloridlösung gewaschen und bei 40°C unter vermindertem Druck getrocknet.
   Der Farbstoff färbt Baumwolle gleichermaßen nach dem Warmauszieh- und Kaltverweilverfahren in klaren, neutralen Rottönen mit sehr hoher Farbstärke und sehr hohem Fixiergrad bei hoher Unempfindlichkeit gegenüber Temperaturschwankungen.

### Beispiel 5.2

Man ersetzte das in Beispiel 5.1 a) verwendete Sulfatoethylsulfonylanilin durch eine äquivalente Menge der unter Beispiel 1c) beschriebenen Ankerverbindung und verfuhr dann analog Beispiel 5.1b). Man erhielt den Farbstoff der Formel 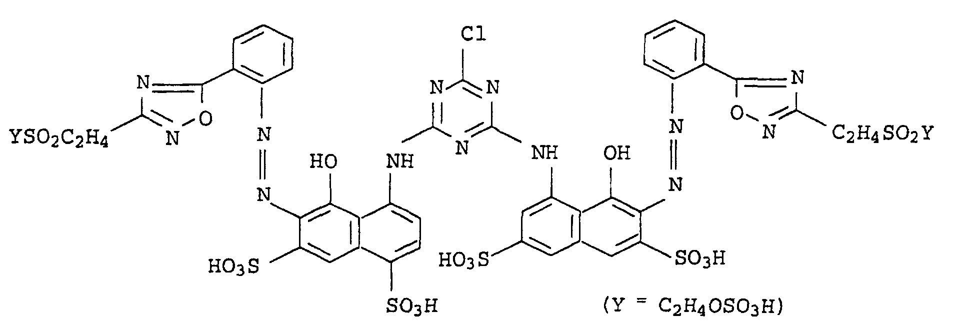 Analog den Beispielen 5.1 und 5.2 werden die folgenden Farbstoffe erhalten, die in Tabelle 5 zusammengefaßt sind.

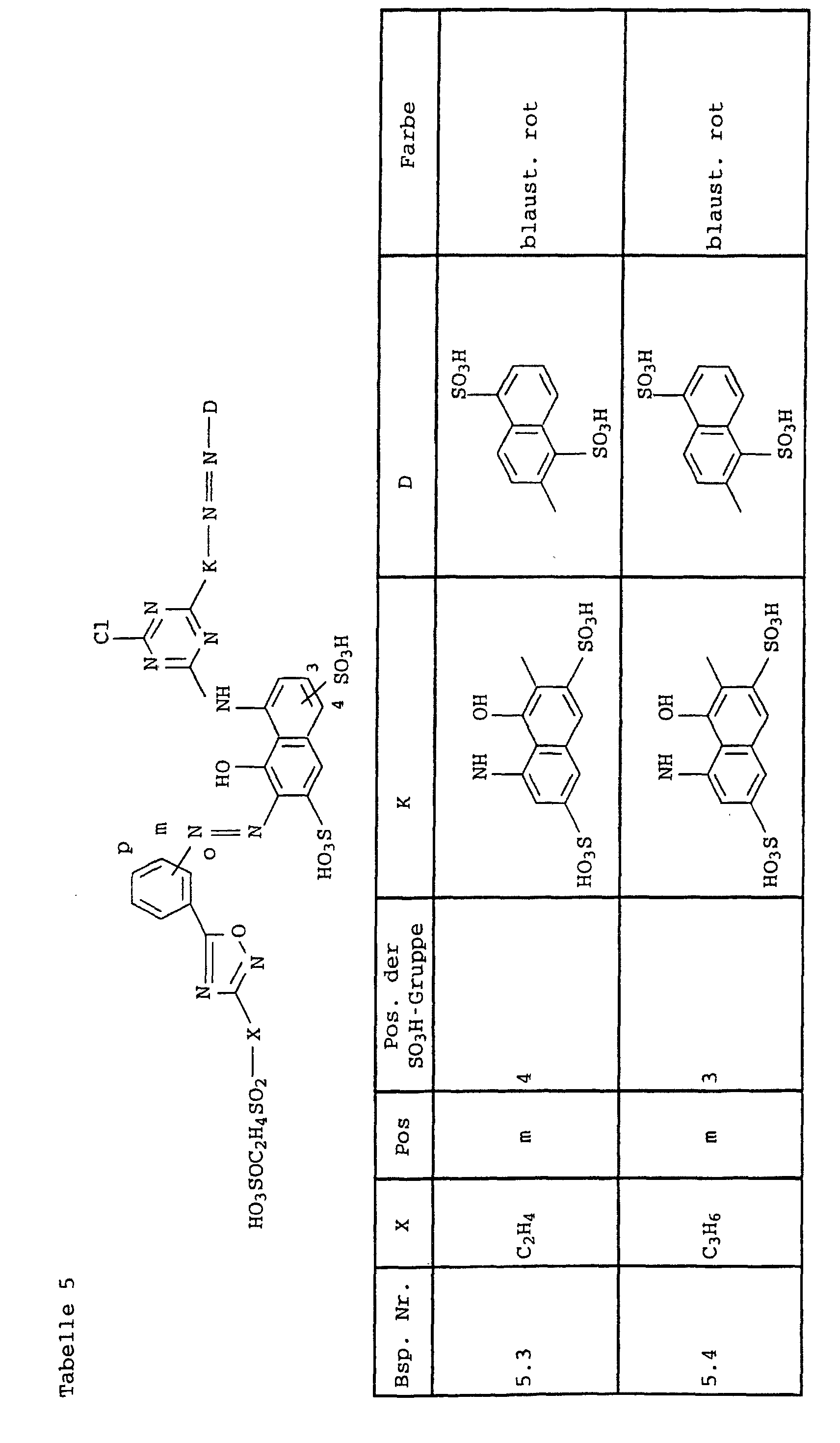

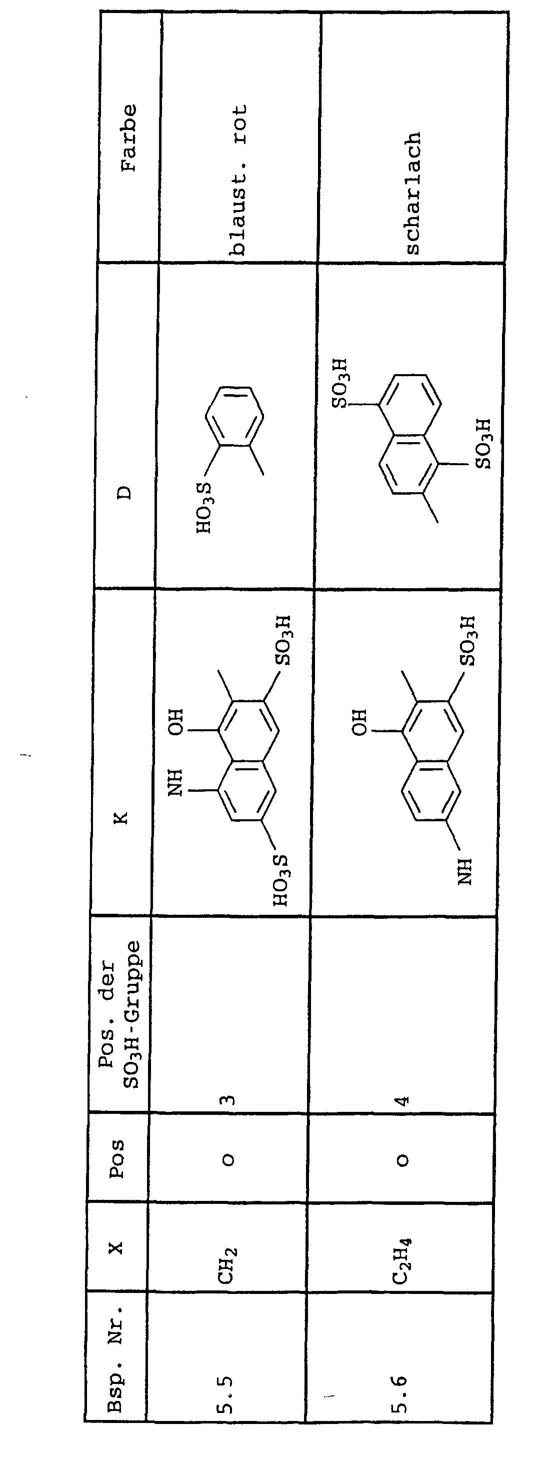

### Beispiel 6.1

18.9 g der unter 1c) beschriebenen Ankerverbindung (5-(2'-Aminophenyl)-3-[2-(2-sulfatoethylsulfonyl)ethyl]-1,2,4-oxadiazol) wurden gemäß Beispiel 5.1 diazotiert und mit der Dispersion von 16,5 g H-Säure-Mononatriumsalz in 150 ml Wasser vereinigt und bei einem pH-Wert ≤1 und einer Temperatur von 10°C gekuppelt.

Der gebildete Monoazofarbstoff wurde mit einem weiteren Äquivalent der unter Beispiel 1c) beschriebenen Ankerverbindung, die zuvor diazotiert wurde, vereinigt und mit Natriumacetat bei einem pH-Wert von 5 gekuppelt. Der Farbstoff der Formel 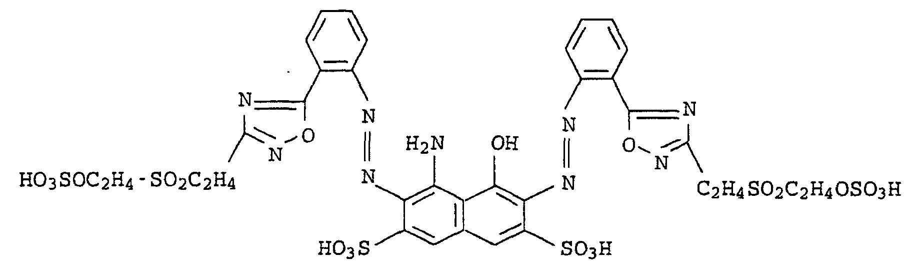 wurde als Kaliumsalz gefällt, abgesaugt, mit 70 gew.-%igem wäßrigen Ethanol gewaschen und bis 40°C unter vermindertem Druck getrocknet.

Er färbt Baumwolle in neutralen Marineblau- und Schwarztönen bei weitgehender Unabhängigkeit von angewandten Färbeverfahren und -temperaturen.

In analoger Weise werden die in der folgenden Tabelle 6 aufgeführten Farbstoffe erhalten.

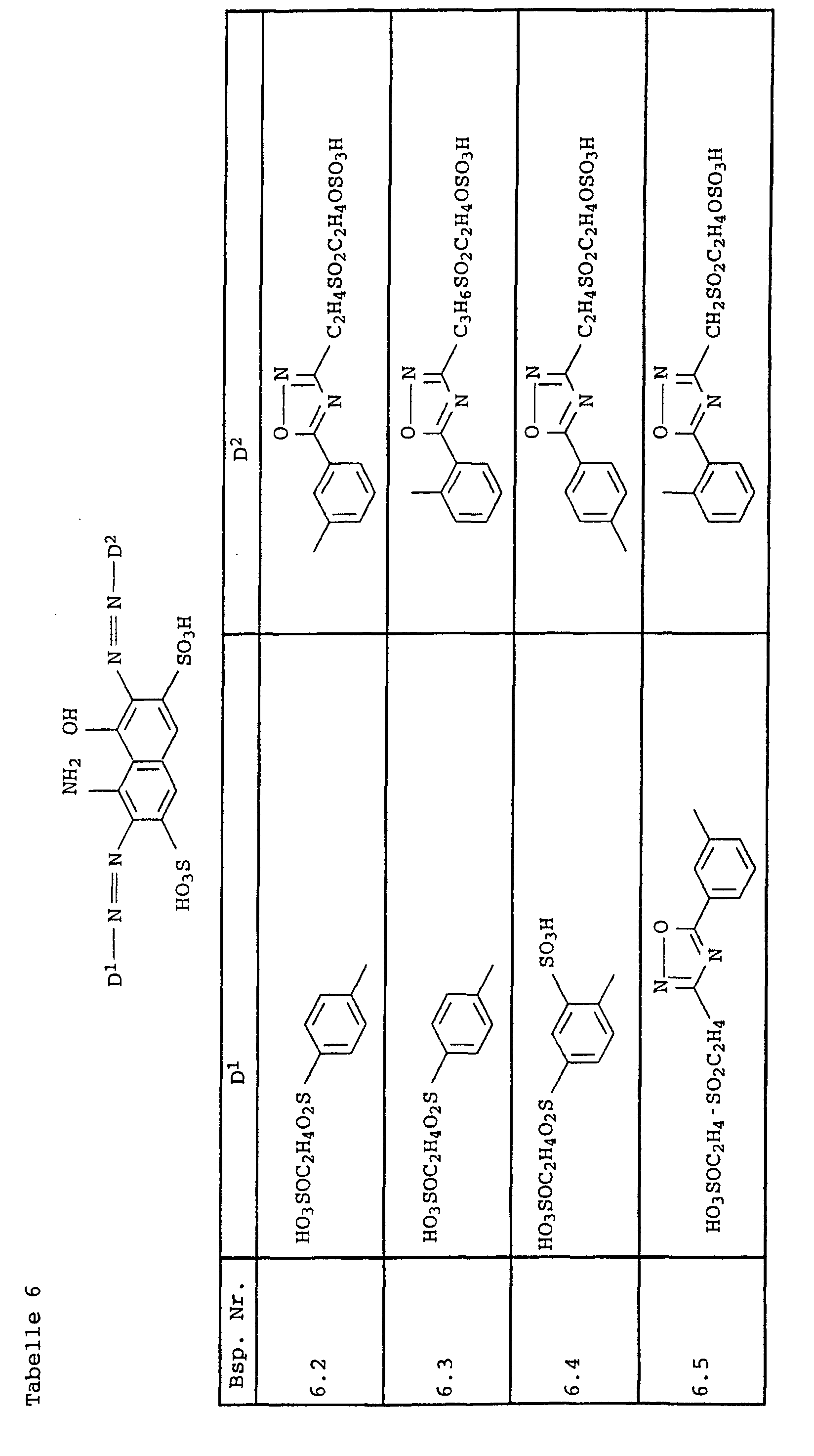

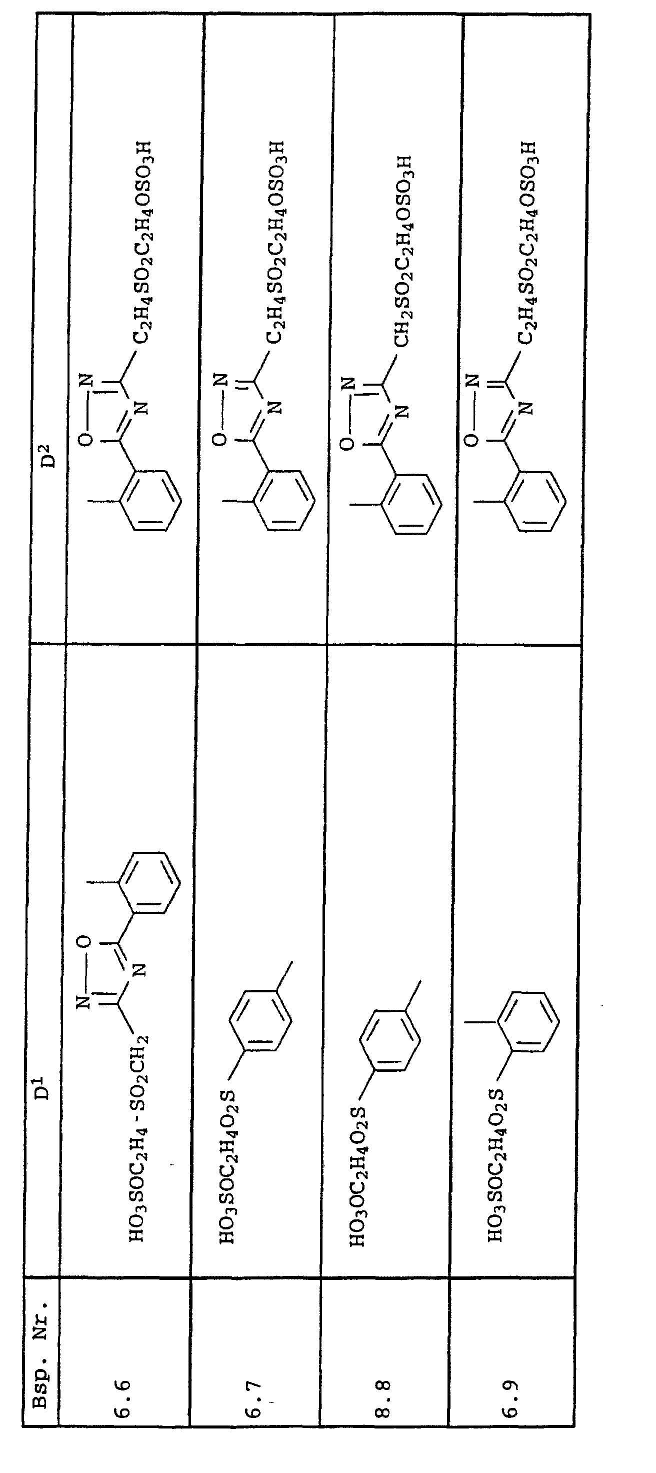

### Beispiel 7.1

a) 29,7 g der Verbindung der Formel 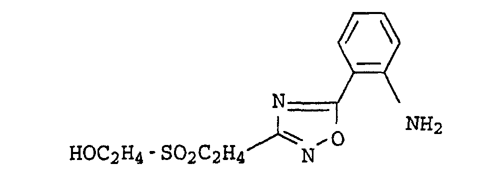 wurden in 300 ml Wasser und 30 ml 30 gew.-%iger Salzsäure angerührt und nach Kühlung mit 100 g Eis, mit 30 ml 3,33N wäßriger Natriumnitritlösung diazotiert. Nach 30minütigem Rühren bei 0 bis 5°C wurde der geringe Überschuß an salpetriger Säure mit Amidosulfonsäure zerstört und die Diazoniumsalzlösung mit der Lösung von 10,7 g m-Toluidin in 100 ml Wasser und 10 ml 30 gew.-%iger Salzsäure vereinigt. Mit einer gesättigten Natriumacetatlösung wurde ein pH-Wert von 1,5 eingestellt und bei Raumtemperatur über Nacht gehalten. Das Hydrochlorid des Farbstoffes der Formel 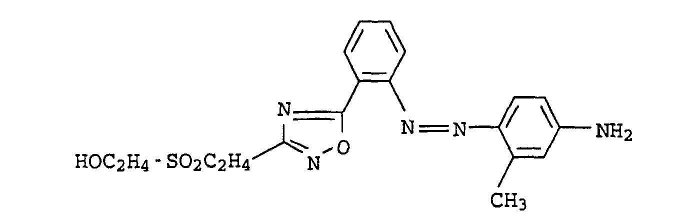 wurde abgesaugt, mit salzsaurem Wasser gewaschen und bei 60°C unter vermindertem Druck getrocknet.
b) 32 g der unter a) beschriebenen Verbindung wurden in 200 g konz. Schwefelsäure eingerührt und 3 h bei 40°C gehalten, bis weitgehend der Schwefelsäureester entstanden war. Durch Zusatz von 90 g 65 gew.-%igem Oleum und zweistündiges Rühren bei 80°C trat Sulfonierung ein. Der resultierende Farbstoff der Formel 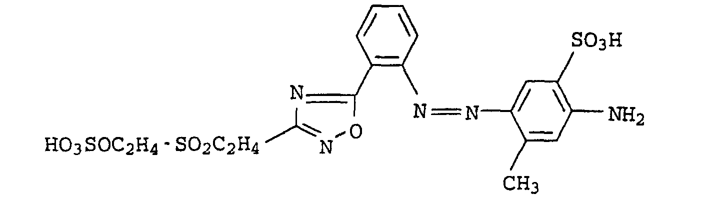 wurde auf 1000 g Eis ausgerührt und abgesaugt.
c) Das wäßrige Schwefelsäure enthaltende Nutschgut aus Beispiel 7.1b) wurde in 150 ml Wasser angerührt und bei 10 bis 15°C mit 11 ml 3,33N wäßriger Natriumnitritlösung versetzt. Nach 30minütigem Rühren bei 10 bis 15°C wurde der Überschuß an salpetriger Säure zerstört und die Diazoniumsalzlösung mit der Lösung von 24 g der Verbindung der Formel 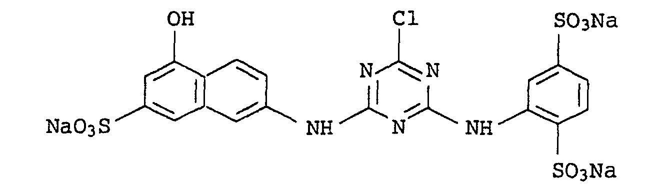 in 150 ml Wasser versetzt. Durch Pufferung mit wäßriger Natriumacetatlösung bis zu einem pH-Wert von 5 erfolgte die Kupplung zum Farbstoff der Formel 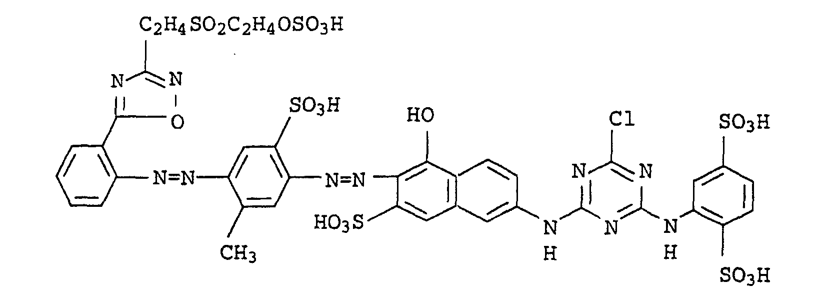 der als Natriumsalz isoliert wurde. Er färbt Baumwolle in klaren Ziegelrottönen mit gutem Echtheitsprofil.

### Beispiel 8.1

Die Lösung des Reaktionsproduktes von Cyanurchlorid mit H-Säure (wie unter 4.1a) beschrieben) wurde mit gemäß Beispiel 5.1 diazotiertem 5-(2'-Aminophenyl)-3-[2-(2-sulfatoethyl-)sulfonylethyl]-1,2,4-oxadiazol bei pH 5 gekuppelt. Nach Zusatz von 5,4 g p-Phenylendiamin wurde ca. 6 Stunden bei Raumtemperatur und bei einem PH-Wert von 6 gerührt.

Nach Erwärmen auf 40°C und einem pH-Wert von 5 war die Kondensation vollendet und es wurde ein Farbstoff der Formel 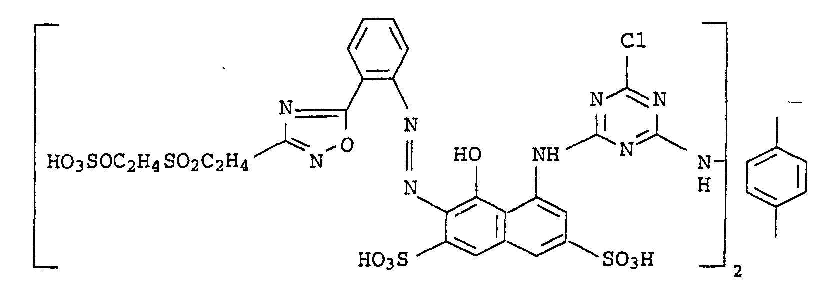 erhalten. Der Farbstoff wurde mit Kochsalz gefällt, abgesaugt, mit 15 gew.-%iger wäßriger Kochsalzlösung gewaschen und bei 40°C unter vermindertem Druck getrocknet. Er färbt Baumwolle in blaustichig rotem Ton mit hoher Brillanz und sehr hoher Farbausbeute.

### Beispiel 8.2

Man kondensierte zunächst den in Beispiel 8.1 durch Kupplung erhaltenen Farbstoff der Formel 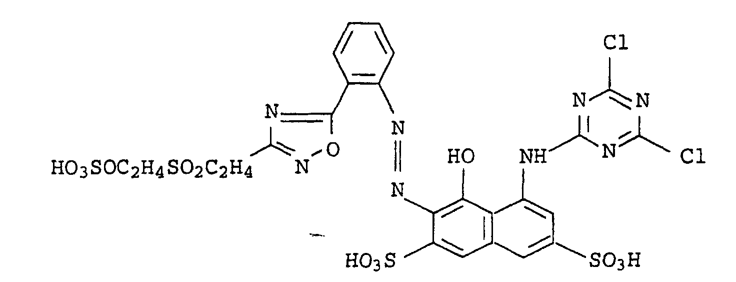 mit der äquivalenten Menge 2-Methylamino-4-aminobenzolsulfonsäure bei einem pH-wert von 5 und bei 25°C. Danach setzte man ihm unter gleichen Reaktionsbedingungen mit dem in Beispiel 5.1a) beschriebenen Farbstoff der Formel 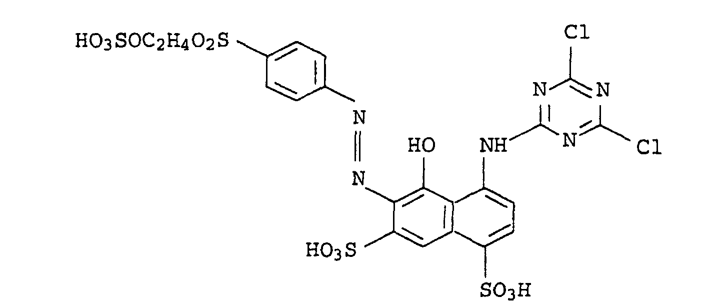 um. Man erhielt den Farbstoff der Formel 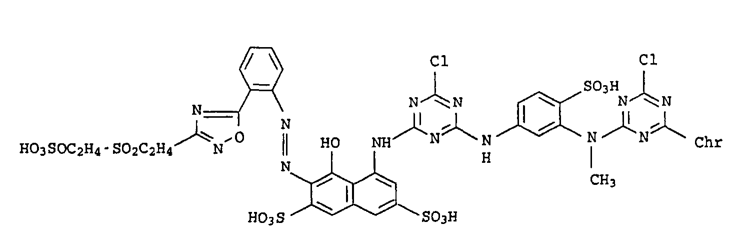 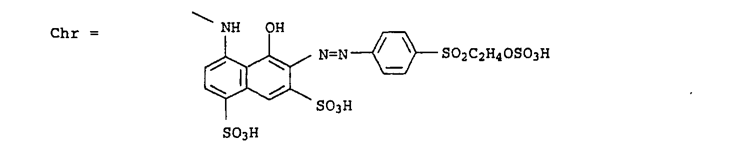 in hoher Ausbeute. Er färbt Baumwolle in neutral rotem Farbton.

In analoger Weise werden die in den folgenden Tabellen 7 und 8 aufgeführten Farbstoffe erhalten.

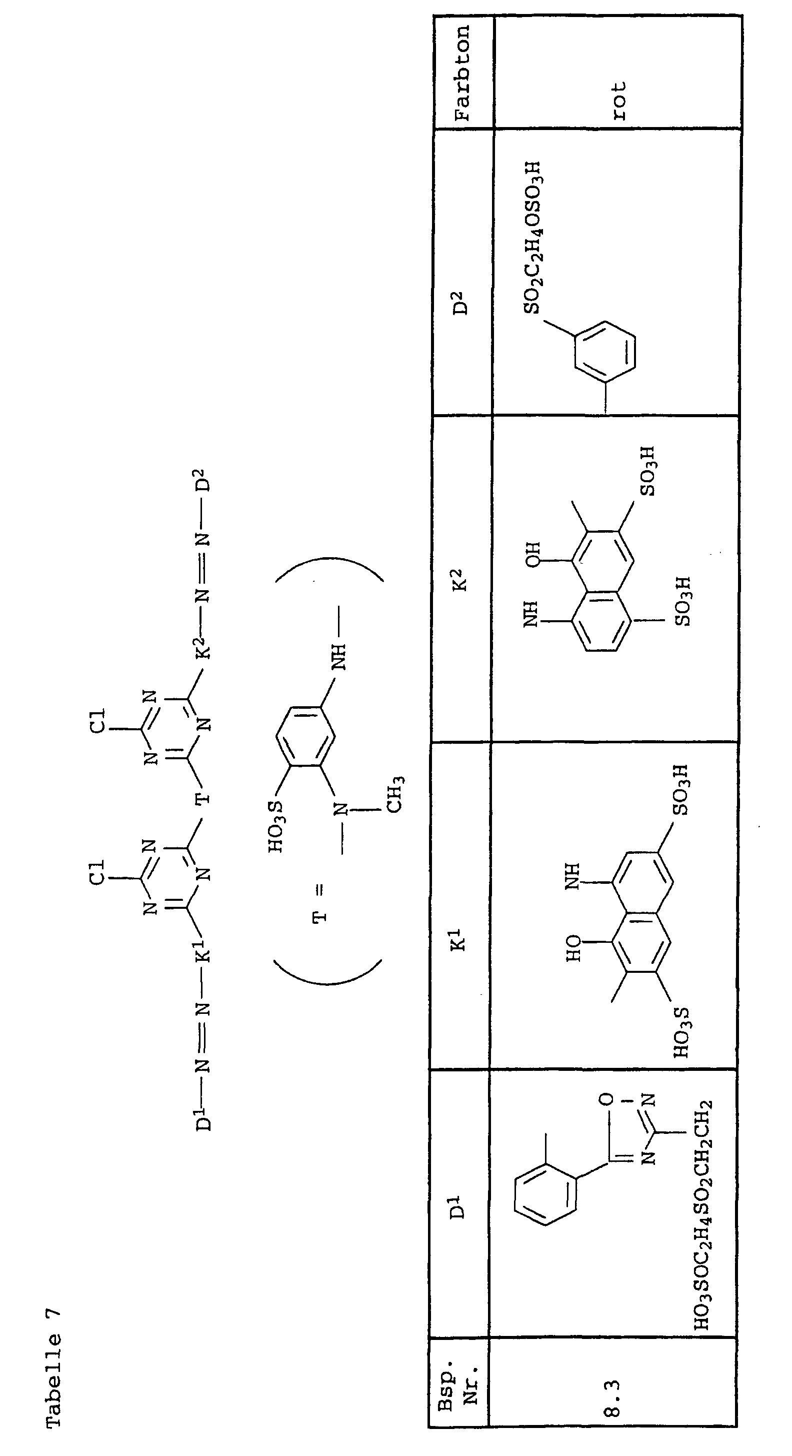

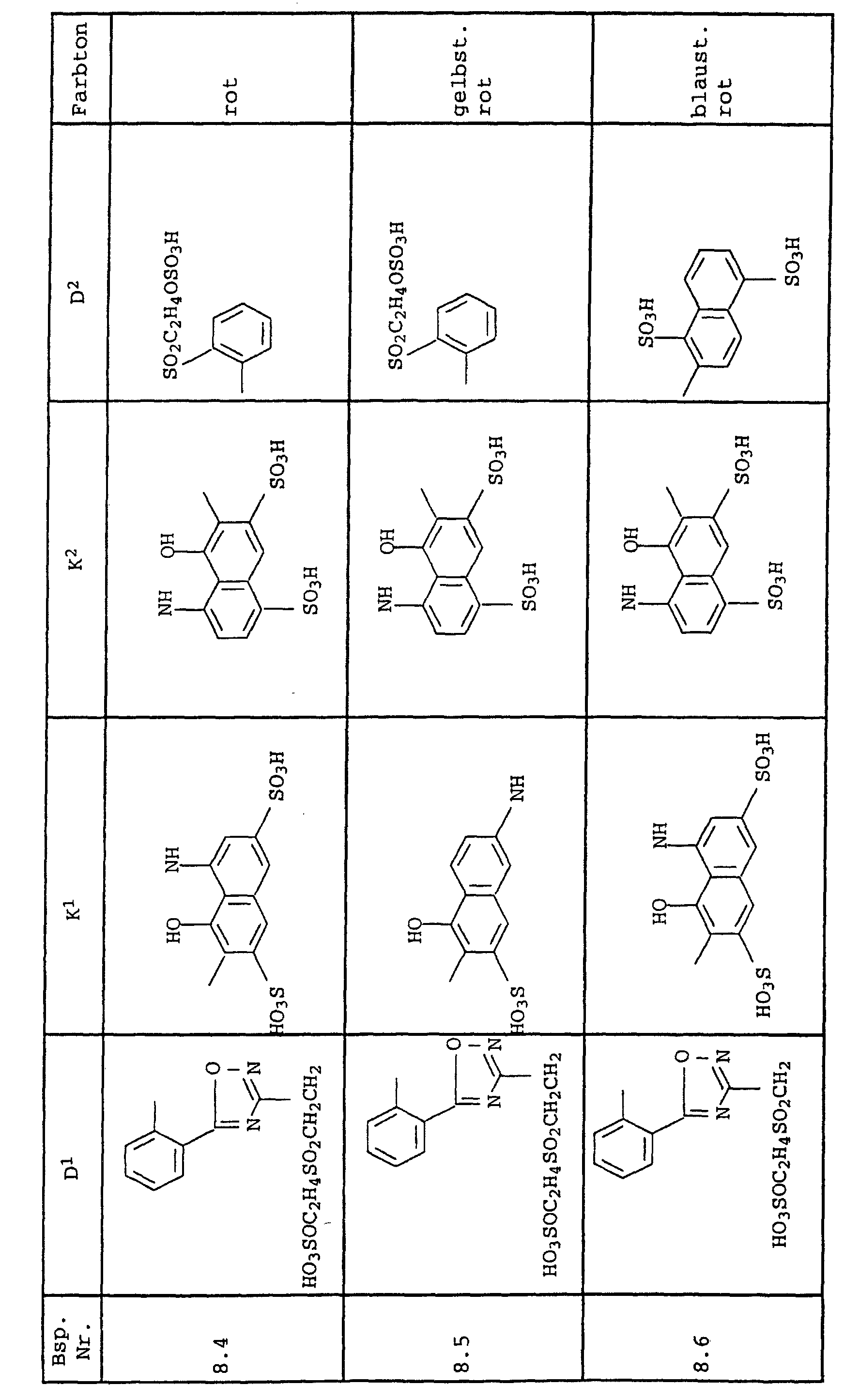

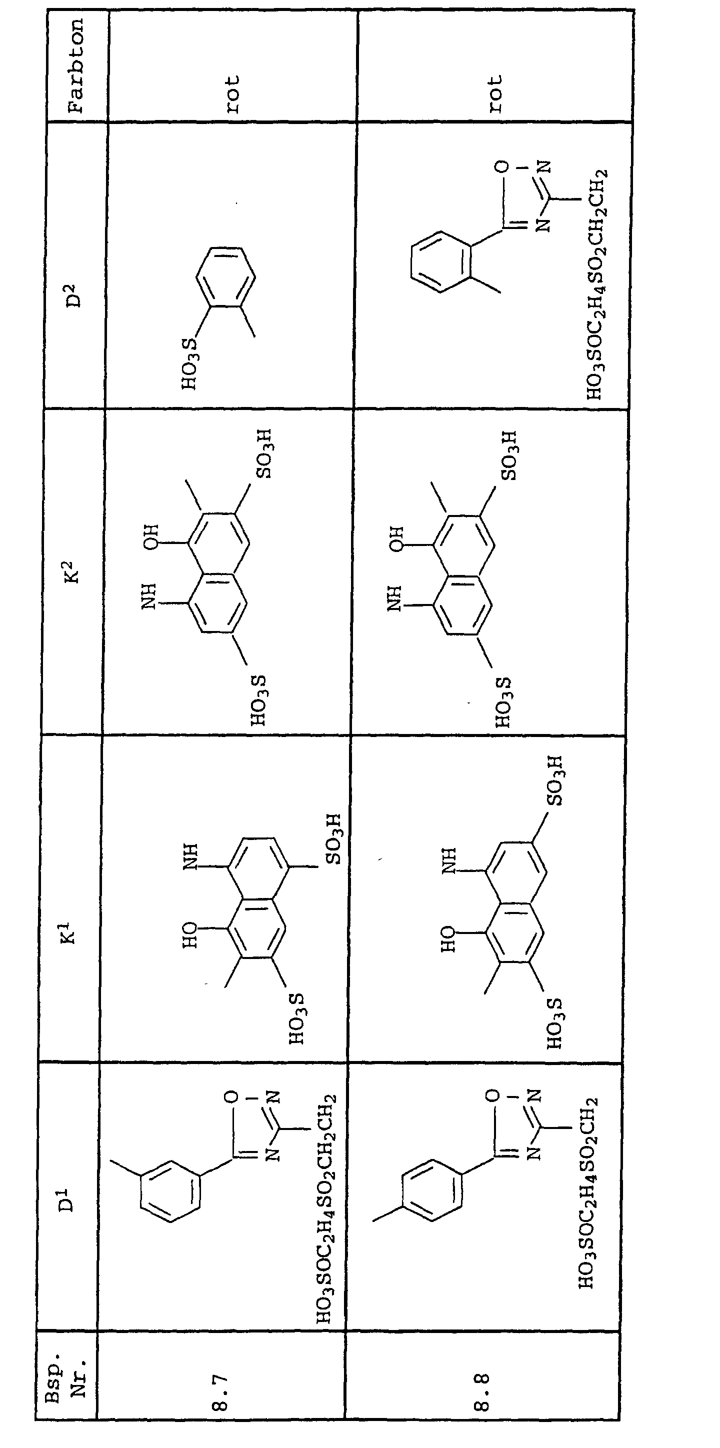

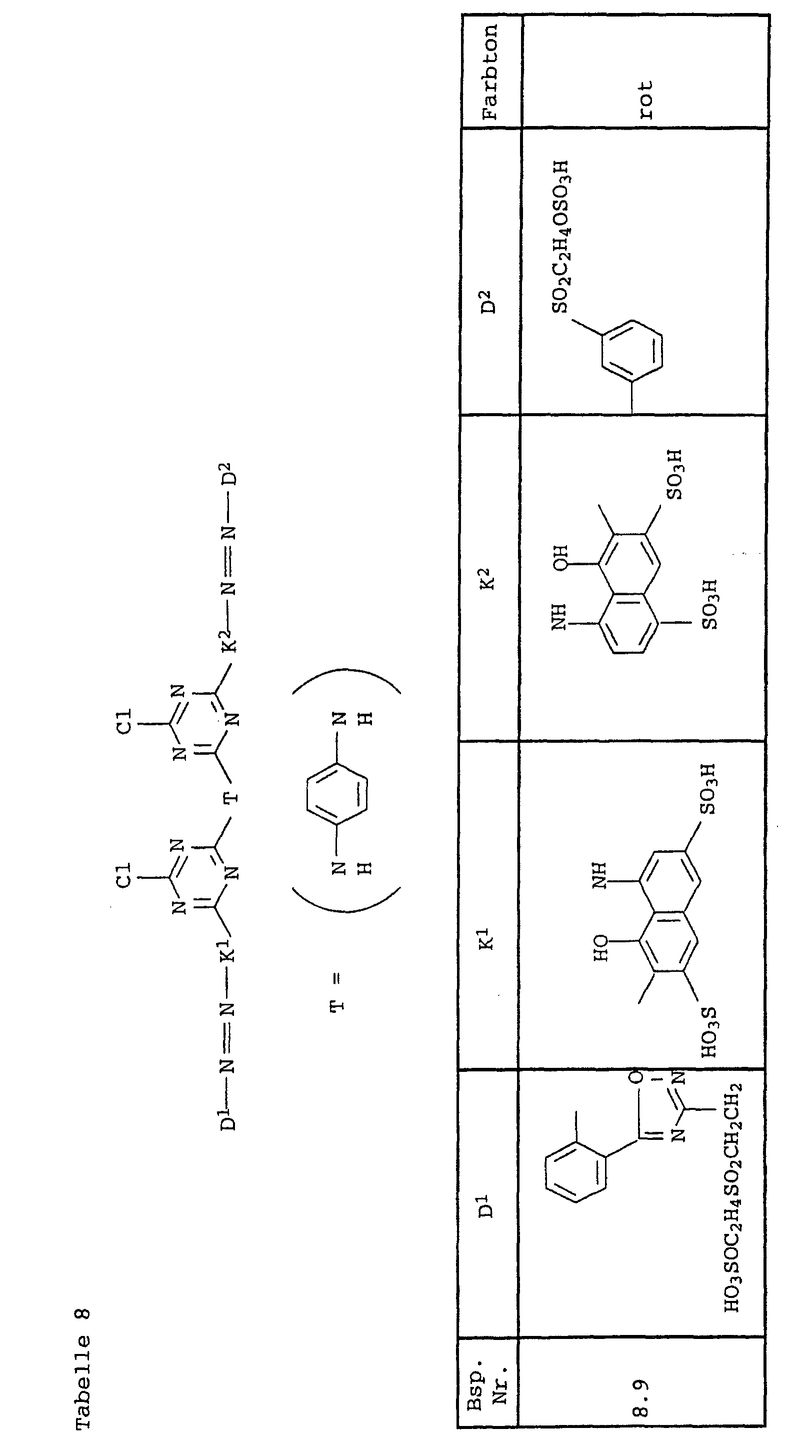

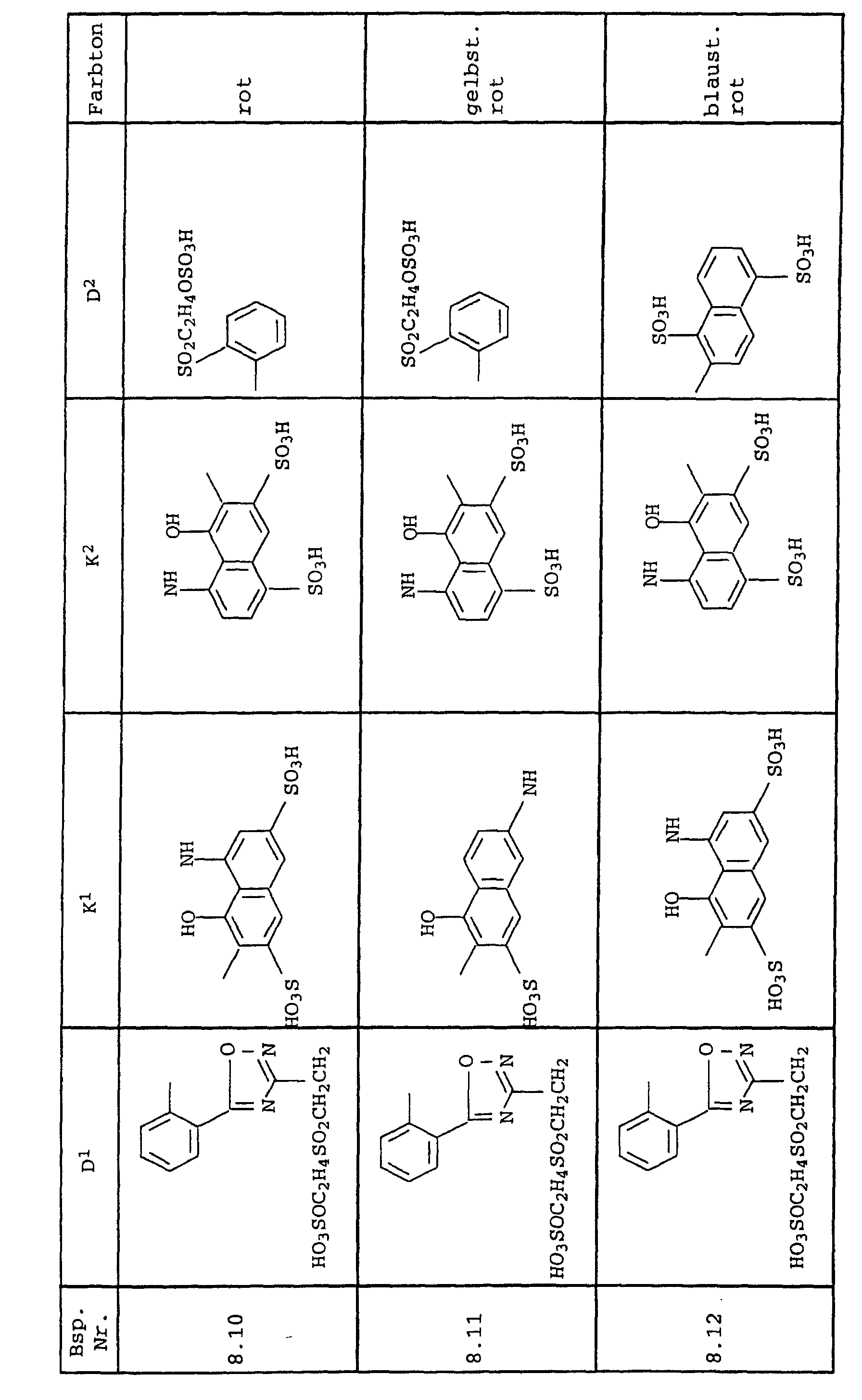

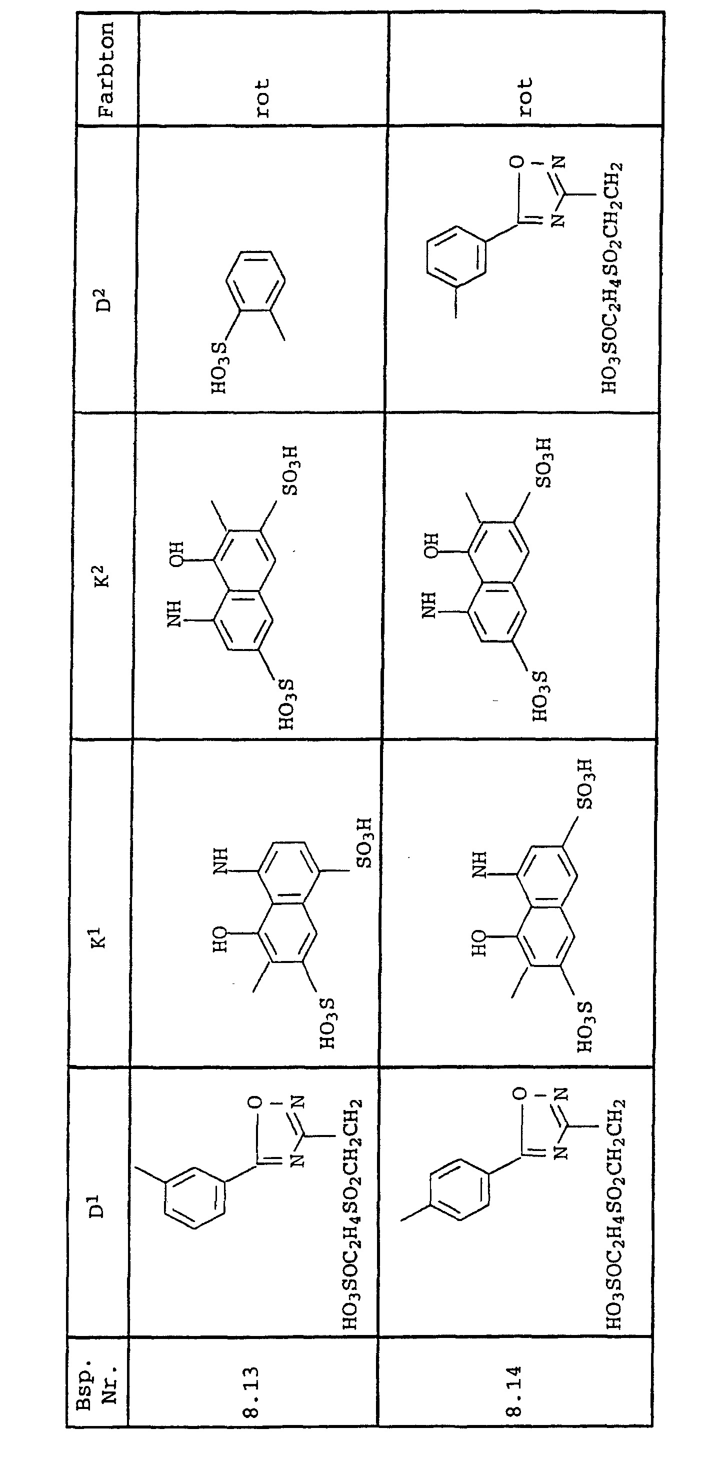

### Beispiele der Tabelle 9

Analog Beispiel 6.1 können mit der Kupplungskomponente der Formel 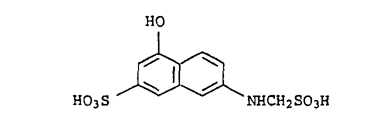 Diazofarbstoffe der Tabelle 9 hergestellt werden, die Baumwolle aus alkalischem Bad in einer rotbraunen Nuance färben. Sie verfügen über hohe Ausgiebigkeiten und ein sehr gutes Echtheitsprofil.

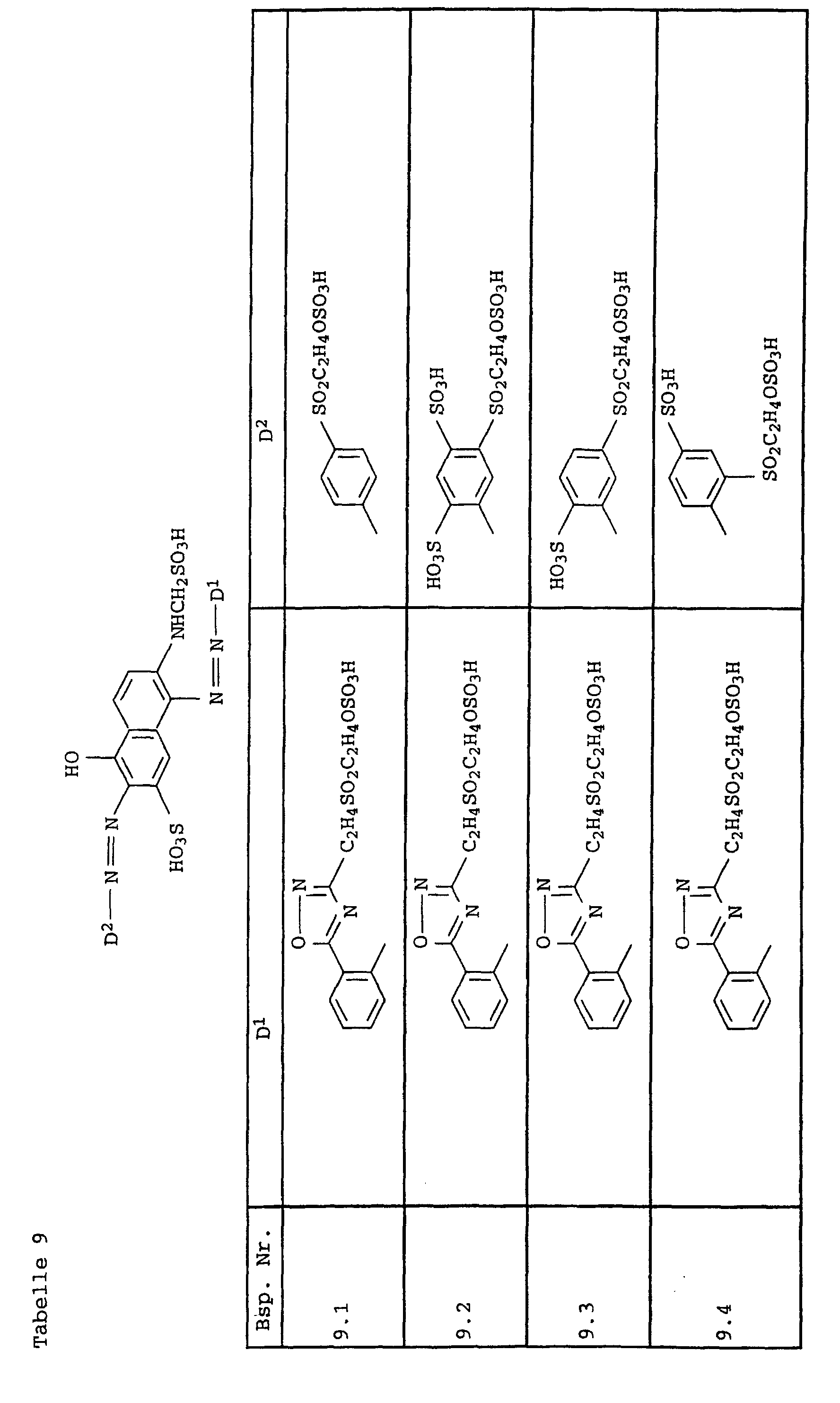

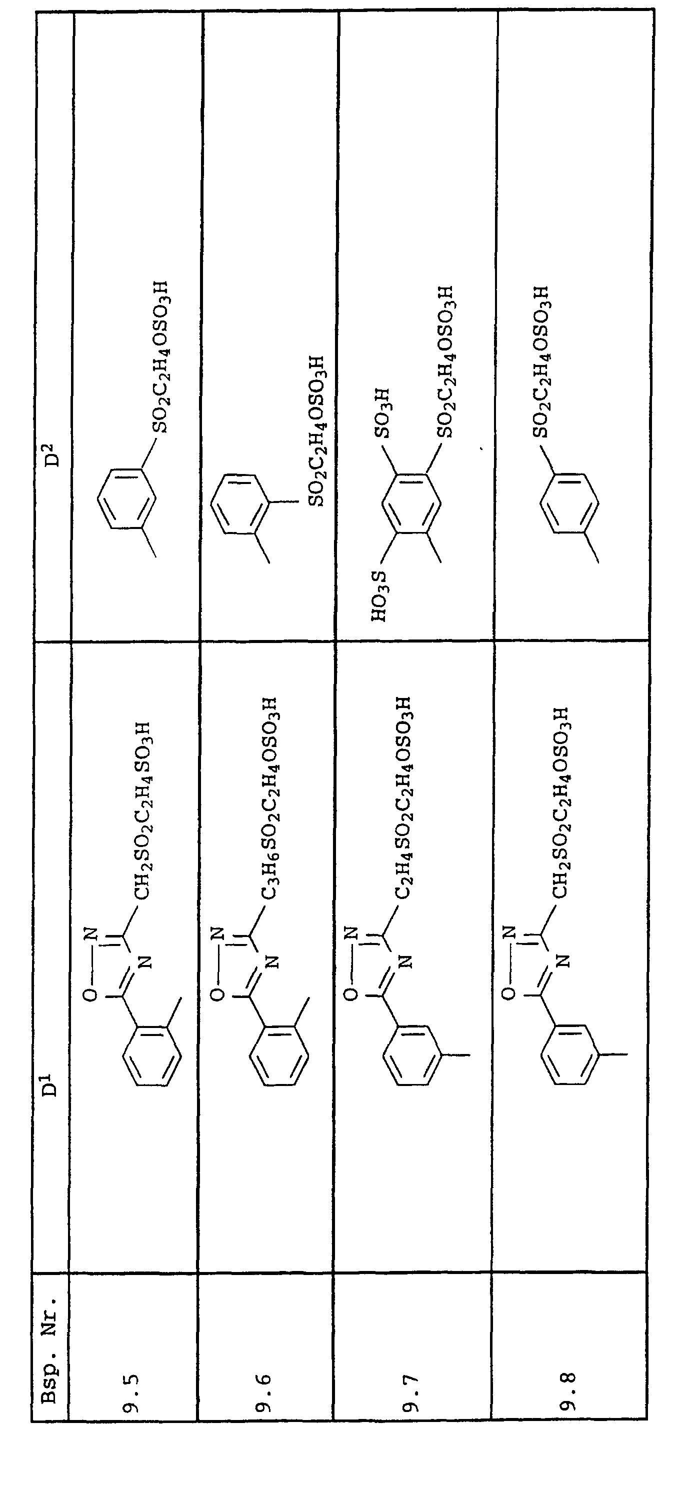

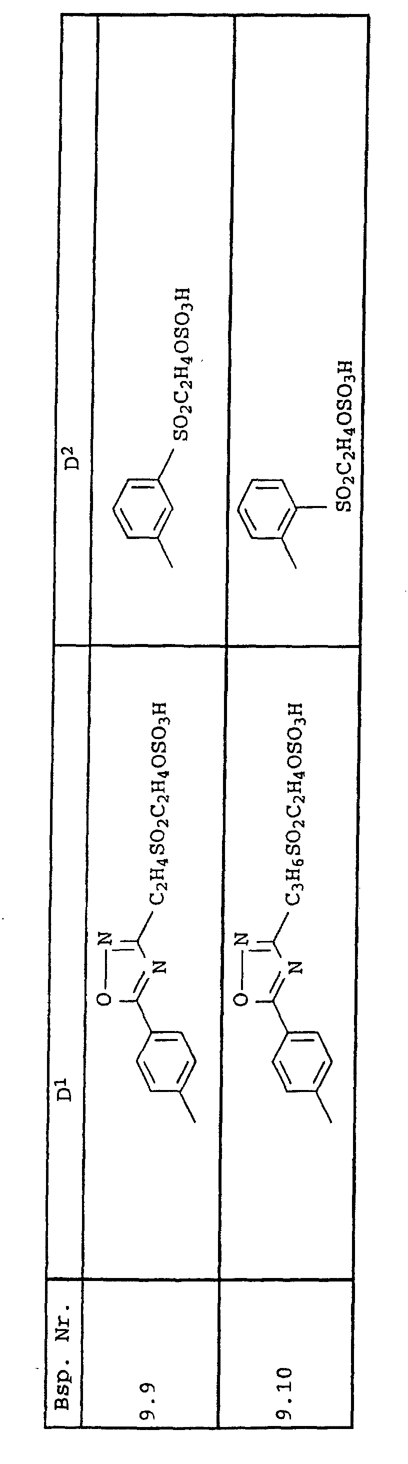

### Beispiel 10.1

a) 58,6 g 4-(2-Sulfatoethylsulfonyl)anilin wurden in 600 ml Eiswasser und 80 ml 30 gew.-%iger Salzsäure suspendiert und bei 0 bis 5°C mit 60 ml 3,33N wäßriger Natriumnitritlösung diazotiert. Nach zweistündigem Rühren bei 0 bis 5°C wurde der geringe Nitritüberschuß mit Amidosulfonsäure entfernt und 39,7 g Orthanilsäure zur Kupplung zugegeben. Die Kupplung erfolgte durch Zugabe von festem Natriumacetat bei pH = 3. Durch Zugabe von 300 g Natriumchlorid erhielt man 92 g eines gelben Farbstoffs der Formel 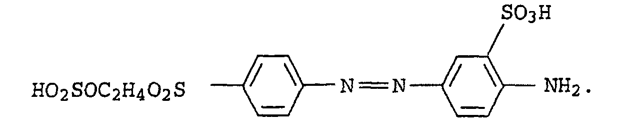
b) 37,7 g 5-(2'-Aminophenyl)-3-[2-(2-sulfatoethylsulfonyl)-ethyl] -1,2,4-oxadiazol wurden in 400 ml Eiswasser und 40 ml 30 gew.-%iger Salzsäure suspendiert und bei 0 bis 5°C mit 30 ml 3,33N wäßriger Natriumnitritlösung diazotiert. Nach zweistündigem Rühren bei 0 bis 5°C wurde ein leichter Nitritüberschuß mit Amidosulfonsäure entfernt und 25,7 g 2-Amino-5-hydroxynaphthalin-7-sulfonsäure zugegeben. Die Kupplung erfolgte durch Zugabe von festem Natriumacetat bei pH 2,5 bis 3. Nach Rühren über Nacht wurde der pH-Wert mit Natriumacetat auf 3,5 gestellt und das Produkt abfiltriert. Man erhielt 128 g eines roten Monoazofarbstoffs der Formel 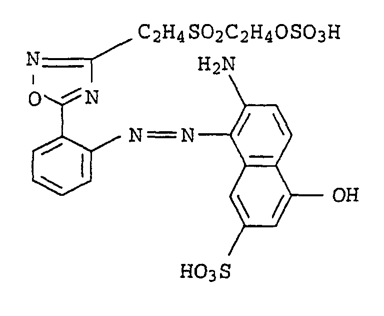
c) 92 g des unter 10.1a) hergestellten Monoazofarbstoffs wurden in 500 ml Eiswasser und 20 ml 30 gew.-%iger Salzsäure suspendiert und mit 15 ml 3,33N wäßriger Natriumnitritlösung diazotiert. Nach zweistündigem Rühren bei 0 bis 5°C wurde der geringe Nitritüberschuß mit Amidosulfonsäure entfernt. Zum so hergestellten Diazoniumsalz wurde 64 g des unter b) hergestellten Monoazofarbstoffs gegeben. Die Kupplung erfolgte durch Zugabe von festem Natriumacetat und Natriumcarbonat bei pH 5 bis 5,5. Durch Zugabe von 300 g Natriumchlorid wurden 102 g eines rotbraunen Triazofarbstoffs erhalten.

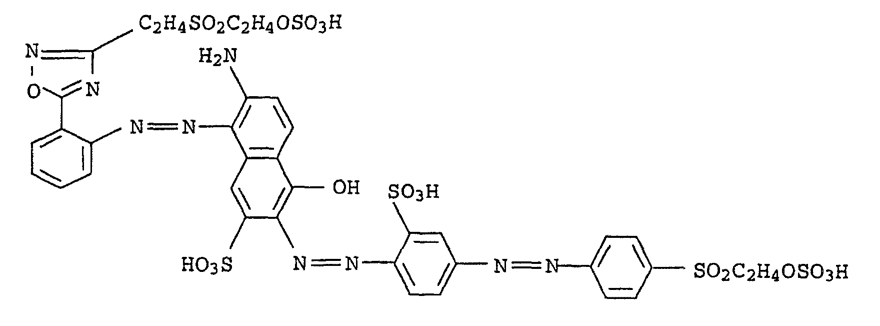

Die Triazofarbstoffe der Tabelle 10 können analog Beispiel 10.1 hergestellt werden. Sie färben Baumwolle im alkalischen Bad in der Nuance rotbraun und verfügen über ein sehr gutes Echtheitsprofil.

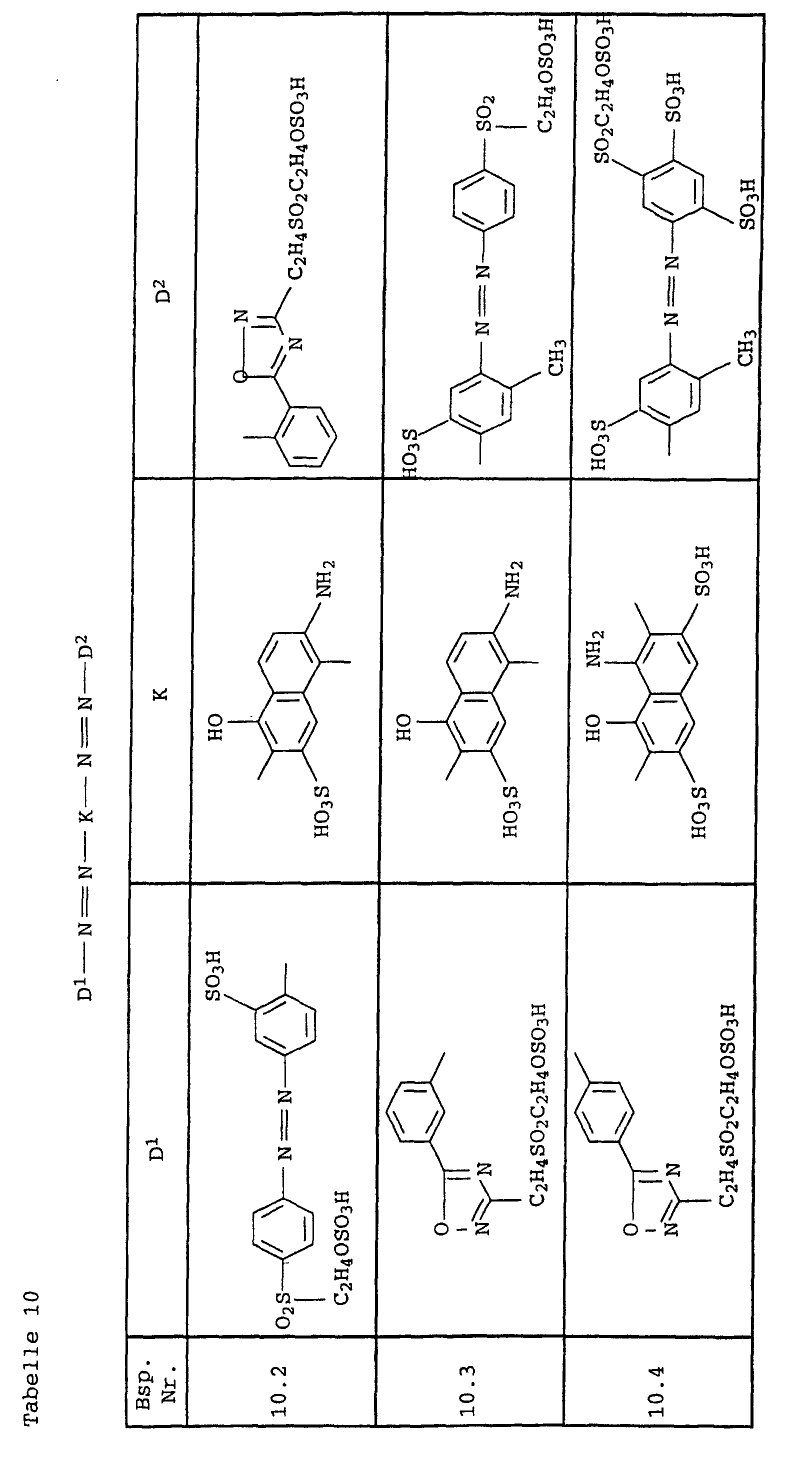

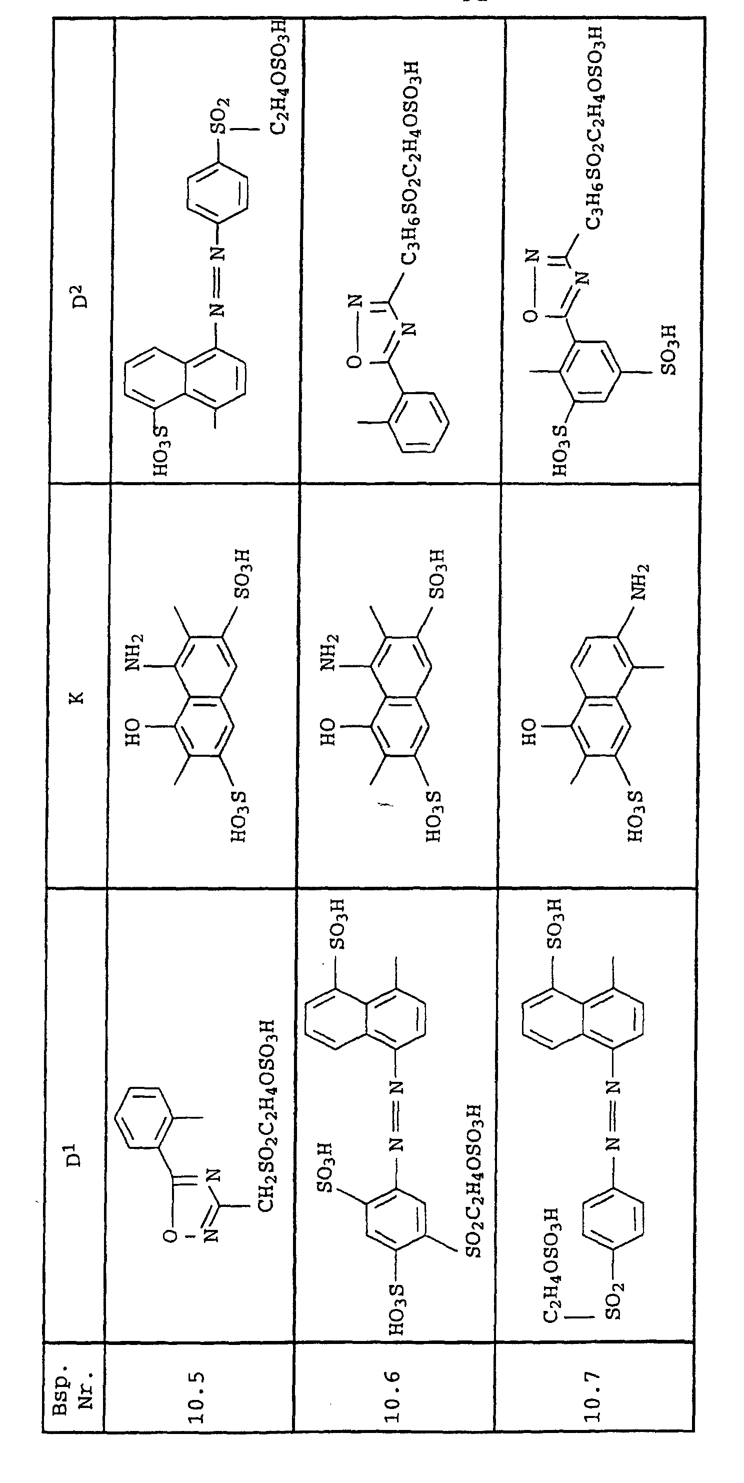

### Beispiel 11.1

41,4 g der Verbindung der Formel 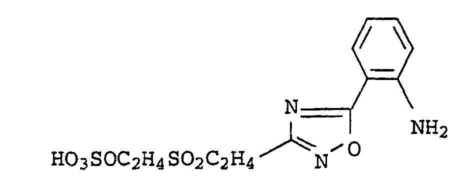 wurden in 250 ml Wasser bei 0 bis 5°C suspendiert. Der pH-Wert wurde mit 18 gew.-%iger Salzsäure auf 1 erniedrigt. Die Verbindung wurde durch Eintropfen von 30 ml 3,33N wäßriger Natriumnitritlösung diazotiert.

Nach 30minütigem Rühren bei 0 bis 5°C wurde der leichte Nitritüberschuß mit Amidosulfonsäure entfernt und die Suspension des Diazoniumsalzes anschließend mit 19,6 g des Pyridons der Formel 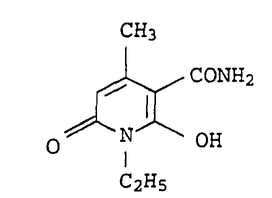 versetzt.

Der pH-Wert wurde durch Zugabe von Natriumcarbonat auf 4,5 bis 5,5 erhöht, dann wurde 4 h bei 0 bis 5°C und dem genannten pH-Wert bis zur vollständigen Kupplung nachgerührt.

Durch Fällung mit 100 g Natriumchlorid, Absaugen und Trocknen unter vermindertem Druck wurden 78 g eines grünstichig gelben elektrolythaligen Farbstoffs der Formel 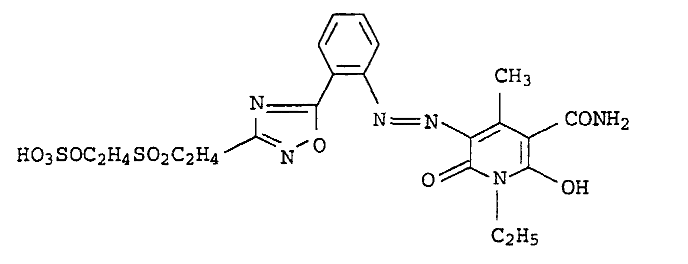 erhalten.

Analog Beispiel 11.1 werden die in der folgenden Tabelle 11 aufgeführten Farbstoffe erhalten.

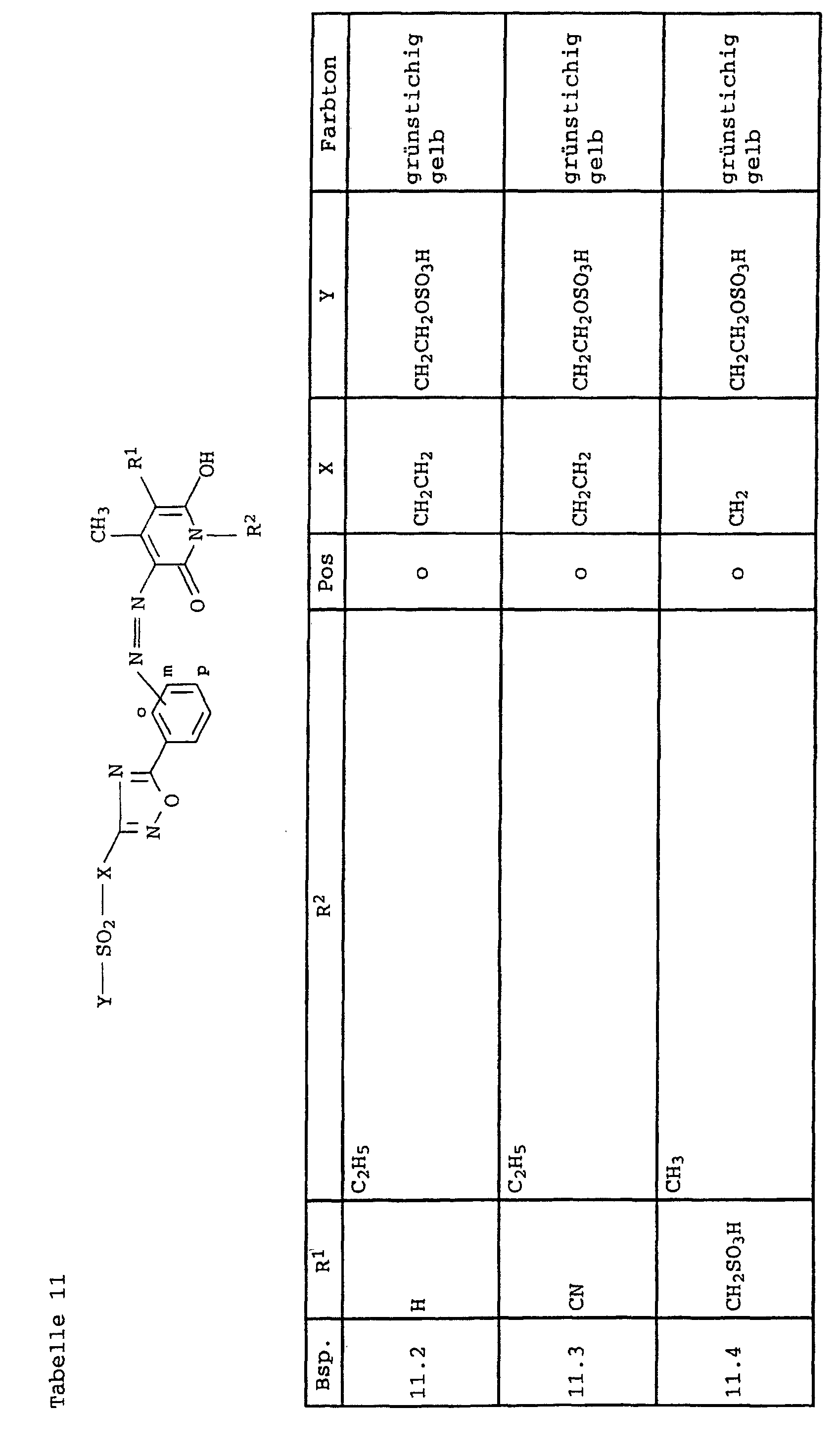

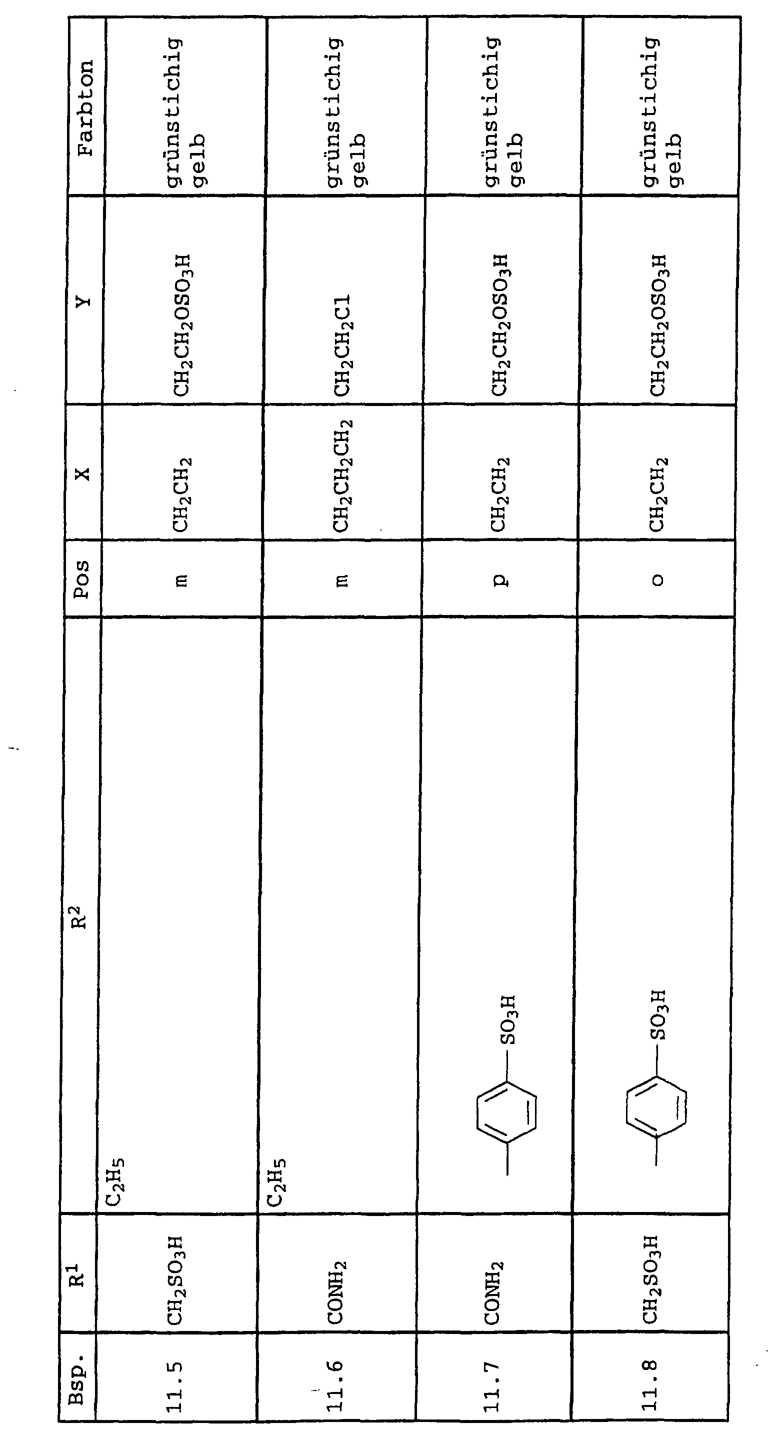

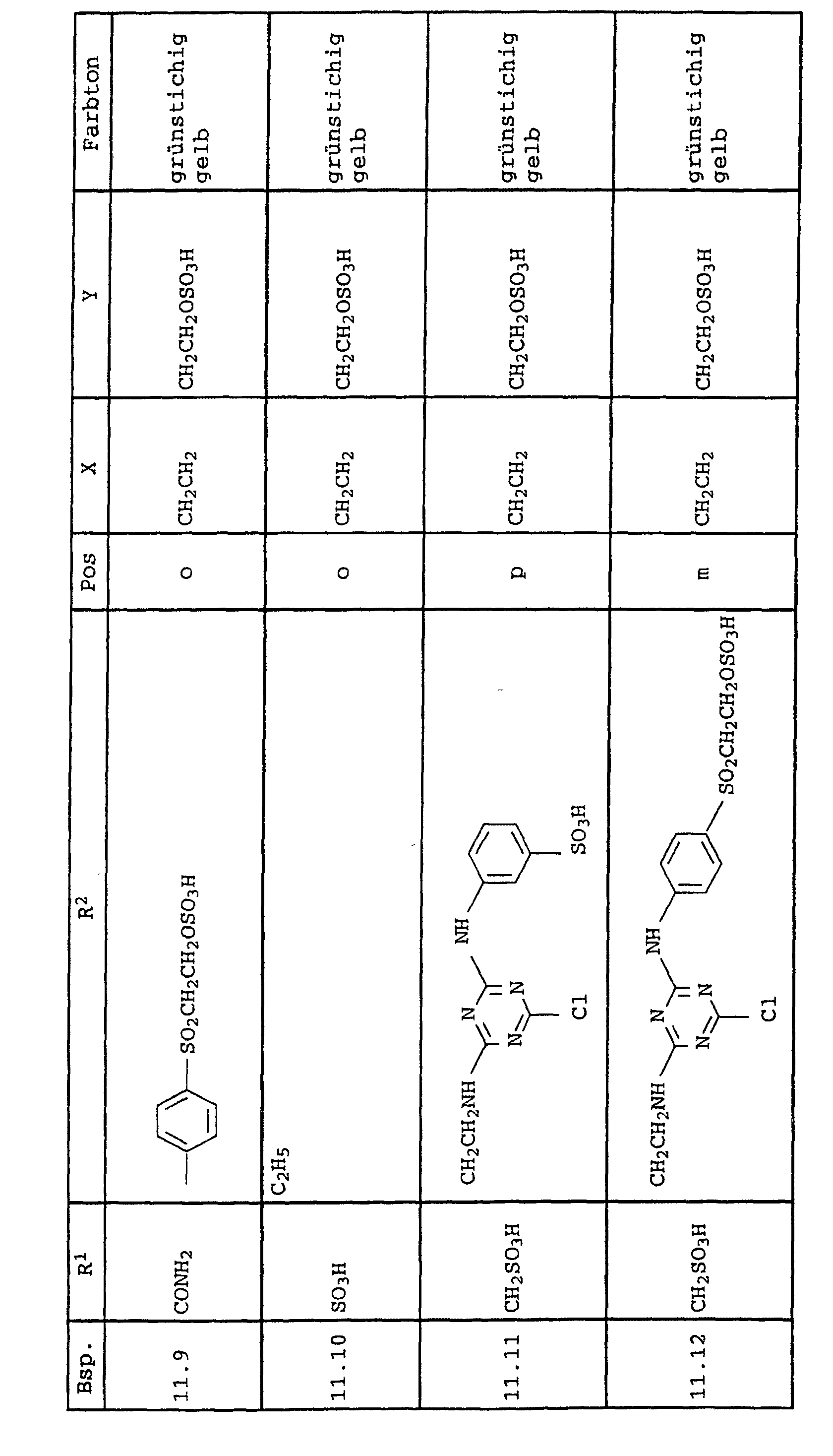

### Beispiel 12.1

Man verfuhr analog Beispiel 11.1, verwendete jedoch als Kupplungskomponente die Pyrazolverbindung der Formel

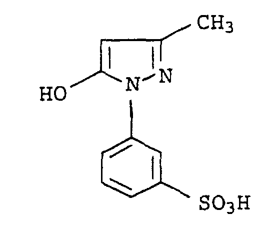

und erhielt nach Fällung mit Natriumchlorid, Absaugen und Trocknen unter vermindertem Druck den Farbstoff der Formel

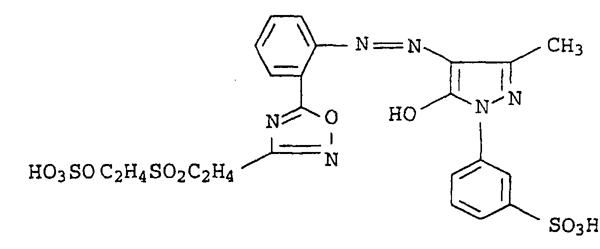

der Baumwolle nach den für Reaktivfarbstoffen üblichen Verfahren in klaren grünstichig gelben Tönen färbt.

Unter Verwendung vergleichbarer Kupplungskomponenten können die in der folgenden Tabelle 12 aufgeführten Farbstoffe erhalten werden.

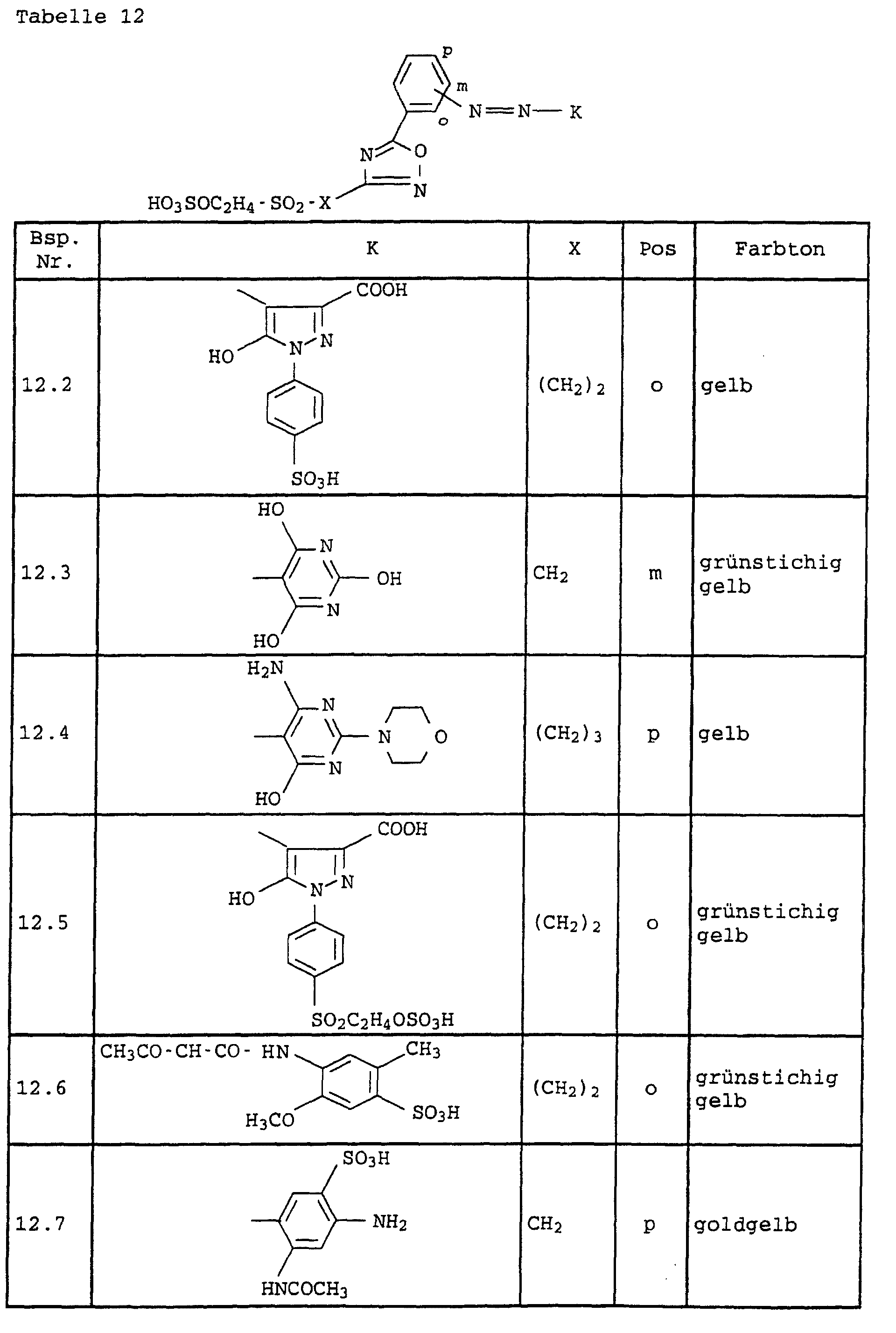

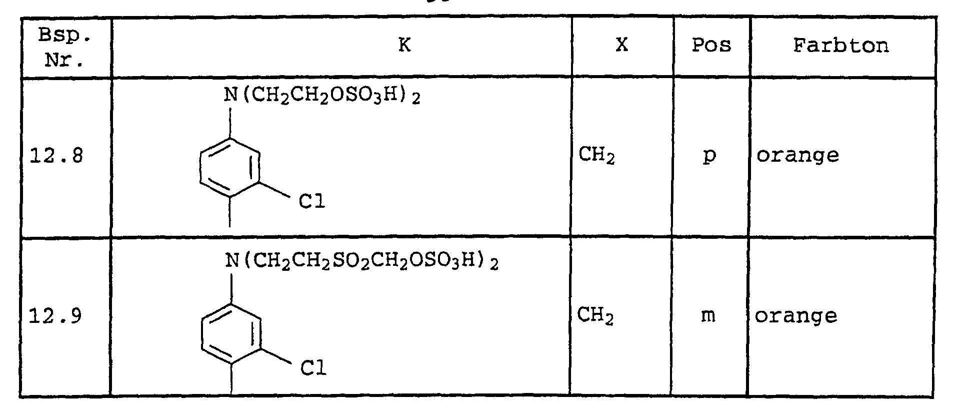

### Beispiel 13.1

54,8 g des Farbstoffs der Formel 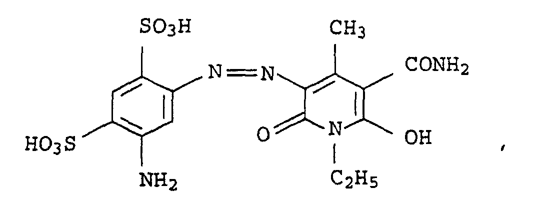 erhalten durch Diazotierung von 2,4-Diaminobenzol-1,5-disulfonsäure und kuppeln bei pH 5 mit 1-Ethyl-2-hydroxy-3-carbamoyl-4-methylpyrid-6-on, wurden in 350 ml Wasser bei einem pH-Wert von 5,5 gelöst und auf 0 bis 5°C abgekühlt. Anschließend wurden 18,4 g Cyanurchlorid, gelöst in 100 ml Aceton, zugetropft und dann 3 h bei 0 bis 5°C bis zur vollständigen Umsetzung nachgerührt. Während des Zutropfens und Nachrührens wurde der pH-Wert durch Zugabe von 5 gew.-%iger wäßriger Natriumhydrogencarbonatlösung zwischen 5,0 und 5,5 gehalten.

Nach Zugabe von 49,7 g der Verbindung der Formel 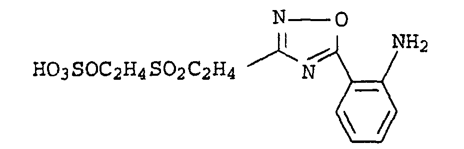 wurde auf 40 bis 45°C erwärmt und 5 h bei dieser Temperatur nachgerührt, wobei der pH-Wert mit 5 gew.-%iger wäßriger Natriumhydrogencarbonatlösung zwischen 5,5 und 6,0 gehalten wurde.

Nach Fällung mit 200 g Natriumchlorid, Absaugen und Trocknen wurde der Farbstoff der Formel 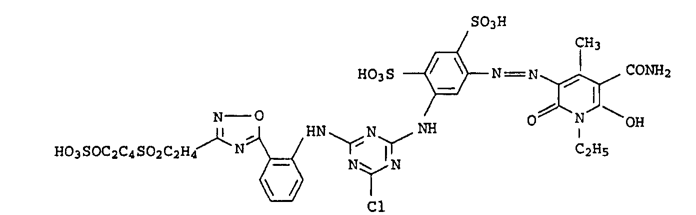 isoliert, der Baumwolle entweder nach dem Ausziehverfahren bei 40 bis 50°C oder dem Kaltverweilverfahren in grünstichigen Gelbtönen färbt.

In analoger Weise werden die in der folgenden Tabelle 13 aufgeführten Farbstoffe erhalten.

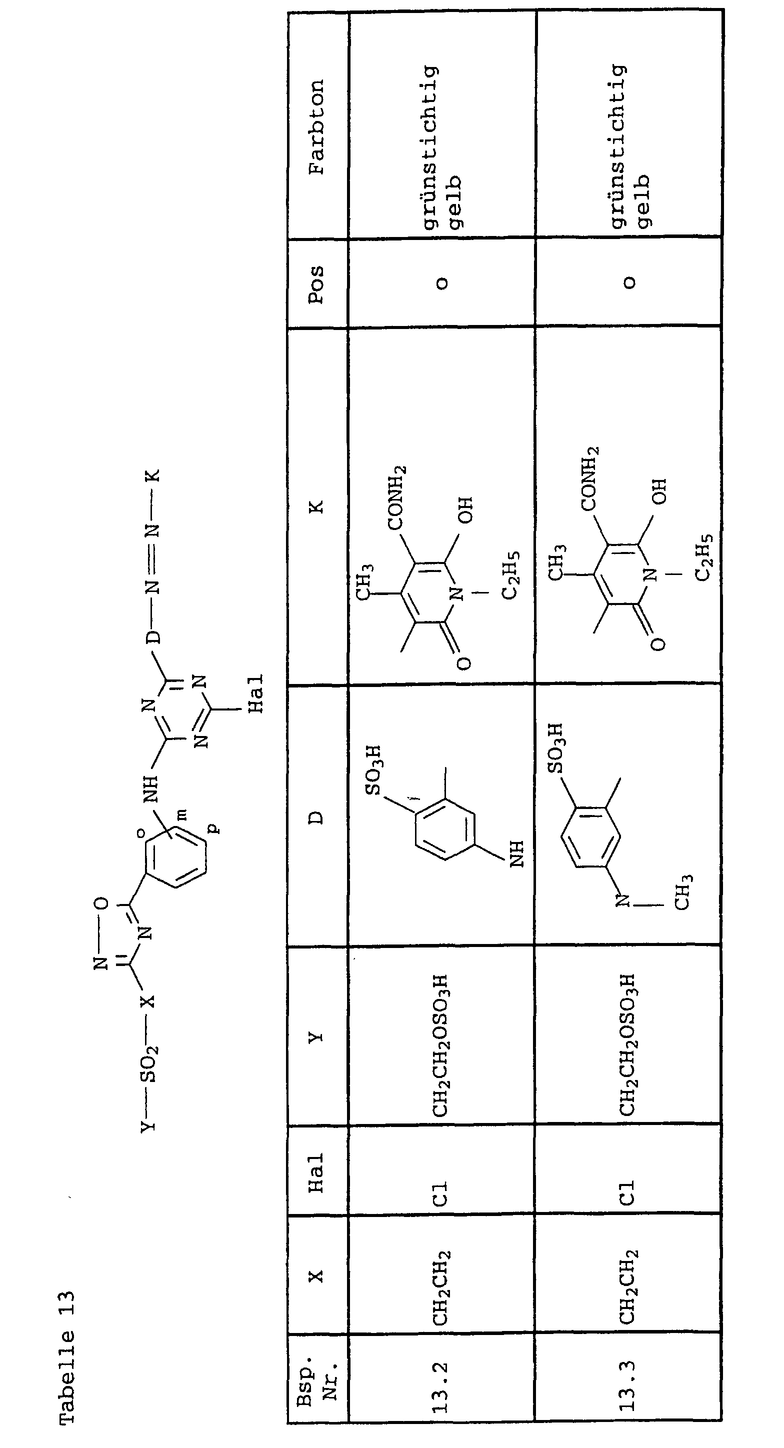

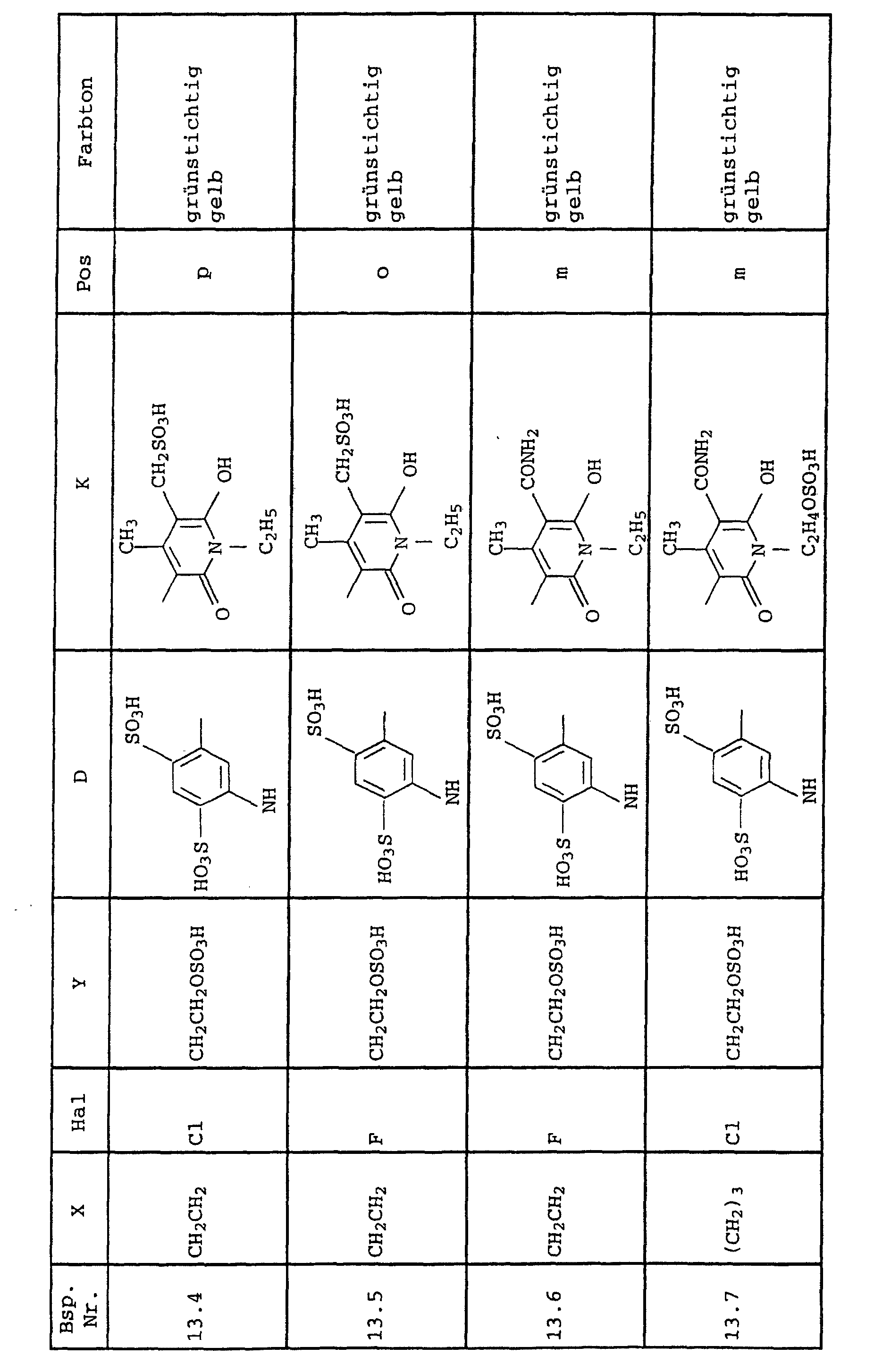

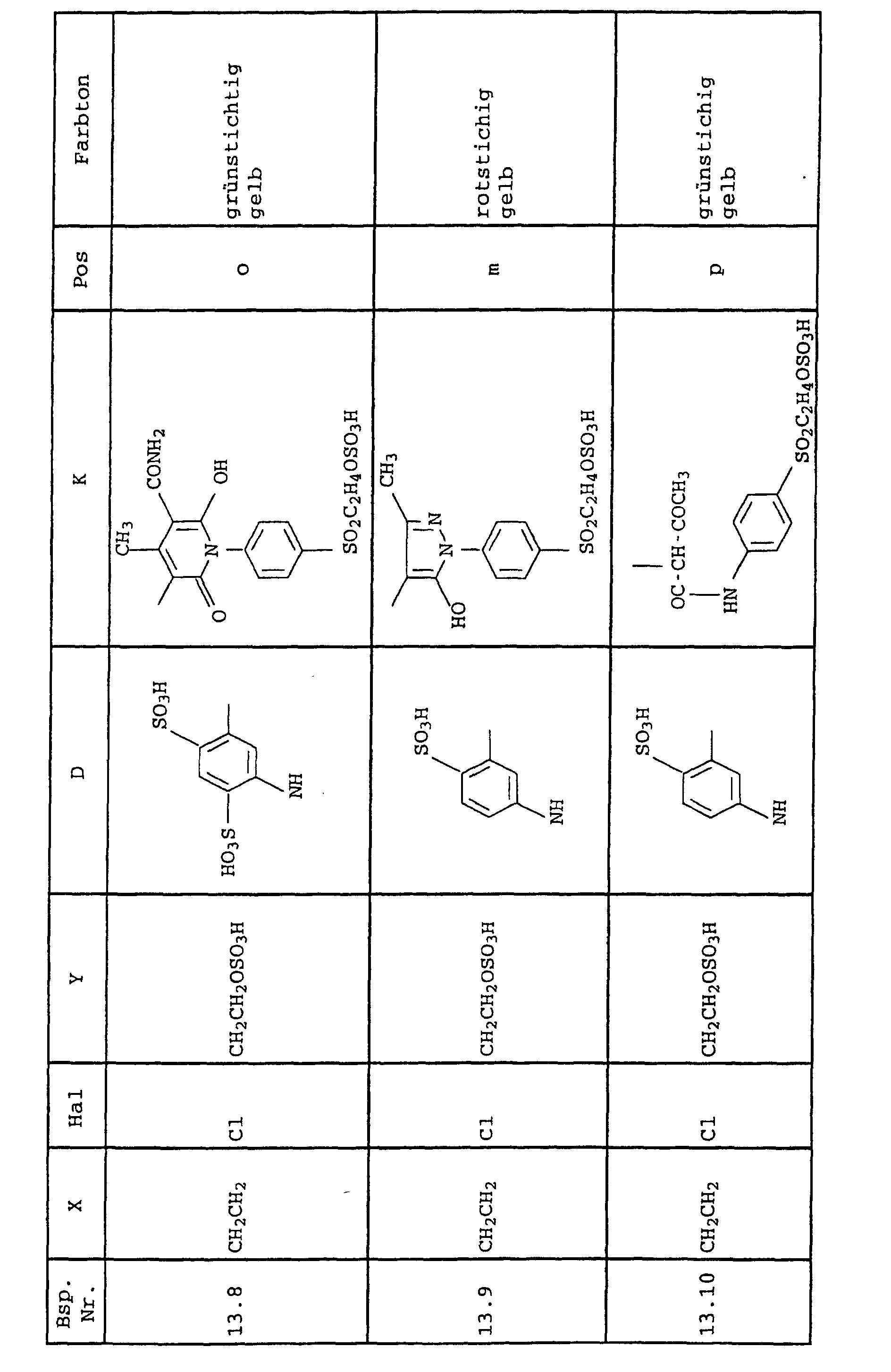

### Beispiel 14.1

85,1 g des Farbstoffs der Formel 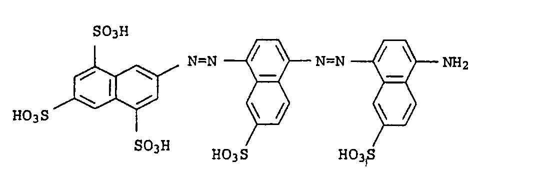 wurden in 750 ml Wasser bei 0 bis 5°C und einem pH-Wert von 5,5 vorgelegt. Anschließend wurden 18,4 g Cyanurchlorid, gelöst in 150 ml Aceton, zugetropft, dabei wurde der pH-Wert durch Zugabe von 5 gew.-%iger wäßriger Natriumhydrogencarbonatlösung zwischen 5,0 und 5,5 gehalten.

Nach vollständiger Umsetzung wurden 50,5 g der Verbindung der Formel 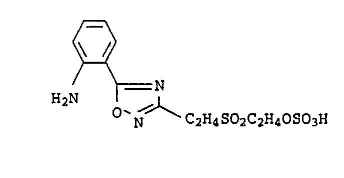 zugegeben und die Temperatur auf 35 bis 40*°*C erhöht. Es wurde 5 h bei 35 bis 40°C nachgerührt, wobei der pH-Wert mit 5 gew.-%iger wäßriger Natriumhydrogencarbonatlösung zwischen 5,5 und 6,0 gehalten wurde.

Nach Fällung mit 200 g Natriumchlorid, Absaugen und Trocknen wurde der Farbstoff der Formel 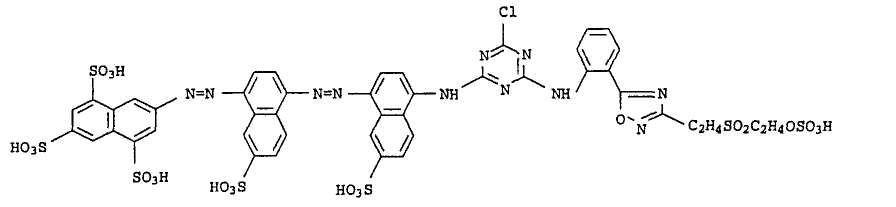 isoliert, der Baumwolle nach den für Reaktivfarbstoffen üblichen Verfahren in rotstichigbraunen Tönen färbt.

In analoger Weise werden die in der folgenden Tabelle 14 aufgeführten Farbstoffe erhalten.

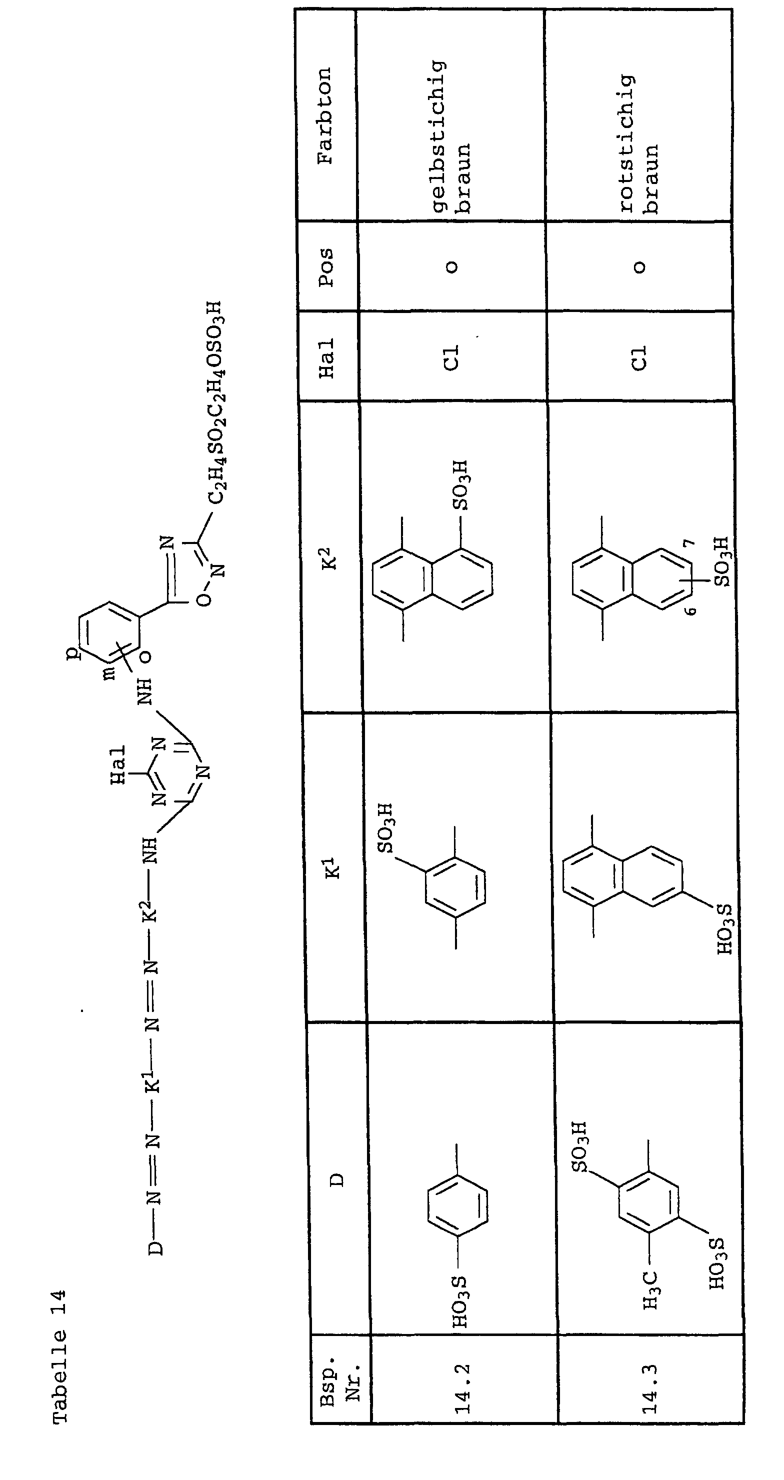

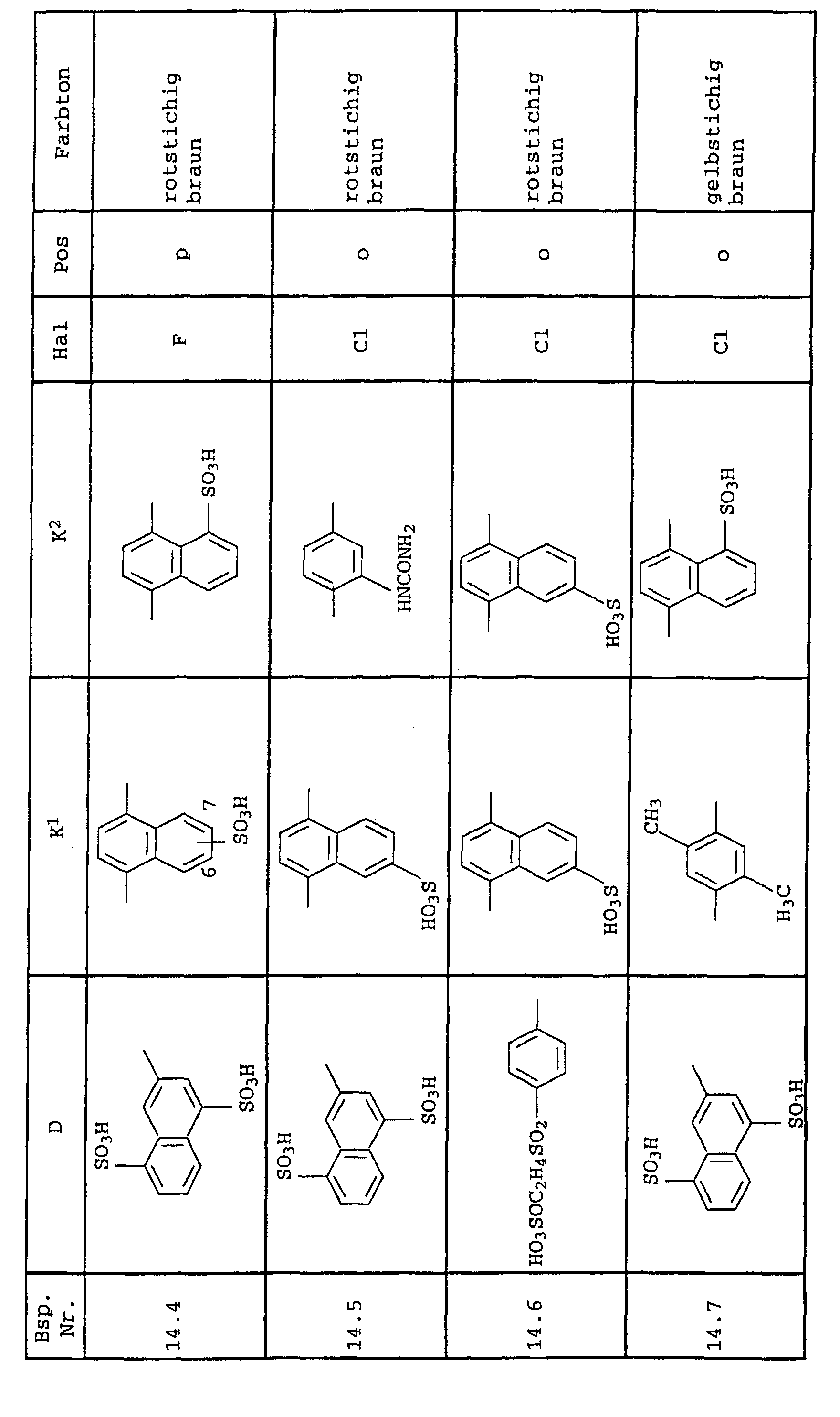

### Beispiel 15.1

a) 52.4 g der Verbindung der Formel 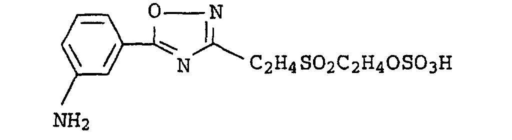 wurden analog Beispiel 11.1 dianotiert und mit 17,9 g Clevesäure, neutral gelöst in 100 ml Wasser, versetzt. Anschließend wurde der pH-Wert mit gesättigter wäßriger Natriumacetatlösung auf 4,5 bis 5,0 gestellt und 24 h bei Raumtemperatur bis zur vollständigen Kupplung nachgerührt.
   Der pH-Wert wurde mit 18 gew.-%iger Salzsäure erniedrigt. Nach dem Abkühlen auf 0 bis 5°C wurde durch Zugabe von 30 ml 3,33N wäßriger Natriumnitritlösung, wie in Beispiel 11.1 beschrieben, diazotiert.
   Nach vollständiger Diazotierung wurden erneut 17,9 g Clevesäure, neutral gelöst in 100 ml Wasser, zugegeben. Anschlieβend der pH-Wert auf 4,0 erhöht und 25 h bei Raumtemperatur bis zur vollständigen Kupplung nachgerührt.
   Durch Fällung mit Ethanol, Absaugen und Trocknen unter vermindertem Druck wurden 80 g elektrolythaltiger Farbstoff der Formel 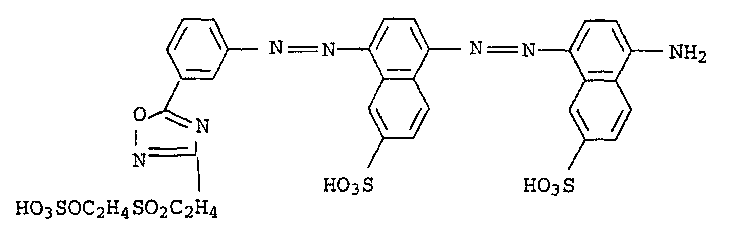 erhalten.
b) 83 g des unter a) beschriebenen Farbstoffs wurden analog Beispiel 13.1 mit Cyanurchlorid und der Verbindung der Formel 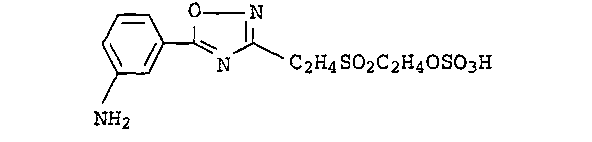 zum Farbstoff der Formel 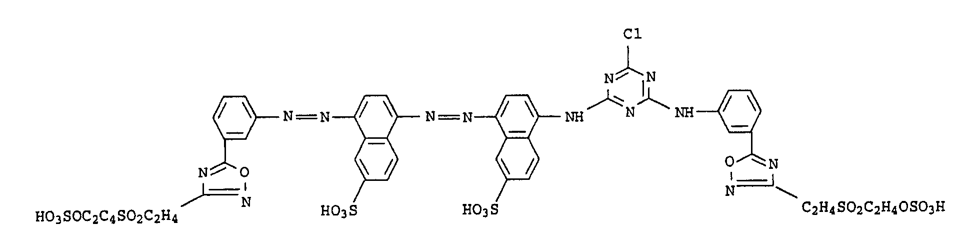 umgesetzt.

Analog Beispiel 15.1 werden die in der folgenden Tabelle 15 aufgeführten Farbstoffe erhalten.

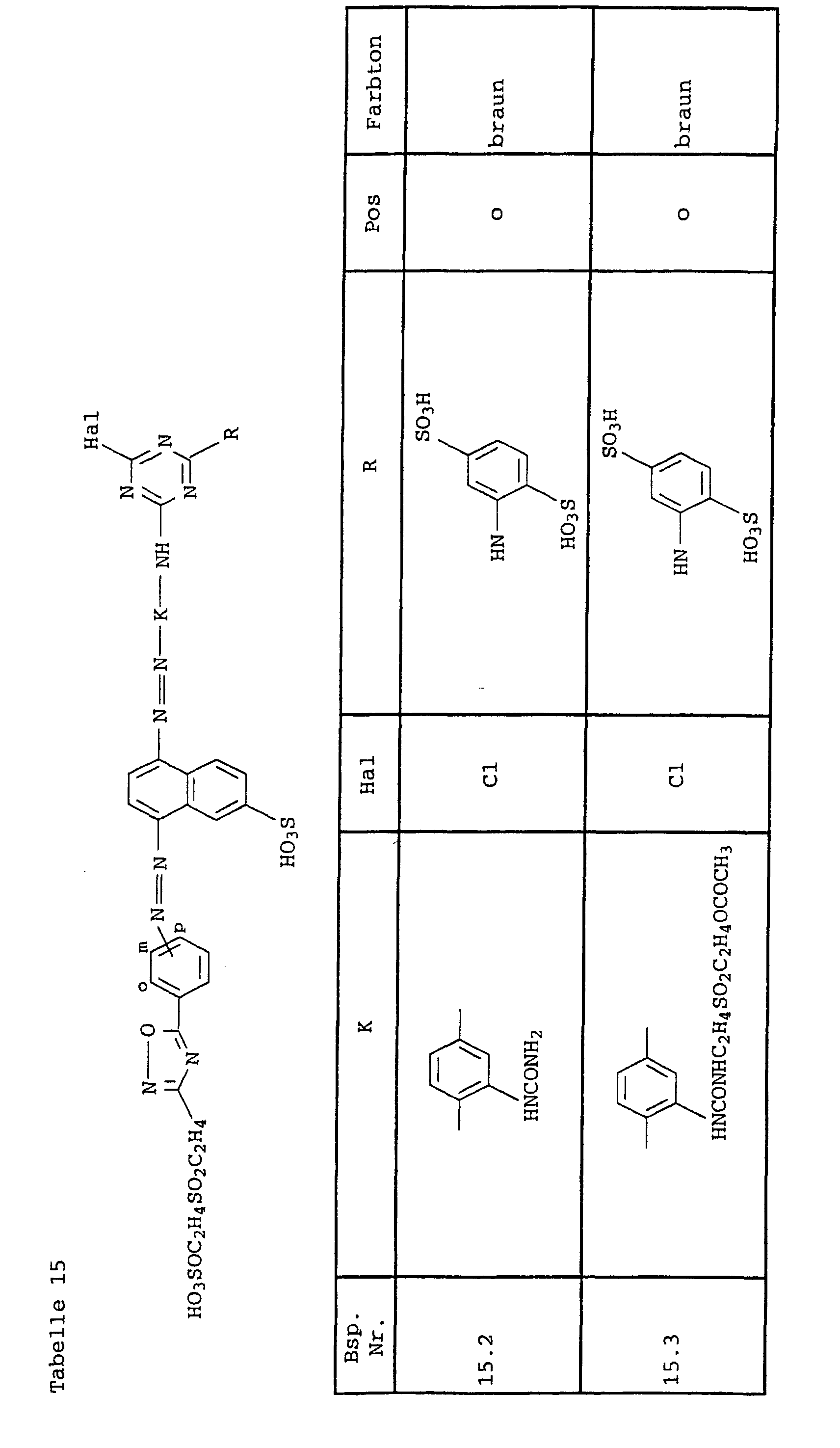

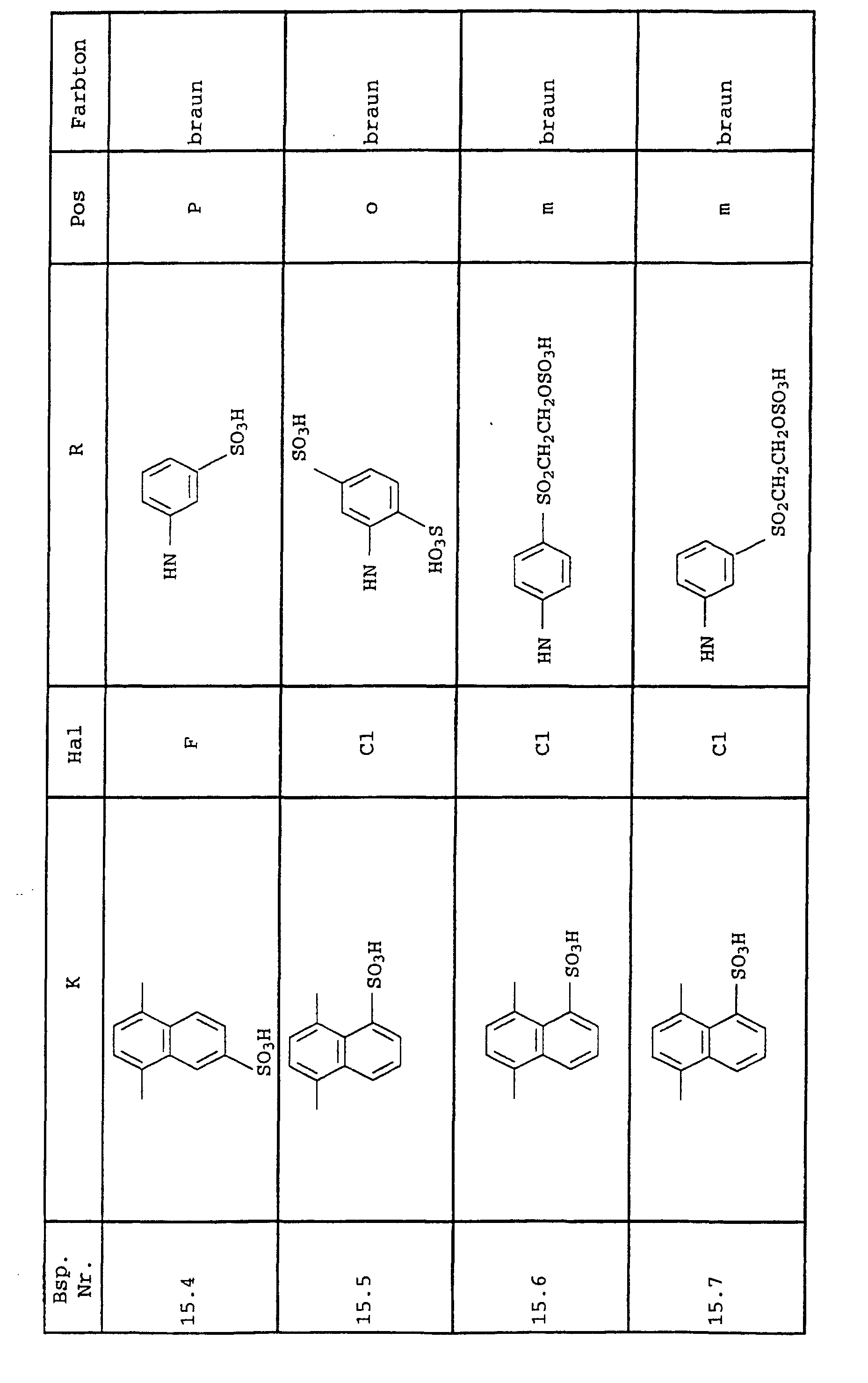

### Beispiel 16.1

Zu einer Suspension von 75 g des Dichlortriazinfarbstoffs der Formel 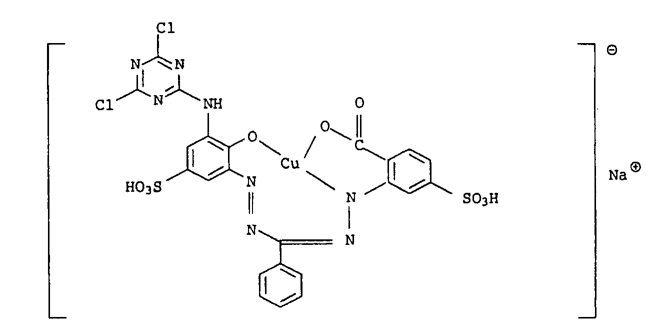 in 600 ml Wasser wurde bei einem pH-Wert von 7 eine Lösung von 41,4 g der Verbindung der Formel 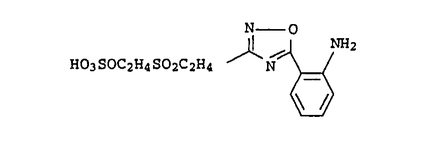 in 600 ml Wasser eingetragen. Die Suspension wurde auf 40 bis 45°C erwärmt und der pH-Wert wurde durch Zusatz von Natriumhydrogencarbonat am Neutralpunkt gehalten. Nach 2,5 h wurde der gebildete Farbstoff der Formel 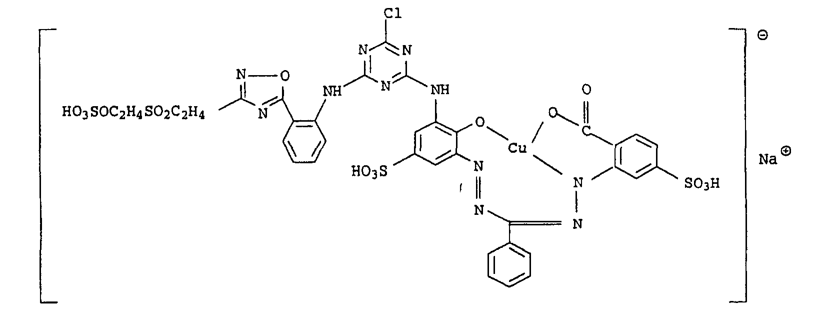 mit 250 g Natriumchlorid ausgesalzen, abfiltriert und getrocknet. Das erhaltene dunkelblaue Farbstoffpulver färbt Baumwolle in klarem blauen Ton. Die Färbungen sind licht- und naßecht, sie weisen eine bemerkenswerte Stabilität gegenüber oxidativen Einflüssen auf.

Analog Beispiel 16.1 können die in folgender Tabelle 16 aufgeführten blauen Farbstoffe erhalten werden.

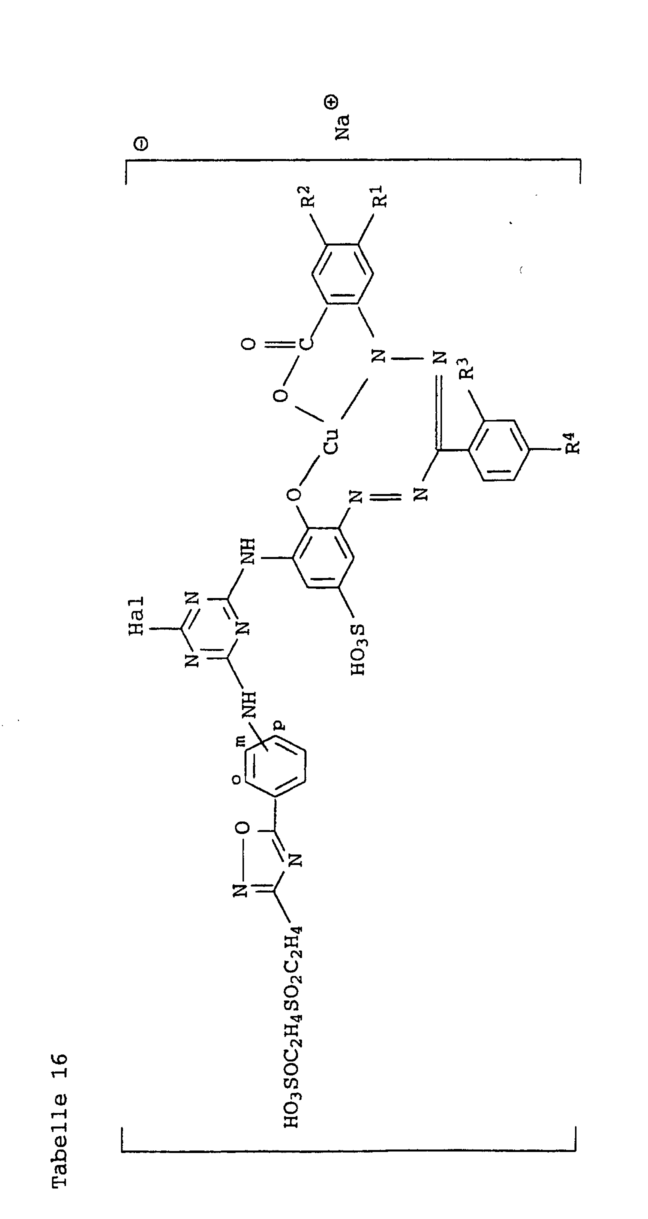

| Bsp. Nr. | R¹ | R² | R³ | R⁴ | Hal | Pos |
|---|---|---|---|---|---|---|
| 16.2 | H | SO₃H | H | H | F | o |
| 16.3 | SO₃H | H | H | H | Cl | m |
| 16.4 | H | SO₃H | SO₃H | H | Cl | m |
| 16.5 | H | SO₃H | H | SO₂CH₂CH₂Cl | Cl | o |
| 16.6 | H | NHCOCBr=CH₂ | SO₃H | H | Cl | o |
| 16.7 | H | SO₂CH₂CH₂OSO₃H | SO₃H | H | Cl | p |

### Beispiel 17.1

19,1 g der Verbindung der Formel 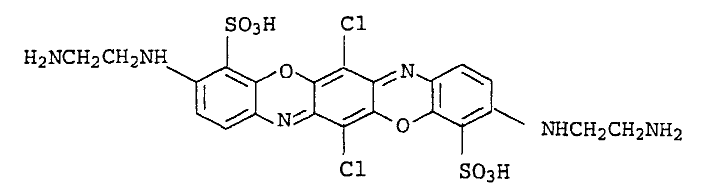 wurden in 1000 ml Wasser eingerührt, wobei mit Natronlauge ein pH-Wert von 10 eingestellt wurde. Diese Lösung wurde in eine 40 bis 50°C warme, auf einen pH-Wert von 6 bis 8 gestellte Lösung des Kondensationsproduktes aus 11,1 g Cyanurchlorid mit 24,9 g der Verbindung der Formel 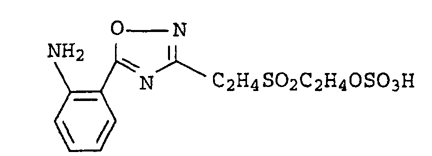 getropft. Unter Aufrechterhaltung eines pH-Wertes von 6,5 bis 7 wurde bei 60°C gerührt bis die Umsetzung beendet war, was etwa 1 h in Anspruch nahm. Nach Abkühlen auf Raumtemperatur wurde mit 500 g Kochsalz ausgesalzen, der ausgefallene Farbstoff abgesaugt und getrocknet. Er färbt Baumwolle in brillantem blauen Ton mit guten Echtheiten und entspricht der Formel 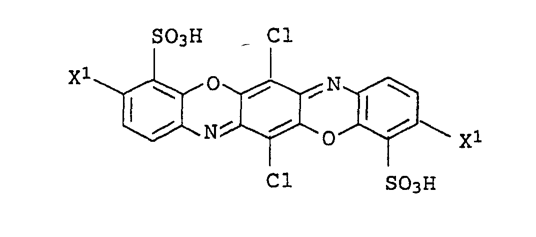 mit X¹:

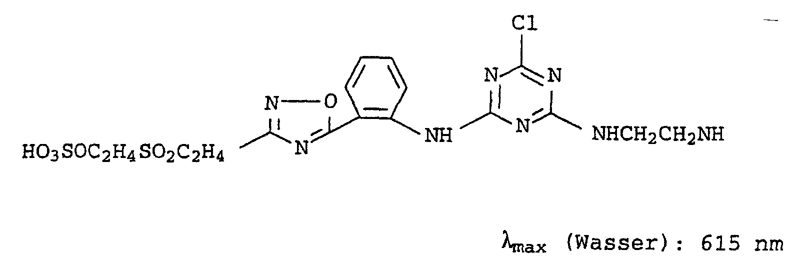

Weitere Farbstoffe, die in analoger Weise erhalten werden, sind in Tabelle 17 aufgeführt.

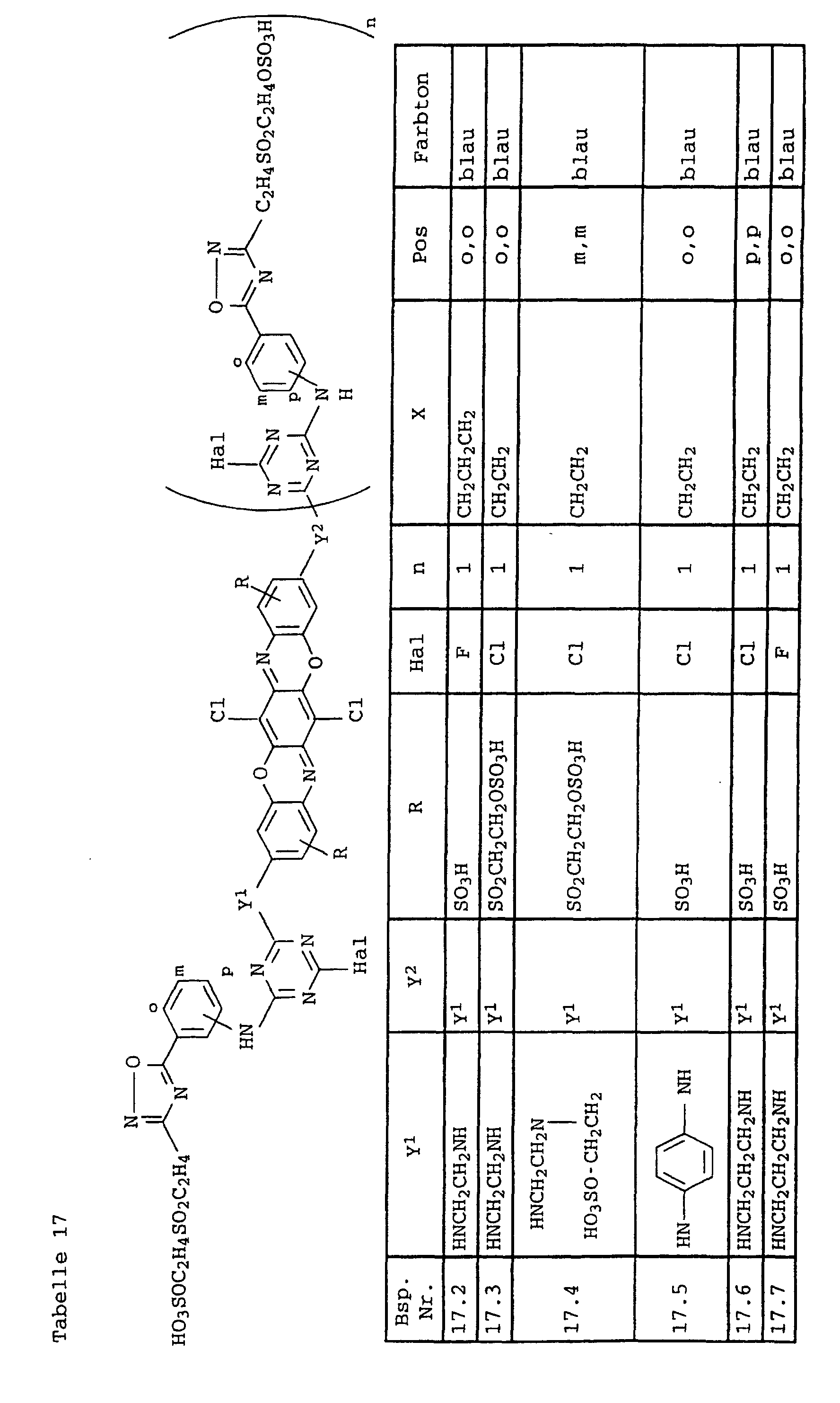

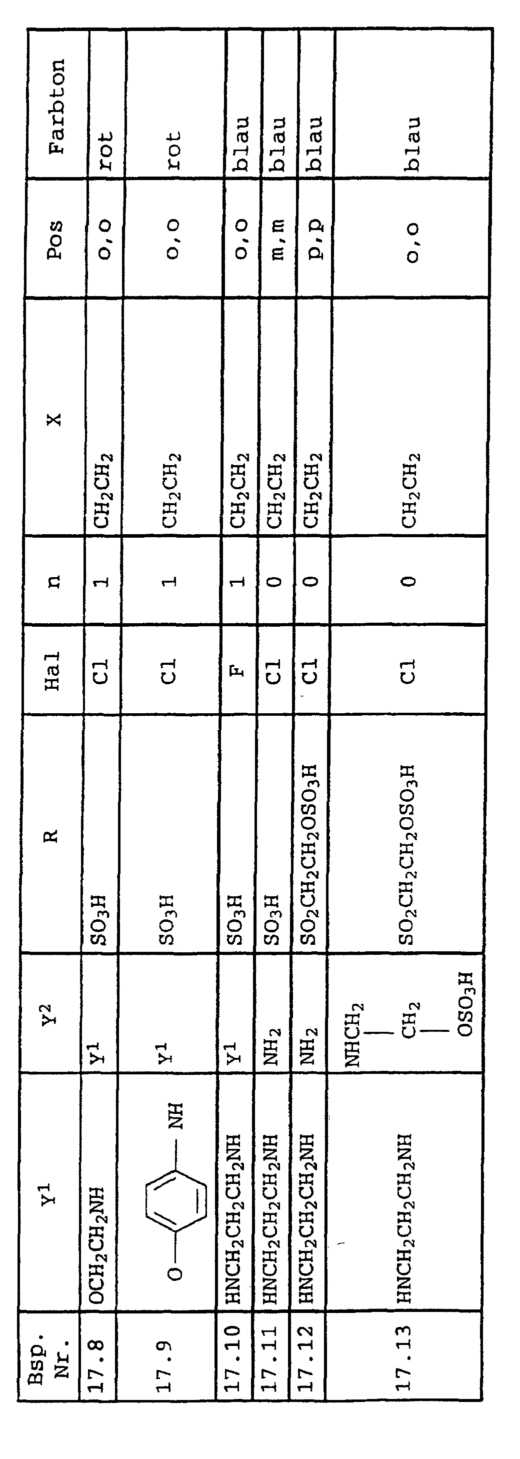

### Beispiel 18

In 400 ml Wasser wurden 42 g Bromaminsäure, 58 g der Verbindung der Formel 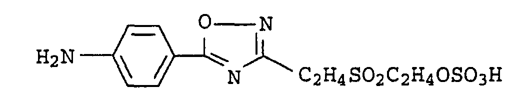 3 g Kupfer(I)chlorid und 21 g Natriumhydrogencarbonat langsam auf 50° erwärmt und weitere 5 h bei 50°C gerührt. Man kühlte dann auf 5°C ab, saugte ab und wusch mit 10 gew.-%iger wäßriger Natriumchloridlösung. Nach Trocknen unter vermindertem Druck isolierte man 60 g des Farbstoffs der Formel 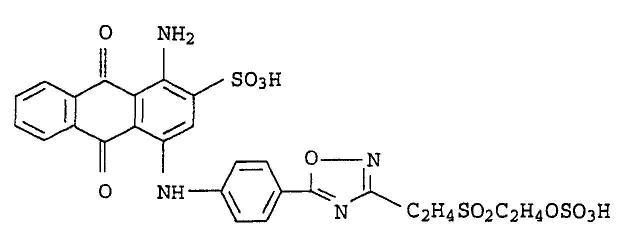 der Baumwolle in brillanten blauem Ton färbt.

### Beispiel 19

25 g Kupferphthalocyanintetrasulfonsäurechlorid wurden in 250 ml Eiswasser suspendiert. Dazu gab man 39 g der Verbindung der Formel 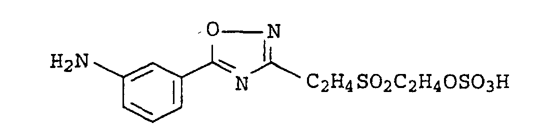 und 0,8 g Nicotinsäureamid zu und stellte den pH-Wert mit 10 gew.-%iger wäßriger Natriumhydrogencarbonatlösung auf 6,0 bis 6,5. Das Reaktionsgemisch rührte 8 h bei Raumtemperatur, wobei der pH-Wert durch weitere Zugabe von wäßriger Natriumhydrogencarbonatlösung bei 6,0 bis 6,5 gehalten wurde. Nach Klärfiltration wurde der Farbstoff durch Zugabe von Aceton ausgefällt, abgesaugt und getrocknet. Man isolierte 55 g des Farbstoffs der Formel 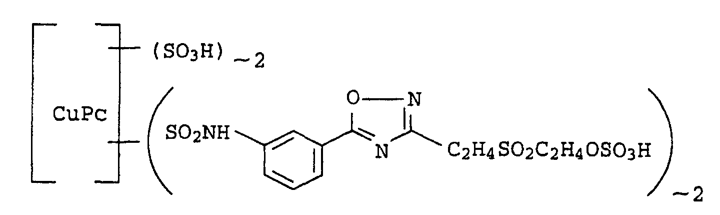 der Baumwolle in brillanten Türkistönen färbt.

## Patentansprüche

1. Reaktivfarbstoffe der Formel I 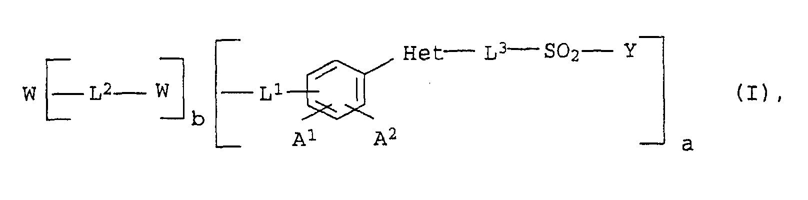 in der
a 1 oder 2,
b 0 oder 1,
Y Vinyl oder einen Rest der Formel C₂H₄Q, worin Q für eine unter alkalischen Reaktionsbedingungen abspaltbare Gruppe steht,
Het den Rest eines 5- oder 6-gliedrigen aromatischen heterocyclischen Ringes, der 1 bis 3 Heteroatome, ausgewählt aus der Gruppe, bestehend aus Sauerstoff, Schwefel und Stickstoff, aufweist,
W
im Fall 1) den Rest einer Kupplungskomponente, eines Monoazofarbstoffs oder zusätzlich, wenn b = 0, eines Disazofarbstoffs, die weitere faserreaktive Gruppen tragen können, oder
im Fall 2) den Rest eines Chromophors, der gegebenenfalls weitere faserreaktive Gruppen aufweist und der sich von einem gegebenenfalls metallisierten Mono- oder Disazofarbstoff, einem Triphendioxazin, einem Anthrachinon, einem metallisierten Formazan oder einem metallisierten Phthalocyanin ableitet,
L¹
im Fall 1) eine Azobrücke oder
im Fall 2) ein Brückenglied der Formel O₂S-NZ¹, OC-NZ¹, Z¹N-SO₂, Z¹N-CO, Z¹N-CO-NZ², NZ¹ oder 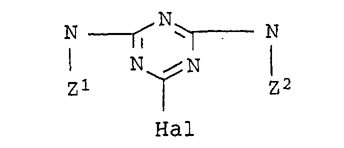
worin Z¹ und Z² unabhängig voneinander jeweils für Wasserstoff, C₁-C₆-Alkyl oder Phenyl und Hal für Fluor, Chlor oder Brom oder NZ¹ oder NZ² auch für Piperazin-1,4-diyl stehen,
L² einen Rest der Formel 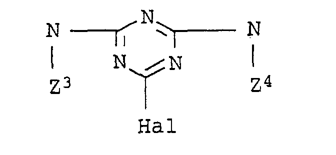 oder 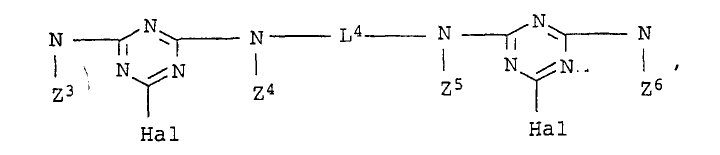 worin Z³, Z⁴, Z⁵ und Z⁶ unabhängig voneinander jeweils für Wasserstoff, C₁-C₆-Alkyl oder Phenyl und L⁴ für C₂-C₈-Alkylen oder gegebenenfalls durch C₁-C₄-Alkyl, C₁-C₄-Alkoxy oder Hydroxysulfonyl substituiertes Phenylen stehen und Hal jeweils die obengenannte Bedeutung besitzt,
L³ eine direkt Bindung oder C₁-C₆-Alkylen, das durch 1 oder 2 Sauerstoff- oder Schwefelatome in Etherfunktion oder 1 oder 2 nicht benachbarte Imino-, C₁-C₄-Alkylimino- oder C₁-C₄-Alkanoyliminogruppen unterbrochen sein kann, und
A¹ und A² unabhängig voneinander jeweils Wasserstoff, C₁-C₄-Alkyl, C₁-C₄-Alkoxy, Halogen, Nitro, Amino, Hydroxysulfonyl oder einen Rest der Formel L³-SO₂-Y, worin L³ und Y jeweils die obengenannte Bedeutung besitzen, bedeuten.

2. Reaktivfarbstoffe nach Anspruch 1, **dadurch gekennzeichnet, daß** L³ C₁-C₄-Alkylen, das durch ein Sauerstoffatom in Etherfunktion unterbrochen sein kann, bedeutet.

3. Reaktivfarbstoffe nach Anspruch 1, **dadurch gekennzeichnet, daß** A¹ und A² unabhängig voneinander Wasserstoff, Nitro, Amino, Hydroxysulfonyl oder ein Rest der Formel SO₂C₂H₄OSO₃H bedeuten.

4. Reaktivfarbstoffe nach Anspruch 1, **dadurch gekennzeichnet, daß** Het sich von 1,2,4-Oxadiazol, 1,3,4-Oxadiazol, 1,2,4-Thiadiazol oder 1,3,4-Thiadiazol ableitet.

5. Reaktivfarbstoffe nach Anspruch 1, **dadurch gekennzeichnet, daß** Het 1,2,4-Oxadiazol-3,5-diyl bedeutet.

6. Reaktivfarbstoffe nach Anspruch 1, **dadurch gekennzeichnet, daß** L¹ im Fall 2) ein Brückenglied der Formel 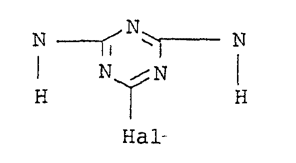 bedeutet.

7. Reaktivfarbstoffe nach Anspruch 1, **dadurch gekennzeichnet, daß** L¹ im Fall 1) in ortho-Position zum Heterocyclus steht.

8. Verwendung der Reaktivfarbstoffe gemäß Anspruch 1 zum Färben oder Bedrucken von Hydroxygruppen oder Stickstoffatome aufweisenden Substraten.

## Claims

1. Reactive dyes of the formula I 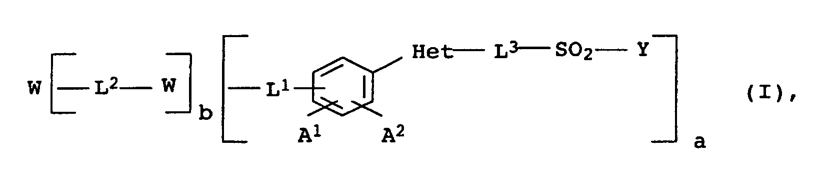 where
a is 1 or 2,
b is 0 or 1,
Y is vinyl or a radical of the formula C₂H₄Q, where Q is an alkali-detachable group,
Het is the radical of a 5- or 6-membered aromatic heterocyclic ring having from 1 to 3 hetero atoms selected from the group consisting of oxygen, sulphur and nitrogen,
W
is either, in case 1), the radical of a coupling component, of a monoazo dye or additionally, when b = 0, of a disazo dye, which may each bear further fibre-reactive groups, or
in case 2), the radical of a chromophore which optionally has further fibre-reactive groups and is derived from an optionally metallized mono- or disazo dye, a triphendioxazine, an anthraquinone, a metallized formazan or a metallized phthalocyanine,
L¹
is either, in case 1), an azo bridge or,
in case 2), a bridge member of the formula O₂S-NZ¹, OC-NZ¹, Z¹N-SO₂, Z¹N-CO, Z¹N-CO-NZ², NZ¹ or 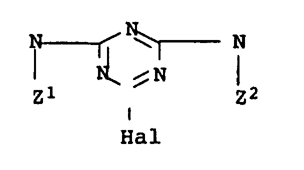 where Z¹ and Z² are independently of each other hydrogen, C₁-C₆-alkyl or phenyl and Hal is fluorine, chlorine or bromine, or NZ¹ or NZ² also represents 1,4-piperazinediyl,
L² is a radical of the formula 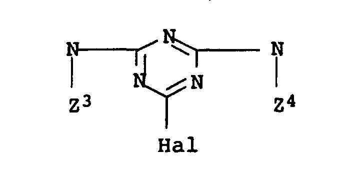 or 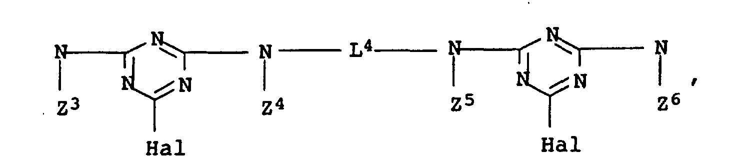 where Z³, Z⁴, Z⁵ and Z⁶ are each independently of the others hydrogen, C₁-C₆-alkyl or phenyl, L⁴ is C₂-C₈-alkylene or unsubstituted or C₁-C₄-alkyl-, C₁-C₄-alkoxy- or hydroxysulphonyl-substituted phenylene, and Hal is in each case as defined above,
L³ is a direct bond or C₁-C₆-alkylene with or without interruption by 1 or 2 oxygen or sulphur atoms in ether function or 1 or 2 nonadjacent imino, C₁-C₄-alkylimino or C₁-C₄-alkanoylimino groups, and
A¹ and A² are independently of each other hydrogen, C₁-C₄-alkyl, C₁-C₄-alkoxy, halogen, nitro, amino, hydroxysulphonyl or a radical of the formula L³-SO₂-Y, where L³ and Y are each as defined above.

2. Reactive dyes according to Claim 1, **characterized in that** L³ is C₁-C₄-alkylene with or without interruption by one oxygen atom in ether function.

3. Reactive dyes according to Claim 1, **characterized in that** A¹ and A² are independently of each other hydrogen, nitro, amino, hydroxysulphonyl or a radical of the formula SO₂C₂H₄OSO₃H.

4. Reactive dyes according to Claim 1, **characterized in that** Het is derived from 1,2,4-oxadiazole, 1,3,4-oxadiazole, 1,2,4-thiadiazole or 1,3,4-thiadiazole.

5. Reactive dyes according to Claim 1, **characterized in that** Het is 1,2,4-oxadiazole-3,5-diyl.

6. Reactive dyes according to Claim 1, **characterized in that** L¹ is a bridge member of the formula 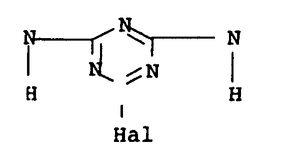 in case 2).

7. Reactive dyes according to Claim 1, **characterized in that** L¹ is ortho-disposed to the heterocycle in case 1).

8. The use of the reactive dyes of Claim 1 for dyeing or printing hydroxyl-containing or nitrogenous substrates.

## Revendications

1. Colorants réactifs de formule I 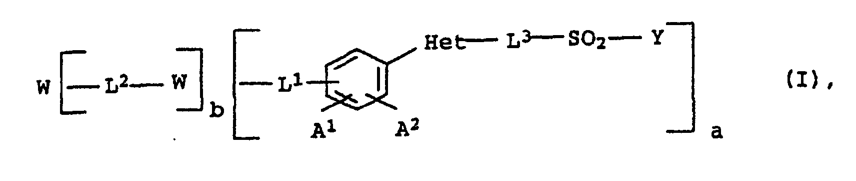 dans laquelle
a est 1 ou 2,
b est 0 ou 1,
Y représente le groupe vinyle ou un radical de formule C₂H₄Q, dans laquelle Q représente un groupe séparable dans des conditions de réaction alcalines,
Het représente le reste d'un cycle hétérocyclique aromatique à 5 ou 6 chaînons, qui comporte de 1 à 3 hétéroatomes choisis dans le groupe constitué par l'oxygène, le soufre et l'azote,
W représente
dans le cas 1) le reste d'un copulant, d'un colorant monoazoïque ou, en outre, lorsque b = 0, d'un colorant disazoïque, qui peut porter des groupes réactifs avec les fibres, ou
dans le cas 2) le reste d'un chromophore qui comporte éventuellement d'autres groupes réactifs avec les fibres et qui dérive d'un colorant mono- ou disazoïque éventuellement métallé, d'une triphènedioxazine, d'une anthraquinone, d'un formazan métallé ou d'une phtalocyanine métallée,
L¹ représente
dans le cas 1) un pont azo ou
dans le cas 2) un chaînon pontant de formule O₂S-NZ¹, OC-NZ¹, Z¹N-SO₂, Z¹N-CO, Z¹N-CO-NZ², NZ¹ ou 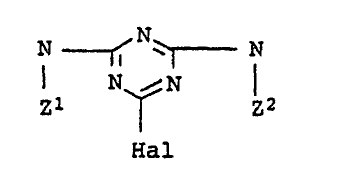 Z¹ et Z² représentant chacun, indépendamment l'un de l'autre, un atome d'hydrogène, un groupe alkyle en C₁-C₆ ou phényle, et Hal représente le fluor, le chlore ou le brome, ou NZ¹ ou NZ² représente également le groupe pipérazine-1,4-diyle,
L² représente un radical de formule 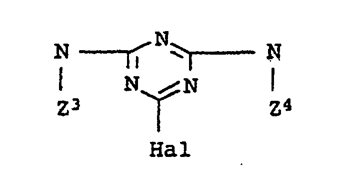 ou 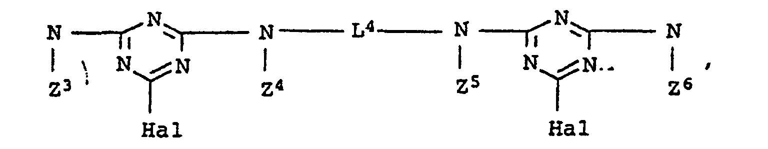 Z³, Z⁴, Z⁵ et Z⁶ représentant chacun, indépendamment les uns des autres, un atome d'hydrogène, un groupe alkyle en C₁-C₆ ou phényle, et L⁴ représentant un groupe alkylène en C₂-C₈ ou un groupe phénylène éventuellement substitué par un groupe alkyle en C₁-C₄, alcoxy en C₁-C₄ ou hydroxysulfonyle, et Hal a à chaque fois la signification donnée plus haut,
L³ représente une liaison directe ou un groupe alkylène en C₁-C₆ qui peut être interrompu par 1 ou 2 atomes d'oxygène ou de soufre en fonction éther ou par 1 ou 2 groupes imino, alkyl(C₁-C₄)imino ou alcanoyl(C₁-C₄)imino non contigus, et
A¹ et A² représentent chacun, indépendamment l'un de l'autre, un atome d'hydrogène ou d'halogène ou un groupe alkyle en C₁-C₄, alcoxy en C₁-C₄, nitro, amino, hydroxysulfonyle ou un radical de formule L³-SO₂-Y, dans laquelle L³ et Y ont chacun la signification donnée plus haut.

2. Colorants réactifs selon la revendication 1, **caractérisés en ce que** L³ représente un groupe alkylène en C₁-C₄ qui peut être interrompu par un atome d'oxygène en fonction éther.

3. Colorants réactifs selon la revendication 1, **caractérisés en ce que** A¹ et A² représentent, indépendamment l'un de l'autre, un atome d'hydrogène, le groupe nitro, amino, hydroxysulfonyle ou un radical de formule SO₂C₂H₄OSO₃H.

4. Colorants réactifs selon la revendication 1, **caractérisés en ce que** Het dérive du 1,2,4-oxadiazole, du 1,3,4-oxadiazole, du 1,2,4-thiadiazole ou du 1,3,4-thiadiazole.

5. Colorants réactifs selon la revendication 1, **caractérisés en ce que** Het représente le groupe 1,2,4-oxadiazole-3,5-diyle.

6. Colorants réactifs selon la revendication 1, **caractérisés en ce que** L¹ représente dans le cas 2) un chaînon pontant de formule

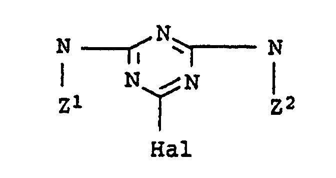

7. Colorants réactifs selon la revendication 1, **caractérisés en ce que** L¹ dans le cas 1) est en position ortho par rapport à l'hétérocycle.

8. Utilisation des colorants réactifs selon la revendication 1, pour la teinture ou l'impression de supports comportant des groupes hydroxy ou des atomes d'azote.
